# EUROPEAN PATENT SPECIFICATION

(11) **EP 3 329 710 B1**
(45) Date of publication and mention of the grant of the patent: **18.12.2019**
(21) Application number: 16745727.4
(22) Date of filing: 29.07.2016
(51) Int. Cl.: H04W 16/26, H04W 24/02, H04W 64/00, H04W 84/04, H04W 88/04

(54) **CONTROL OF ACTIVATION OF COMMUNICATION DEVICES IN A WIRELESS COMMUNICATION NETWORK**
STEUERUNG DER AKTIVIERUNG VON KOMMUNIKATIONSVORRICHTUNGEN IN EINEM DRAHTLOSKOMMUNIKATIONSNETZ
COMMANDE DE L'ACTIVATION DE DISPOSITIFS DE COMMUNICATION DANS UN RÉSEAU DE COMMUNICATION SANS FIL

(30) Priority: 30.07.2015 EP 15382399; 04.12.2015 EP 15382608
(43) Date of publication of application: 06.06.2018
(73) Proprietor: Vodafone IP Licensing Limited, The Connection Newbury Berkshire RG14 2FN (GB)
(72) Inventor: OLIVER, Antonio, London Greater London W2 6BY (GB); ARULKKUMARAN, Arulalingam, London Greater London W2 6BY (GB); MURRAY, Eric, London Greater London W2 6BY (GB)
(74) Representative: Boult Wade Tennant LLP
(86) International application number: PCT/EP2016/068219
(87) International publication number: WO 2017/017265

(56) References cited:
- WO-A1-2012/039656
- WO-A1-2014/098702
- WO-A2-2011/153507
- GB-A- 2 510 897
- US-A1- 2010 167 743
- US-A1- 2014 169 262

## Description

### Field of the Disclosure

This disclosure relates to control of aggregator devices in a wireless communication network. In particular the disclosure relates to controlling activation of communication devices configurable to provide other communication devices with a backhaul link to the core network and reconfiguring the set of currently activated communication devices.

### Background to the Invention

Cellular telecommunications networks characteristically provide "cells" of radio communication coverage between communication devices (which are typically mobile) and a core network (with a "downlink" from core network to communication device and an "uplink" in the opposite direction).

Various radio access technologies (RATs) are implemented: currently *digital* cellular networks are the most common and these are loosely classed as second generation (2G), third generation (3G), fourth generation (4G), etc. technologies according to whether the RAT achieves effective data communications that meet increasingly challenging requirements. In meeting these requirements, the technologies make different uses of the available radio frequency (RF) bandwidth: neighbouring cells in 2G technologies, for example, are deployed so that they use RF bandwidth at different frequencies to avoid interference.

To ensure effective coverage of a large geographic area, a plurality of cells are provided by respective network nodes referred to variously as base transceiver stations and base stations. Base (transceiver) stations are associated with one or more antenna arrays which in turn establish respective cells. They are controlled at least in part by other entities in the core network known as controllers (in 3G technologies such as UMTS these are referred to as radio network controllers, RNCs). More recently certain categories of base transceiver stations, referred to as eNodeBs or eNBs in the context of LTE, implement both base station functionality and at least some controller functionality. The antenna arrays (and thus, often, the base stations) are geographically distributed so that the coverage of each cell typically overlaps with that of neighbouring cells only at the cell edge. The RATs aim to ensure that communication devices are provided with continuous coverage even if they are moving from the coverage of a first cell to that of a second across the cell edge region: to do this they use a reselection technique referred to as "handover" (or "handoff"). Handoff is described as "soft" when the procedure allows for a transition period during which control and/or user data traffic intended for a given communication device is routed to the device through more than one of the cells, in other words the device is permitted to "camp" on more than one cell.

Providing communication devices with coverage at cell edge typically requires more network resources; for instance transmission power needs to be higher in the downlink in order for the RF signal to propagate to the cell edge.

Release '99 of the W-CDMA Standard enabled the reuse of the same frequency at cell edge with soft handover (i.e. handover having a transition phase where a terminal effectively camps on both source and target cells).

In later releases of 3G RATs, however, HSDPA, for instance, has mainly removed in downlink the concept of soft handover: data is transmitted from only one cell to the terminal.

In many parts of the world, 4G RATs (such those compliant with the 3GPP standards known as Long Term Evolution (LTE)) are deployed. Like these later 3G releases, LTE uses universal frequency reuse (where cells sufficiently far apart operate on the same frequency) without soft handoff. Consequently, high levels of interference and low SINR (signal to interference plus noise ratio) can be expected near the cell edge. This means users at the cell edge in LTE (and HSDPA, etc.) require more radio resources (i.e. user plane resource blocks, control channel resource blocks, etc.) than users closer to the serving base transceiver stations (i.e. eNBs). Accordingly, the potential for the cell be impacted increases when there is an increase in the number and activity of users at/near to the cell edge.

LTE is also specified to handle different types of base transceiver station entities. The requirement for cellular communications coverage is far from uniform across a typical geographic area. Furthermore natural features or features of the built environment introduce additional constraints upon the operation of base station entities.

The most prevalent class of base transceiver station is the wide area eNodeB which provides coverage over a wide geographical spread (spanning distances of up to 20km) - this is sometimes termed the "macro (layer) eNB" type. Such eNBs often provide more than one "cell" or sector.

Base transceiver stations of more limited transmit power than the macro eNBs, and typically providing one cell or sector, are referred to as micro eNBs.

Smaller cells may be provided by devices of even lower power: local area eNBs (or picocell base stations) and home eNBs (or femtocell base stations). The resulting femtocells and picocells are sometimes referred to generally as "small cells". These classes of base transceiver stations are typically used in areas where coverage would otherwise be inadequate or awkward to maintain using conventional eNB equipment. The main distinction between local area and home eNBs is that in the case of the home eNBs the location and control of the device lies with the end-user rather than the network operator; these devices conventionally offer communication services to a "white-list" of home-users rather than any network subscribers that happen to be within coverage.

LTE has a hierarchical architecture so that a wide area layer of coverage (the macro layer) may overlap or encompass geographic regions within the coverage of smaller cells (the "micro layer"). Nevertheless there may be a preference on behalf of the network operator to have uplink and/or downlink traffic for certain devices handed down to the micro layer; to free up capacity in the macro layer for devices that are out of micro layer coverage, for example.

Network operators wish to improve the efficiency of the use of their networks at or near cell edges.

It is known to address the cell edge problem by:
- Increasing the performance at cell edge, for instance by adding more and more complex software in the macrocells to improve the cell edge performance (usually within the area of the coordinated scheduling between adjacent cells). In certain cases, such as for the CoMP (Coordinated Multi Point) feature described in 3GPP Release 11, the improved cell edge performance brings with it the need for dedicated transmit (Tx) and receive (Rx) antennas associated with one or more macro eNBs.
- Installing fixed Small Cells (i.e. local area eNodeBs) to increase system capacity.

The installation of fixed small cells by a network operator brings with it the burden of finding suitable locations, paying for the site rental, and deploying additional cables to connect the fixed Small Cells to other nodes of the network. Furthermore, installation and commissioning (including configuring) of fixed small cells takes time: even if wireless backhaul is used instead of cables, the fixed small cells need to be installed in a suitable position and configured for operation at that location. In some cases, this process may include the configuration and testing of directional antennas associated with such small cell devices which require the skills of a professional radio engineer. In addition, where the small cell device fails or otherwise requires servicing the device and the installation site needs to be accessible by the operator: since these devices are typically the property of the network operator but located on private land and in sometimes inaccessible locations, there are likely to be logistical and practical obstacles to intervention by one of the operator's engineers.

The LTE standards (Release 10 (and later) of the 3GPP) also describe two further Radio Access Network entities: relays and repeaters which can be used to address the problem of cell edges. Both types of entity provide extension of coverage for one cell of an existing base transceiver station.

A repeater is communicatively tied to a corresponding (typically macro) eNB, having a first antenna within a given cell (the "donor cell") of the eNB and a second antenna directed towards a coverage area where coverage extension is required. In certain instances, a repeater merely retransmits (i.e. re-broadcasts) a signal, received at a first frequency, at a second frequency, typically amplifying the repeated signal. Uplink and downlink signals may thus be conveyed through repeaters without any need for decoding.

Repeaters specified in Release 10 (and later) of the 3GPP standards decode the (incoming) signal and then recode and retransmit that signal: this new class of repeater is referred to as a "relay".

A relay is also communicatively tied to a corresponding eNB. It too has a first antenna within a given cell (the "donor cell") of the eNB and a second antenna directed towards a target coverage area. Relays however form their own cells and operate in many ways as base transceiver stations in their own right. Relays decode the signals from the donor cell, applying any necessary error correction, and make decisions about how radio resources (such as the channels within each radio subframe) are assigned.

There are certain network conditions where individual communication devices in cellular networks have a disproportionately detrimental effect on the network performance.

In certain cases, for example, one or more terminals (also termed "user equipment" or simply UE) may be close to the edge of a serving cell. A small number of active users at cell edge can consume a high number of cell resources (e.g. LTE resource blocks) since cell edge typically correlates to poor coverage; implying that a higher number of resources must be dedicated to the cell edge users to provide a throughput at a given level when compared to the demand for resources by users that are in better radio conditions (i.e. away from the cell edges). Serving radio resources to communication devices at cell-edge has a higher cost in terms of resource allocation and power usage than a similar device in a region of the cell closer to a serving base transceiver station system (such as an eNodeB).

When cellular networks are deployed, they are often specified with greater capacity than is forecast to be required by the existing communication devices. However, the numbers of communication devices and the demand for ever more network resources means that the network may be affected by capacity problems in the radio interface more often than is acceptable.

Known approaches to cell edge problems seek to increase the capacity or coverage of the cellular network by addition of further network equipment at locations in the network where cell edge problems regularly occur (or are forecast). Such equipment is typically fixed in location and requires careful planning.

Network and other performance conditions very often change over time: for instance, individual communication devices that, by virtue of their location at the cell edge and active use of the network, have a detrimental effect on the network performance at one time, may, at other times, be idle and cause no such effect. Furthermore, as UEs are typically mobile, they may have moved outside the affected cell entirely or closer to the base transceiver station equipment that serves the cell - either way, reducing the detrimental effect.

In conventional networks, there has been a trend of applying a SON (Self Organising Network) concept to allow delegation of certain adjustments for macro network cells in an automatic and dynamic way leading to swifter cell planning and deployment. A newly installed eNB can then be configured for its location within the network (selecting operational parameters that do not collide or cause confusion relative to the eNBs that were previously deployed, in particular parameters such as Physical Cell Identity, PCI, transmission frequency and power). Once installed, SON ensures that the new eNB performs load balancing with its neighbours.

Where network entities are unplanned and/or potentially nomadic (i.e. location changeable), the SON concept breaks down. Deployment can be un-coordinated and the conditions keep changing at any given moment, so the SON approach becomes computationally demanding.

It is therefore desirable to ensure that the network can adapt to the presence of dynamic effects upon capacity and coverage and in addition to provide a system that allows the extension of coverage in a cellular network that can be deployed dynamically without requiring the planned siting of additional radio equipment near regions of poor radio coverage.

WO 2012/039656 describes a radio access network comprising a radio access network node and plural wireless devices. At least a first wireless terminal is rendered capable of using mixed carrier aggregation.

### Summary of the Invention

The scope of the present invention is defined in the claims. A number of additional examples are described below.

According to a first example there is provided an aggregator controller apparatus for controlling aggregator devices in a wireless communication network comprising a core network and a radio access cellular network, an aggregator device corresponding to a communication device of the radio access cellular network arranged to provide, upon activation by the aggregator controller, at least one other communication device with a backhaul link to the core network, the aggregator controller apparatus comprising:
a hardware processor having:
aggregator configuration circuitry arranged to select from a plurality of candidate aggregator devices, a current aggregator set comprising at least one aggregator device and configuring the at least one aggregator device for activation based upon radio communication conditions; and
reconfiguration evaluation circuitry arranged to trigger reconfiguration of the current aggregator set to select a different aggregator set for activation depending upon a reconfiguration metric comprising a weighted sum in which at least one estimated cost of reconfiguration from the current aggregator set to the different aggregator set is balanced against at least one estimated benefit of the reconfiguration.

The use of aggregator devices to backhaul a small cell using a macro-eNB network can provide an overall system benefit, as coverage can be extended by the aggregators to areas not covered by the macro network, or UEs with marginal macro network coverage can be more efficiently served by an active aggregator relay which itself has good coverage.

Although the mass un-coordinated deployment of aggregators, such as mobile aggregators embedded within UEs or nomadic aggregators installed in transport vehicles can be implemented, in practical terms co-ordination is desirable between the aggregator candidates so that only a most beneficial set of aggregators is activated at a given time or in a given time period. This coordination activity is performed by a central entity referred to as an aggregator controller. Enabling too many aggregators can reduce performance because active aggregators may interfere with each other and make it difficult for UEs to select a connection to the aggregator in the vicinity that will provide the best quality of service. Although the aggregator controller can identify one or more favourable configurations for selective activation of aggregators in a full set comprising a plurality of candidate aggregator devices, even if the current active aggregator set is favourable when it is selected, the macrolayer and aggregator layer conditions evolve with time, sometimes quite rapidly. Accordingly, there is a requirement for an efficient and effective way of reconfiguring a plurality of candidate aggregator devices in a wireless communication network to adapt to dynamically changing conditions.

This is addressed via provision of the aggregator configuration circuitry to configure a current set of active aggregators and reconfiguration evaluation circuitry for triggering reconfiguration of the currently activated aggregator set depending upon a reconfiguration metric comprising a weighted sum that balances costs of the reconfiguration against benefits.

It will be appreciated that in some examples the weights for all of the terms of the sum could be set to unity or could be equal. Examples are not limited to having weights that differ for different terms of the sum.

In some examples, the reconfiguration evaluation circuitry is arranged to trigger a change to the different aggregator set when the weighted sum indicates that a net benefit exceeds a threshold value.

In some examples , the at least one estimated cost and/or the at least one estimated benefit comprise at least one of macrolayer performance indicators and aggregator layer performance indicators.

In some examples, the reconfiguration metric is calculated using stored historical data of the wireless communication network.

In some examples, the reconfiguration metric balances the estimated cost and the estimated benefit of changes in at least one of interference and noise in the radio access cellular network as a result of a transition from the current aggregator set to the different aggregator set.

In some examples, the reconfiguration metric comprises an estimate of a change to a geographical coverage area of the radio access cellular network as a result of a change from the current aggregator set to the different aggregator set wherein increased coverage represents an estimated benefit parameter.

In some examples, the reconfiguration metric comprises a prediction of the likelihood of dropped calls as the at least one estimated cost parameter as a result of reconfiguring from the current aggregator set to the different aggregator set.

In some examples different services such as different call types are weighted differently depending on the service requirement and depending on a potential impact on user experience associated with errors such as handover failure of those services.

In some examples implementing the dropped call prediction, a dropped voice call is allocated higher weighting representing a higher cost in the reconfiguration metric than a dropped data call.

In some examples, the at least one estimated cost comprises an estimated number of idle UEs camped on to a given aggregator device of the current aggregator set that would have to reselect a different aggregator device or base station upon reconfiguration or an estimated number of active UEs connected to a given aggregator device of the current aggregator set for which handover to a base station or different aggregator from the different aggregator set would be required as a result of the reconfiguration

In some examples, the at least one estimated cost comprises an estimate of a number of active UEs currently connected to an aggregator of the current aggregator set and likely to drop a respective active connection as a result of a reconfiguration to the different aggregator set.

In some examples, the at least one estimated cost comprises a network cost of activating an aggregator of the different aggregator set which is not a member of the current aggregator set, or de-activating an aggregator in the current aggregator set which is not a member of the different aggregator set.

In some examples, the at least one estimated cost comprises a network cost of reconfiguring connection types and/or connection configurations connecting UEs to aggregators in the different aggregator set relative to the connections and connection types in the current aggregator set.

In some examples, the reconfiguration metric comprises an estimate of a change in data throughput per unit time of an activated one of the plurality of candidate aggregator devices or a change in the overall data throughput in a given coverage area as a consequence of changing from the current aggregator set to the different aggregator set.

In some examples, at least one of the plurality of candidate aggregator devices comprises a nomadic or mobile aggregator device and wherein the reconfiguration metric comprises an indication of a predicted temporal stability of the reconfiguration to the different aggregator set.

In some examples, predicted temporal stability takes account of at least one of a battery level of the nomadic aggregator and a mobility status of the nomadic aggregator.

In some examples, evaluation of the reconfiguration metric comprises an estimate of a change of backhaul link throughput or backhaul link load level in the different aggregator set relative to the current aggregator set.

In some examples, the reconfiguration metric ranks the plurality of candidate aggregator devices into two or more aggregator types having different weightings representing different priorities for utilisation as activated aggregator devices in the reconfiguration.

In some examples, a nomadic aggregator device is allocated a lower priority for utilisation in the reconfiguration than a static aggregator device.

According to a second example, a computer readable medium is provided comprising instructions comprising:
code for selecting from a plurality of candidate aggregator devices, a current aggregator set comprising at least one aggregator device and configuring the at least one aggregator device for activation based upon radio communication conditions; and code for triggering reconfiguration of the current aggregator set to select a different aggregator set for activation depending upon a reconfiguration metric comprising a weighted sum in which at least one estimated cost of reconfiguration from the current aggregator set to the different aggregator set is balanced against at least one estimated benefit of the reconfiguration.

The computer readable medium is a storage medium in some examples and a transmission medium in other examples. The storage medium can be transitory or non-transitory.

According to a third example a method for controlling aggregator devices in a wireless communication network is provided comprising a core network and a radio access cellular network, an aggregator device corresponding to a communication device of the radio access cellular network arranged to provide, upon activation by the aggregator controller, at least one other communication device with a backhaul link to the core network, the method comprising:
selecting from a plurality of candidate aggregator devices, a current aggregator set comprising at least one aggregator device and configuring the at least one aggregator device for activation based upon radio communication conditions; and
triggering reconfiguration of the current aggregator set to select a different aggregator set for activation depending upon a reconfiguration metric comprising a weighted sum in which at least one estimated cost of reconfiguration from the current aggregator set to the different aggregator set is balanced against at least one estimated benefit of the reconfiguration.

In some examples, the method is performed such that the reconfiguration metric is calculated using stored data regarding previous radio access cellular network performance.

In addition, the above examples may be implemented within a controller entity for controlling an aggregator facility in a cellular telecommunication network, wherein the network has a core network, CN, and a radio access network, RAN, and serves at least one first communication device, the controller entity comprising a network interface unit configured to provide an interface to the CN and controller unit configured: to obtain performance condition information for a region of the telecommunication network, to determine whether a second communication device provides aggregator functionality to said at least one first communication device, and to instruct the second communication device to establish an aggregation connection to the first communication device in dependence upon the determination.

In certain examples, the performance conditions include conditions associated with a communication link between the or each first communication device and an eNB in the RAN, and the controller unit is configured to determine whether a second communication device provides aggregator functionality by determining whether the performance conditions match trigger conditions.

In certain examples, the controller unit is configured to instruct the second communication device to establish an aggregation connection by assigning a second communication device to operate in the aggregator mode, upon receipt of an indication that performance conditions match the trigger conditions, and commanding the first communication device to switch at least a portion of its data link from the eNB to the second communication device in aggregator mode, wherein aggregator mode is a mode in which the second communication device is configured to aggregate data traffic from one or more of said first communication devices.

In certain examples, the performance conditions include conditions related to the location of one or more second communication device and the controller unit is further configured to obtain performance condition information repeatedly at time intervals and to determine whether a second communication device provides aggregator functionality on successive occasions in dependence upon the performance condition information thus obtained, thereby updating the determination. In certain examples, the conditions related to the location of one or more second communication device indicate whether each second communication device is static for a duration sufficient to allow effective aggregator functionality.

In certain examples, the controller unit is configured to activate the network interface unit in dependence upon the performance condition information, thereby activating an aggregator layer in the telecommunication network. In certain examples, the processing means is configured to deactivate the network interface unit in dependence upon the performance condition information, thereby deactivating an aggregator layer in the telecommunication network.

In certain examples, the performance condition information includes location information for the at least one first communication device and the controller unit is further configured to determine whether a second communication device provides aggregator functionality in dependence upon the location information for the at least one first communication device.

In certain examples, the controller entity corresponds to the aggregator controller in the system described above and may implement any of the functionalities of the aggregator controller in the system described above.

In addition, the above examples may be implemented in conjunction with a method in a controller entity for determining functionality of communication devices in a cellular communication network including a plurality of communication devices, the method comprising: obtaining at least one measure of the performance of the cellular communication network in a component area of radio coverage; determining from the or each measure of performance whether performance conditions in the component area of radio coverage support the activation of an aggregator facility, said aggregator facility providing radio coverage to at least one first communication device within a selected geographical area; determining from the or each measure of performance whether a net benefit is expected for the performance of the network in the component area as a result of the activation of the aggregator facility; and controlling activation of an aggregator functionality at at least one second communication device when performance conditions in the component area of radio coverage support the activation of the aggregator facility and when a net benefit is expected.

As a result, it can be determined whether an aggregator facility (i.e. an aggregator layer), in which the radio coverage offered by the macrocell is extended by the addition of radio coverage from one or more aggregators, can and should (according to some criteria) be initiated. Each second communication device that becomes an aggregator has a functionality whereby that device may provide radio coverage in addition to that of the macrocell. This aggregator functionality may be activated as a routine within a client application executing on the communication device or as a dedicated functionality, for example.

In certain cases, determining whether a net benefit is expected as a result of the activation of the aggregator facility may include determining whether the number of static first communication devices located in a portion of the component area within range of the at least one second communication device exceeds a threshold number.

In certain cases, determining whether performance conditions support the activation of an aggregator facility includes determining whether network conditions necessary for the activation of an aggregator facility hold for a given component area of radio coverage; and determining whether network conditions sufficient to support the activation of an aggregator facility hold for the component area.

In certain cases, determining whether the network conditions necessary for the activation of an aggregator facility hold includes at least one of: determining whether cell load exceeds a load threshold while throughput lies below a minimum throughput threshold; determining whether the number of users in a region of the cell exceeds a user number threshold while throughput for a given application falls below a minimum throughput threshold; determining whether a happiness metric lies below a happiness threshold; and/or determining whether the usage of control resources exceeds a control resource threshold.

In certain cases, the network conditions sufficient for the activation of an aggregator facility depend upon the level of at least one of the following parameters: the number of communication devices in the component area of radio coverage; the number of communication devices in the component area of radio coverage having activated aggregator functionality; signal to interference plus noise ratio, SINR; path loss/received signal received power, RSRP; the available radio access technologies, operational frequency bands and/or carriers; location information of the communication devices; mobility information of the communication devices; and predicted device power profile for the at least one communication devices.

In certain cases, the at least one second communication device is one of: a user equipment (UE); a machine type communication (MTC) device; a repeater; a relay unit; an access point; wireless station; small cell station; or a dedicated aggregator facility communication device.

In certain cases, determining whether a net benefit as a result of the activation of the aggregator facility is performed on a macrocell basis for at least one macrocell within the cellular telecommunications network.

In addition, the above examples may be implemented in conjunction with a method in a controller entity for determining functionality of communication devices in a cellular communication network including a plurality of communication devices, the plurality of communication devices including one or more candidate aggregator devices, the method comprising: obtaining information relative to candidate aggregator devices in a given area of radio coverage; for each of a plurality of subsets of the candidate aggregator devices, estimating a corresponding expected gain based on the obtained information, wherein the expected gain is a difference between an estimated value of a first measure of performance of the network after activation of an aggregator functionality in said subset of candidate aggregator devices and a first measured value of the first measure of performance of the network before activation of an aggregator functionality in any of the plurality of subsets, and wherein the aggregator functionality provides radio coverage to at least one first communication device within a selected geographical area; and activating an aggregator functionality in at least one subset selected from the plurality of subsets based at least in part on their corresponding expected gains.

Examples of the techniques used to obtain the estimated value of the first measure of performance of the network include: estimation by temporary activation of the aggregator functionality (whether complete or partial activation of the aggregator functionality is performed); and estimation which requires no activation of the aggregator functionality (for example using a modelling or inference technique to interpolate or extrapolate from known historical or other related indirect measurements).

In certain cases, the method may further comprise: maintaining the aggregator functionality activated in the at least one selected subset if a second measured value of the first measure of performance of the network after activation of the aggregator functionality in the at least one selected subset is higher than said first measured value.

It is noted that one or more of the subsets of the candidate aggregator devices could have a single candidate aggregator device as a member. Often, however, there are likely to be a plurality of such candidate aggregator devices in each subset considered.

In certain cases the method may further comprise: choosing a selection algorithm for use in selecting the at least one subset based on a type of the obtained information.

As a result, the aggregator selection algorithm used may be chosen to suit the available type of information relative to candidate aggregator devices in the given area of radio coverage obtained.

In certain cases, the expected gain for each subset is estimated by: obtaining the first measured value by measuring said first measure of performance of the network before activation of an aggregator functionality in any of the plurality of subsets; and for each candidate aggregator device in the subset, calculating the estimated value of the first measure of performance of the network for a case where the device provides an active aggregator functionality, and calculating a difference between the estimated value and the first measured value of the first measure.

Alternatively, the expected gain for each subset is estimated by, obtaining the first measured value by measuring said first measure of performance of the network before activation of an aggregator functionality in any of the plurality of subsets; and for each subset, calculating the estimated value of the first measure of performance of the network for a case where each of the devices in the subset provides an active aggregator functionality, and calculating a difference between the estimated value and the first measured value of the first measure.

In certain cases, the subset in which the aggregator functionality is activated is selected by: evaluating the expected gain for each subset; and selecting a subset having a required expected gain. Here, the evaluation of the expected gain may comprise calculating which of the at least one subsets provides the greatest expected gain, and wherein the selection of the subset having the required expected gain comprises selecting the subset that provides the greatest expected gain.

Alternatively, the evaluation of the expected gain may comprise calculating which of the subsets requires fewest changes in aggregator devices from the aggregator devices currently providing the aggregator functionality, and wherein the selection of the subset having the required expected gain comprises selecting the subset that requires fewest changes in aggregator devices, the estimated expected gain exceeding a threshold gain value.

In a further case, the evaluation of the estimated expected gain may comprise modelling performance of the network with the selected subset activated and comparing that modelled performance information to the measured performance of the network before activation of an aggregator functionality.

In certain cases, if the second measured value of the first measure of performance of the network does not exceed the first measured value, the method may further include: controlling the or each candidate aggregator device having an active aggregator functionality to deactivate the aggregator functionality.

In certain cases, activating the aggregator functionality in the at least one selected subset may include, for the or each candidate aggregator device in the selected subset, controlling the respective device to activate the active aggregator functionality.

In certain cases, the method may further comprise obtaining a third measured value of a second measure of performance of the network before activation of an aggregator functionality in any of the plurality of subsets; and maintaining the aggregator functionality activated in the at least one selected subset if a fourth measured value of the second measure of performance of the network after activation of the aggregator functionality in the at least one selected subset is higher than the third measured value.

In such cases, the second measure of performance used in determining whether to maintain an already active aggregator functionality may thus differ from the first measure used to determine whether the aggregator functionality should be activated in the first instance.

In certain cases, the method may further comprise updating the selection of candidate aggregator devices, at spaced-apart intervals of time, by: obtaining a further measured value of the measure of performance of the network; for each subset of the candidate aggregator devices, estimating an updated corresponding expected gain; selecting at least one of the subsets based at least in part upon their corresponding updated expected gain; activating an aggregator functionality in each selected subset; and maintaining the active aggregator functionality if the further measured value of the measure of performance of the network exceeds a reference value of said measure. Here the method may further comprise, before estimating the updated expected gain, changing the configuration of the active aggregator functionality in response to the further performance information.

In certain cases, the reference value may be a value of said measure averaged over a plurality of historical measurements. Alternatively, the reference measured value may be a value of said measure selected from any one of N further measured values of said measure obtained in the N most recent update operations.

In certain cases, each candidate aggregator device may be a communication device that fulfils at least one criterion selected from: sufficient battery life; location within a portion of the given area of radio coverage for which the aggregator functionality is expected to be required; and current path loss metric for the communication link between the communication device and the cellular communication network falls below a path loss threshold.

Examples of communication device may include one of a user equipment (UE); a machine type communication (MTC) device; an access point; wireless station; and/or small cell station.

In respective cases, the given area of radio coverage may be selected from: a macrocell coverage area for at least one macrocell within the cellular telecommunications network; a coverage area for at least one sector within the macrolayer of the cellular telecommunications network; and the coverage area of the entire cellular telecommunications network.

The above examples may also be implemented in conjunction with a method for determining functionality of communication devices in a cellular communication network including a plurality of communication devices, the plurality of communication devices including one or more candidate aggregator devices, the method comprising, at spaced-apart intervals of time: estimating an expected gain for each of a plurality of subsets of the candidate aggregator devices, the estimate being based on information relative to candidate aggregator devices in a given area of radio coverage, wherein the expected gain is a difference between an estimated value of a measure of performance of the network after activation of an aggregator functionality in said subset of candidate aggregator devices and a current measured value of the measure of performance of the network, and wherein the aggregator functionality provides radio coverage to at least one first communication device within a selected geographical area; activating an aggregator functionality in at least one subset selected from the plurality of subsets based at least in part on their corresponding expected gains; and maintaining the activated aggregator functionality in the at least one selected subset if the current value of the measure of performance of the network exceeds a reference value of said measure.

The above examples may be implemented in conjunction with a communication device for providing an aggregator facility in a telecommunications network having a core network, CN, and a radio access network, RAN, the communication device comprising: a communication unit configured to establish an aggregation connection to at least one nearby communication device and to establish a second connection between the at least one nearby communication device and the CN, and a processor unit configured to report device status information to an aggregator controller, to receive instructions from the aggregator controller, said instructions being dependent upon performance conditions including the reported device status, and to enable the aggregation connection in accordance with the instructions.

In certain examples, the processor is configured to report device status information including information selected from: the location of the communication device, accuracy of the location, supported RAT technologies, supported RAT frequency bands, battery characteristics, mobility state, and/or current battery drain consumption.

In certain examples, the processor is configured to enable the aggregation connection by establishing an aggregation cell at a frequency band different from an operating frequency band of the RAN.

In certain examples, the processor is configured to enable the aggregation connection by establishing an aggregation cell using a wireless communication technology different from a wireless communication technology used by the RAN.

In certain examples, the processor unit is further configured to enable the second connection by enabling the communication unit, the second connection including the aggregation connection and a wireless connection between the communication device and the RAN.

Certain examples of the aggregation cell serve more than one nearby communication device. In these examples, the wireless connection aggregates a data traffic for each of the nearby communication devices into an aggregated payload, thereby making more effective use of the wireless connection.

In certain examples, the communication device for providing an aggregator facility corresponds to the second communication device in the system described above and may implement any of the functionalities of the equivalent second communication device in the system described above.

The above examples may also be implemented in conjunction with a method for reporting readiness of a communication device to act as aggregator in a telecommunications network having at least one controller entity, the method comprising: determining a change in location of the communication device based on two or more locations determined at temporally spaced apart intervals, the interval being a first interval; if there has been no change in location over the first interval, further comparing locations at a second interval; and if there has been no change in location over the second interval, determining that the communication device is in an aggregator-ready status and reporting the location of said aggregator-ready device. Conveniently changes in location may be determined in the communication device itself.

In certain cases, the location of the communication device is an absolute location. Conveniently, the location of the communication device may be determined using a global navigation satellite system, GNSS, such as GPS. The location of the communication device may be reported in GPS format.

In certain cases, the second interval may be set in accordance with the type of the communication device.

In certain cases, the method may further comprise determining that the communication device is not in an aggregator-ready status if there has been a change in location over the first interval; and reporting the location to the controller entity. The method may then further comprise determining location of the communication device after a third temporally spaced apart interval.

In certain cases, the method may further comprise, if there has been no change in location over the second interval, determining the location of the communication device at temporally spaced apart intervals, the interval being a fourth predetermined interval.

In certain cases, reporting the location of the aggregator-ready device may comprise reporting the location to the controller entity. Alternatively or additionally, reporting the location of the aggregator-ready device may further comprise reporting aggregator-ready status to the controller entity.

In certain cases, the method may further comprise obtaining additional information concerning the status of the communication device; and reporting the additional information to the controller entity. The additional information may conveniently include an indication of the remaining battery life of the communication device.

The above examples may also be implemented in conjunction with a method for handling change in mobility status of a communication device that provides an active aggregator cell in a telecommunications network, the telecommunications network having a core network, at least one controller entity and a macrolayer radio access network, the macrolayer radio access network being configured to provide a backhaul connection to the core network and to provide wireless communication connections to communication devices, the method comprising: at temporally spaced apart intervals, obtaining a plurality of locations of the communication device; comparing a location determined at an earlier time to a location at a later time; if there has been no change in location, instructing communication devices having active connection to reconnect to the macrolayer, and causing the cell to bar establishment of further active connections.

In certain cases, this method may further comprise reporting that the aggregator cell is deactivated as a result of the change of mobility status.

In addition, the above examples may be implemented in conjunction with a method for providing a coverage map within a telecommunication network, said telecommunication network comprising a plurality of communication devices including first communication devices and second communication devices and a controller entity, the method comprising: activating one or more second communication devices to broadcast beacon signals at one or more specific radio frequency, RF, bands, wherein the beacon signals enable one or more first communication devices to make measurements; receiving at the controller entity, measurements from the one or more first communication devices, said measurements being based on the beacon signals received at said one or more first communication devices; and creating, using the measurements, by the controller entity, a coverage map, wherein the coverage map is indicative of the coverage that the second communication devices can provide for the first communication devices.

The second communication devices are different from the first communication devices in regards of their capacity to act as aggregators, where an "aggregator" is a device comprising means for aggregating one or more connections from first communication devices towards a RAN and/or core network. In the context of the present disclosure, aggregating is to be understood as the capacity to provide a coverage area to provide service to a number of first communication devices currently connecting through an additional cellular communications layer. An aggregation connection transports aggregated data from first communication devices, the data from each first communication device being packetized for backhaul to a core network.

In general, and specifically in such cases, the controller entity may be configured to activate second communication devices to broadcast beacon signals. The second communication devices are instructed to send a beacon signal. Herein, the term beacon signal includes for example pilot signals, reference signals as well as other types of beacon signal.

The first communication devices may then receive a command to scan and listen to frequency bands upon which the beacon signals are broadcast and to report, to the controller entity, measurements of the broadcast signal received from the or each second communication devices (i.e. potential aggregator). The measurements may relate to the measured received power the broadcast signal at the respective first communication devices.

The first communication devices then provide reports of the measurements of the beacon signal back to the controller entity, which then uses these reports to build maps of coverage (e.g. pathloss maps) for the second communication devices. The transmission power of the beacon signal may advantageously be known at the controller entity.

In certain cases, the method may be used to decide which second communication devices are best to use for providing service to other communication devices.

In certain cases, specific information may be gathered on radio conditions in order to take decisions on which aggregators may be activated. Given the specific features and conditions of a network of second communication devices acting as small cell or access points that are dynamically activated the method provides a way for the first communication devices or terminals whose data is to be aggregated to measure the quality of the coverage they could get from an aggregator before the aggregator has come to service. The mentioned radio conditions may include availability, battery life, location, expected benefit, etc..

In certain cases, the second communication devices are communication devices that are configurable to act as aggregators, and the controller entity is an aggregator central controller. Advantageously this allows the controller entity to instruct the second communication devices to establish an aggregation connection to the first communication device and a second connection between the first communication device and a core network CN, wherein the second connection includes the aggregation connection and the instruction is dependent upon performance conditions.

In certain cases, the controller entity instructs said one or more second communication devices to activate.

In the context of this example, a map of coverage may be a record of the discovered relationships between potential aggregators and population of first communication devices or UEs. If the geographical locations of both the potential aggregator and the UEs are known, then the map can be a geographical map whereby the relationship between the potential aggregators and UEs is distance. However, when the geographical location of the UE is unknown with any precision, then the map can be a radio map, where the relationship between the potential aggregator and the UEs is pathloss, received signal strength or equivalent measure. Multiple relationships may be recorded by a map of coverage if known. For example, both distance and pathloss may be discovered and recorded. This information may be displayed graphically (as if it were a conventional map), and/or the relationships may be recorded only in a machine readable database. There may be information in the map of coverage including the time in which potential aggregators and potential aggregated devices are static or the time in which they have been in the cell, or even data such as remaining battery life.

In certain cases, the activation of one or more second communication devices is performed periodically. Advantageously beacon signals may be sent periodically by the second communication devices to one or more first communication devices allowing the update of radio conditions of the telecommunication network at the controller entity. This is quite advantageous in situations where the first communication devices, for example mobile phones, change position continuously.

Alternatively, instead of periodically, the activation may be made upon a command received from the controller entity. Advantageously the controller entity may be in communication with a core network from which estimations may be received so that a decision is made to activate said beacon signals in the second communication devices.

In certain cases, the one or more radio frequency bands are non-cellular bands close to the cellular bands to be used in the RAN.

Measurements are advantageously made on the non-cellular band but in a band which is representative of measurements that would have been made if a cellular band had been used. Here the term "representative" means that said non-cellular band exhibits similar propagation features to the propagation features of those cellular bands, such as fading, reflection or diffraction, in such a manner that the pathloss behaviour reported by the communication devices reliably reproduces the pathloss for cellular bands to be used in the RAN. Thus, instead of making a measure directly into a cellular band, which may be done only using cellular communications, e.g., for regulatory reasons, the non-cellular band is used to make a measurement as a proxy for said cellular band, and the non-cellular band used is one that is close to the cellular band in such a way that all radio measurements (such as power received, attenuation, interference, etc.) can be considered as equivalent to measurements that would have been done in the cellular band.

In this manner, the created map is a more reliable pattern for pathloss and at the same time the cellular bands are not burdened with the need to transport said transmissions, meaning that they are suitable for use for other purposes, such as communication.

In certain cases the one or more RF bands may be cellular bands to be used in the RAN. In certain examples there may be FDD or TDD channels which are not used within cellular the RF band which may be used for broadcasting the beacon signals.

In cases where the one or more RF bands are cellular bands, the one or more second communication devices may be activated to broadcast said beacon signals in a barred state.

In cases when cellular RF bands are used for the broadcast of beacon signals, a second communication device may be put in a barred state so that it does not appear as an available access point/cell to the first communication device receiving a broadcast signal. This advantageously allows a controller entity to receive measurements from said first communication device.

It is also contemplated that the second communication devices may broadcast beacon signals without the requirement of acting as aggregators: i.e. simply due to conditions such as remaining battery life or bandwidth requirements from the second communication device in a particular time frame, or others. Advantageously, in these cases, the beacon signal's carrier is a carrier not carrying traffic, so this is a way to ensure it only acts as a beacon carrier as it is prevented from managing data or voice traffic. In case a second communication device is selected (i.e. activated) to act as an aggregator, one cellular carrier used will be a first carrier, whilst a second carrier would be used as beacon only. Alternatively in the same area a single carrier may be used as both:
- beacon only, when the aggregator is not aggregating but just signalling its presence, or
- traffic and beacon when the aggregator is actually managing aggregated traffic.

The beacon signal may thus be sent via a cellular technology, such as LTE FDD, TDD, or 3G, or a non-cellular wireless technology, using a Wi-Fi carrier in the 2GHz spectrum, for example.

In certain cases, the method may further comprise activating one or more of the second communication devices as an aggregator based on at least the coverage map.

Further to creating a map of coverage, the controller entity may activate one or more second communication devices depending on the requirements for a permissible pathloss, for example. In an example a map of coverage may fulfil the requirements for a group of devices so that the potential aggregators offering a required service may be activated. In another example, further to the map of coverage, the controller entity may activate some of the potential aggregators only if other conditions are met.

In certain cases, the activated one or more second communication devices are second communication devices which are not currently acting as aggregators. Advantageously this allows rotation of second communication devices acting as aggregators.

Additionally or alternatively, the second communication devices may comprise second communication devices which are already acting as aggregators. Advantageously this allows the whole set of second communication devices to be considered as aggregators, thus capturing both groups of second communication devices to be mapped:
- only aggregators which are to be switched on, so that they are considered as candidate aggregators and potentially selected, and
- also those aggregators which are already active.

In certain cases, the telecommunication network may further comprise a core network (CN) and a radio access network (RAN), wherein the first communication devices are communication devices connected to the CN via the RAN, and which are candidate to be connected to the CN via the second communication devices.

In this way, handover is avoided for first communication devices being aggregated through a particular aggregator in the case when, for example, a second communication device is selected as a potential aggregator; in said example even if the potential aggregator is to be activated, the aggregator keeps its function as second communication device which is to be an aggregator and thus the first communication device needs not to be handed over to a different aggregator layer.

In certain cases, creating the map of coverage comprises estimating, for each of the first communication devices, a pathloss with each relevant second communication device.

The map of coverage is created for the aggregators not yet active (i.e., those candidate second communication devices that are yet to be activated) and also for those that are already active.

A "relevant" second communication device may be a device whose connection path with the first communication device is to be included in the map of coverage. For example, the pathloss may be only computed between those first communication devices and aggregators to which there is at least a possibility of connection. In another example, the pathloss may be computed between each and every pair of aggregators and first communication devices.

In certain cases, the estimated pathloss is based on the measurements reported by the one or more first communication devices which have received the relevant beacon signal.

The above examples may be implemented within a system for providing an aggregator facility in a telecommunications network; the system comprising: a core network, CN; and a radio access network, RAN, which is configured to provide a backhaul connection to the CN and to provide wireless communication connections to radio communication devices; wherein the system further comprises: a first communication device, the first communication device having a first connection to the CN, the first connection path including a wireless connection between the RAN and the first communication device; a second communication device; and an aggregator controller, which communicates with the RAN and the CN and which is configured to instruct the second communication device to establish an aggregation connection to the first communication device and a second connection between the first communication device and the CN, wherein the second connection included the aggregation connection and the instruction is dependent upon performance conditions.

The second connection may be used instead of the first connection to the CN; alternatively the second connection may be used in addition to the first connection to the CN.

In certain examples, the aggregation connection is a wireless connection.

In certain examples there are a plurality of first communication devices. Where there are more than one first communication device, the aggregation connection transports aggregated data from the first communication devices, the data from each first communication device being packetized for backhaul to the core network.

In certain examples, the second communication device may be a user equipment (UE) whose user has indicated that the UE may be dynamically assigned to act as an "aggregator".

In certain examples, the second connection further includes a second wireless connection to the RAN and the backhaul connection from the RAN to the CN. Where the second communication device is a user equipment (UE), the second wireless connection may be established using a SIM card specific to that device to authenticate the device to the CN.

In certain alternative examples, the second connection further includes a connection using at least one connection technology selected from: optical fibre cable technologies; Ethernet technologies; a fixed line xDSL technology; microwave backhaul technology; and/or a Wi-Fi technology. In the case of Wi-Fi technology, the connection may thus comprise a Wi-Fi section from second communication device to a Wi-Fi access point and a fixed line section from the Wi-Fi access point to the core network. Fixed line xDSL and optical fibre connections may be either direct or indirect; in the indirect case, the connection may be established via at least one intervening network entity.

In certain examples, the second communication device may be a dedicated communication device specifically deployed to act as an aggregator. Alternatively or additionally, the second communication device may be a small cell base transceiver station, for example, a home eNodeB (HeNB).

In certain examples, the aggregator controller is independent of the RAN. The controlling functionality (which could be implemented, for example, as a software) is thus placed in an entity that is typically external to the eNodeBs. This external entity is configured to establish a communication channel with selected terminals (or other communication devices) that are capable of acting as aggregators for other terminals in the network. When each of these selected terminals acts as aggregators for one or more other terminals in the network, the latter are connected to the CN via a secondary connection which is different from the primary connection they would have when connected with the CN via the RAN. These connections are primarily logical connections between the terminals and the CN. The secondary connection will include a communication channel between the selected terminal and the one or more other terminals in the network for which the selected terminal acts as an aggregator (hereafter, we will call the selected terminal "aggregator"). The aggregator will communicate with each of these other terminals and combine their communication streams before they are transmitted to the Core Network. In certain cases, the external entity is configured to establish further parallel communication channels with other communication devices: this may be useful when determining the locations of communication devices more generally rather than candidate aggregators alone, as may be needed in certain examples.

As a result, the system may be deployed without requiring bespoke adaptations of otherwise conventional eNodeBs to include dedicated software functionalities. The introduction of a separate controller entity means that the system may be implemented in association with any conventional macrocell layer deployment.

Furthermore the system requires neither changes in network architecture nor new stricter requirements in synchronization, backhaul, etc.

As a user may obtain (and to some extent control the positioning of) candidate aggregators, the users of the network may also benefit in that they are able to influence the overall coverage of the macrolayer by their own actions. In some instances, an aggregator placed close to a window (whether outdoors or indoors), can provide improved coverage indoors to UEs, giving a better link budget.

The use of such aggregator facility systems may have an advantage for legacy communication devices since they would gain access to potentially more up-to-date equipment in the deployed aggregator controller, thereby improving performance of such low-tier terminals in connecting to the macrolayer through the aggregator.

Location services may also benefit from the availability and/or presence of aggregator devices as each aggregator may be used as a further means to discover the positions of respective communication devices, thereby improving location accuracy.

In certain examples, the performance conditions upon which the instruction to the second communication device to establish the second connection depends include a metric of coverage quality and/or usage of resources in the network being greater than a threshold level. This metric may be a metric of a level of interference in the network. In particular, this level of interference may be one due to the use of the first connection. The threshold level is an estimate (which can be predetermined) of a level of interference due to the use of the second connection.

In certain examples, the instruction to establish an aggregation connection may be conditional upon performance conditions associated with the second communication device. This may be in addition to the metric discussed above. The performance conditions associated with the second communication device may include parameters associated with the connection between the second communication device and the RAN. The performance conditions associated with the second communication device may include at least one of SINR, received signal received power (RSRP), location information, and battery life.

In certain examples, the aggregator controller may be further configured to process the performance conditions associated with the second communication device and, only if the parameters are determined to indicate that the second communication device is a candidate for assignment as an aggregator, to instruct the second communication device to establish the aggregation connection to the first communication device.

There is further provided computer software operable, when executed on a computing device, to cause one or more processors to perform a computer implemented method according to the above examples of the present disclosure.

A further example provides machine-readable storage storing such a program.

It is an aim of certain examples of the present disclosure to solve, mitigate or obviate, at least partly, at least one of the problems and/or disadvantages associated with the prior art. Certain examples aim to provide at least one of the advantages described below.

### Brief Description of the Drawings

Various examples of the present disclosure will now be described with reference to the accompanying drawings, in which:
Figures 1A to 1C illustrate a radio access network where certain communication devices are dynamically assigned as aggregators within a single cell;
Figures 2A and 2B illustrate a further radio access network where certain communication devices are dynamically assigned as aggregators within a multicell network;
Figure 3 illustrates the functional elements of an aggregator controller suitable for enabling, controlling and disabling an aggregator layer in the network architecture of Figures 1A, 1B, 1C, 2A and 2B;
Figure 4 illustrates the behaviour of nearby communication devices when the aggregator controller of Figure 3 enables an aggregator layer at a given aggregator;
Figure 5 illustrates the functional elements of a communication device suitable for use in the network architecture of Figures 1A, 1B, 1C, 2A and 2B;
Figures 6A and 6B illustrate certain operations of a controller entity in determining whether activation of an aggregator facility is supported;
Figure 7 shows a flowchart showing certain operations of a communication device associated with mobility status;
Figure 8 shows a flowchart showing certain further operations of a communication device associated with mobility status;
Figure 9 illustrates the use of EPS bearer as a transport layer for connectivity between an aggregator device and the core network;
Figure 10 illustrates a variation upon the arrangement in Figure 9;
Figures 11A, 11B and 11C illustrate further instances of radio access networks where certain communication devices are controlled to generate a beacon signal for use in generating a coverage map;
Figure 12 shows a schematic diagram of a selection of functional features of a cellular communication system;
Figure 13 shows a schematic diagram of mobile devices in relation to cellular coverage from various sources;
Figure 14 shows a schematic diagram of a location calculation;
Figure 15 shows a flow chart of a method of calculation the location of a mobile device;
Figure 16 schematically illustrates a radio access network in which a number of different types of communication devices are dynamically assigned as aggregators in a single macrocell;
Figure 17A schematically illustrates a wireless communication network in a multi-cell network having a plurality of candidate aggregator devices and shows a first activated aggregator set corresponding to two adjacent macrocells;
Figure 17B schematically illustrates the two adjacent macrocells of Figure 17A captured at a later point in time and in which some aggregators have been reconfigured;
Figure 18 is a flowchart schematically illustrating an aggregator layer reconfiguration method;
Figure 19 schematically illustrates a physical architecture for a wireless communication network comprising both an aggregator layer and a macrocell layer.

### Detailed Description of Preferred Embodiments

The present disclosure relates to control of time division duplex transmission in a telecommunications network architecture that includes a radio access network (RAN), a core network (CN) and a packet data network (PDN). Communication devices, such as mobile terminals, user equipment (UEs) and wireless access stations, establish wireless connections to the network by means of the RAN.

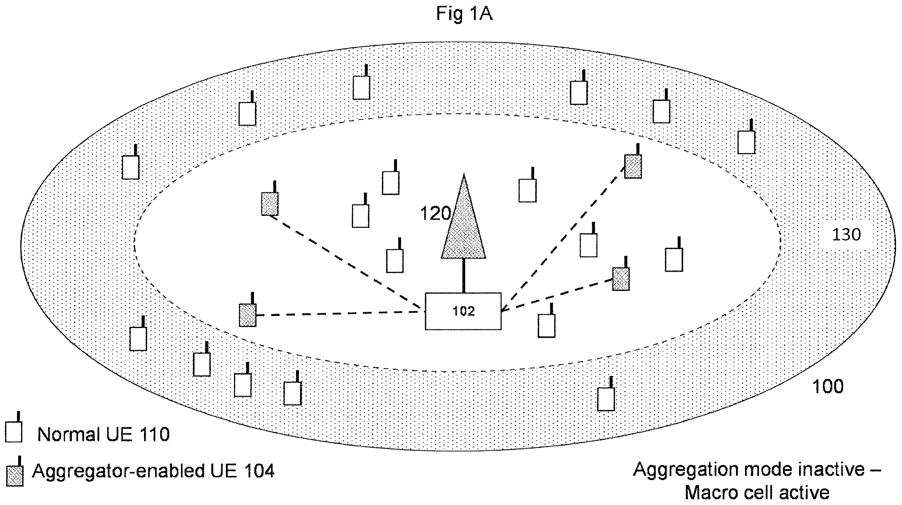

Figures 1A to 1C show a single cell 100 of the telecommunications network provided by a base transceiver station (i.e. macro eNB) 120 within the RAN. The telecommunications network architecture further comprises a network node, referred to as an aggregator controller (AC) 102, which communicates with the RAN and the CN (illustrated here as a link between the AC 102 and the eNB 120) but which may be implemented independently of the component entities of either RAN or CN.

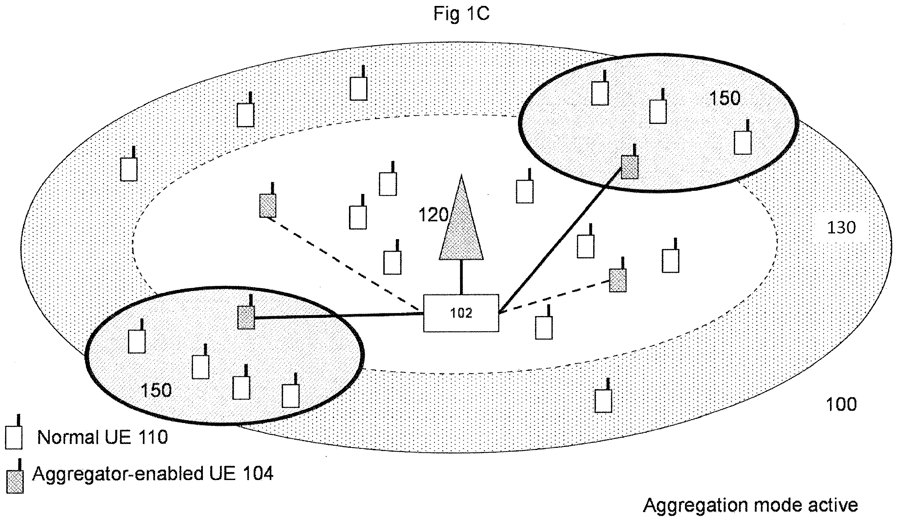

The AC 102 identifies at least one communication device 104 as candidate for assignment as an aggregator. The AC 102 also instructs any given aggregator candidate 104 to activate (or deactivate) an aggregator mode, whereby it provides base station functionality for nearby (mobile) communication devices 110: in Figure 1C, each activated, aggregator-enabled communication device 104 provides a respective aggregator cell 150. The AC 102 also determines whether any aggregator candidate 104 is activated at all at a given time in a given region of the telecommunications network. In Figures 1A to 1C, candidate aggregators 104 are illustrated as UEs: this is merely one example of a suitable communication devices 104, candidate aggregators may equally be dedicated communication devices or even small cell base transceiver stations such as HeNBs or femtocell eNBs.

The AC 102 is configured to interrogate one or more communication devices 104, where these devices are connected to the RAN (i.e. the eNB 120), to determine certain parameters associated with the device 104 and/or its connection to the RAN (e.g. SINR, reference signal received power (RSRP), receive signal code power (RSCP), location information, battery life, etc.). Data associated with the parameters is processed at the AC 102 and, if the parameters are determined to indicate that the or each communication device 104 is a candidate for assignment as an aggregator, the communication device 104 may be configured to implement an aggregator mode, whereby it provides base station functionality for nearby (mobile) communication devices 110.

Figures 1A to 1C also illustrate one scenario where the facility extending base station functionality to nearby (mobile) communication devices 110 is contemplated. As communication devices approach the furthest range of macrocell coverage in the cell (i.e. the cell edge, illustrated as shaded area 130), they consume more network resource. By selecting certain communication devices to act as aggregators, these devices being within good macrocell coverage but having the facility to extend base station functionality within an "aggregator cell" beyond the coverage of the macrocell layer, the network can deploy aggregators to address the problems of cell edge.

Certain network-connected communication devices 104 are thus used as a type of small cell entity. Network-connected communication devices assigned to perform this small cell-like functionality are termed "aggregators" because, where there are more than one communication devices 110 nearby a given network-connected communication device 104 in aggregator mode, the data traffic from the nearby communication devices 110, for each of the nearby communication devices 110, is buffered for transport (i.e. "aggregated") using a backhaul connection between the aggregator 104 and the core network. By aggregating the data from one or more nearby communication devices 110, the aggregator can both (a) assist in extending the network coverage to locations where (i) the macrolayer coverage is otherwise either temporarily or permanently inadequate or (ii) the macrolayer coverage is adequate but devices within a certain coverage area (e.g., cell edge) consume too many resources and (b) transport data over the RAN more efficiently. One of the advantages of buffering data from the nearby communication devices 110 is that the backhaul connection from the aggregator 104 (which may be considered as a single logical "pipe") can be made less "bursty" reducing signal resource consumption and reducing the overhead of the signalling.

Aggregators are typically, dynamically switched-on and off in dependence upon conditions affecting the performance of the network. These performance conditions include both network conditions (such as interference, load, etc.) and other conditions that could affect the performance of the system (such as the predicted level of activity in the cell at a given time or date, the presence and/or number of candidate aggregators in suitable locations, the distribution of UEs in cell edge locations, and/or the level of resource consumption by communication devices in the potential coverage area of respective candidate aggregators).

In certain cases, the coverage of the existing macrolayer is used for backhaul and a technology/band different from the one used for the backhaul is used as a radio interface for extending the coverage to nearby (mobile) communication devices 110. The coverage extension is therefore supplied to nearby communication devices 110 by aggregators operating "out-of-band" with respect to the macrolayer operating frequencies.

In one example, the macrolayer operates using LTE carriers at frequency bands around 800MHz or 1800MHz while the cell 150 provided by the aggregator to nearby communication devices operates at 2600MHz. In another example, the macrolayer operates using LTE carriers at frequency bands around 2600MHz using an FDD technology while the cell extension provided by the aggregator to nearby communication devices operates at 2600MHz in a TDD technology. Furthermore, the reader will appreciate that further out-of-band frequency bands may be available at frequencies for which no licence is needed, such as the 2.4GHz and 5GHz bands used by conventional WiFi technologies (i.e. compliant with the IEEE 802.11 family of standards) or in the near infrared and visible light spectrum used by light communications technologies such as visible light communications, VLC (sometimes referred to as "Li-Fi").

Aggregators (and candidate aggregators) may be fixed in a single location much as conventional small cell base station transceivers are: determining or obtain a location for such devices is essentially a matter of checking that this fixed status has not been altered. Equally and without loss of generalisation, it will be appreciated that in many instances aggregators (and candidate aggregators) are themselves mobile. While in certain embodiments, it is a requirement that the aggregator is static when active, it is also contemplated that the aggregator may be moved to another site and activated at the new site - such communication devices are referred to as " ", as distinct from "fixed" devices. One specific example of a nomadic device arises when the candidate aggregator is installed in a motor vehicle, such as a commuter's car: the vehicle is driven from a home location (where it may be static) to an office location (where, after the journey is complete, the device may again be unmoved throughout the working day).

The AC 102 is a central logical entity (e.g. a server), which may or may not be integrated within the elements of the 3GPP Radio Access Network. The AC 102 monitors conditions affecting the performance of the network to assist in deciding which UEs 104 (or other network-connected communication devices) will act as aggregator.

Certain implementations of the AC 102 obtain information from all network-connected communication devices in a given sector before determining which of these devices can act as aggregators by virtue of the device status and current location. This determination is repeated for respective sectors at intervals of time: in certain cases, the intervals are equal in duration, while in others, the intervals are of variable duration and may be adapted to the known or predicted behaviour of communication devices using the network.

The AC may further repeatedly determine whether, on a set of basic criteria (i.e. performance conditions such as the network conditions, the current location and status of communication devices, etc.), any devices in a given sector should enter into service as aggregators at all. The criteria may include a measure of the comparative benefit of introducing an aggregator facility compared to having no aggregator facility in a given sector.

The AC is capable of establishing, maintaining and deactivating communications with the candidate aggregators, i.e. those UEs or other network-connected communication devices determined to have the capability to act as aggregators. This capability (provided through an application layer carried over the user plane of the macro layer, for example) allows the AC to:
- obtain information from all the UEs that can act as aggregators 104, this information may include performance factors such as location and its accuracy, supported RATs and related technologies (such as conventional WiFi technologies, VLC technologies, etc.), supported operational frequency bands, battery characteristics, status, and current battery drain consumption; and/or
- provide commands to the aggregators 104 such as: commands to set-up an aggregator control layer using some specific algorithm depending upon performance conditions such as those obtained from the aggregators 104, to select the RAT/band to be used in such a layer, to start transmission, to send handover commands to the aggregated UEs (i.e. the nearby communication devices 110 served by the aggregators 104), to stop transmission, and/or to send information to the aggregator control layer.

In certain implementations, the AC 102 might communicate with the LTE eNodeB or 3G RNC in order to "move", via handover to a specific RAT/frequency, a terminal (or other communication device) that is set to act as an aggregator 104. This move may be a change in serving cells: in such cases the communication with the LTE eNodeB or RNC is a request for a handover of the aggregator 104 from a current cell to a neighbouring cell: communication with the eNodeB or RNC is necessary then since handovers are under the control of the LTE eNode (for 3G, the control is done by the RNC). The move might also be a forced reselection: in which case communication with the LTE eNodeB would be unnecessary.

In certain implementations, the AC 102 may establish a further direct communication with "normal" UEs 110 (i.e. those communication devices not currently assigned to act as aggregators). This direct communication may be through a preinstalled application, for instance, configured to gather further performance information such as the strength/quality of received signals in the cell 100 in which the normal UEs 110 are camped/connected, and/or data on the strength/quality of received signals in other RATs/band, and/or location information.

In certain implementations, the aggregation enabled communication devices 104 (i.e. aggregators or candidate devices) are also relay nodes. Such devices may transfer data for one group of network-attached communication devices as a conventional relay node, while serving another group of network-attached communication devices as an aggregator.

The aggregator 104 is distinct from a typical relay node in a number of respects. Firstly, relay nodes are tied to a particular donor cell. They are presumed to be static and entirely under the control of the network operator via the eNB providing the donor cell. Furthermore, relay nodes are typically operated using radio resources allocated to them by the donor cell and are thus integrated in the scheduling for the macrocell. In logical terms, a connection from a communication device to the core network via a relay node is the same logical connection as that between the communication device and the core network via the donor eNB: resource that would be allocated within the macrolayer for the direct connection from communication device to eNodeB is instead allocated to the indirect connection via the relay unit.

The macrolayer (i.e. provided by eNB 120) and the aggregator 104 provide separate logical connections between the Core Network and communication device 110, with the aggregator 104 being "configurable" to provide this connection. Whereas the relay node provides an alternative physical route provided the communication device camps on the relay cell rather than the donor cell, the AC 102 ensures that the network can control whether a given candidate (or group of candidates) for aggregator is enabled (i.e. enters into service as an aggregator) and thus determines the conditions under which the communication device switches between a connection established by the RAN and a connection established by the aggregator (when instantiated).

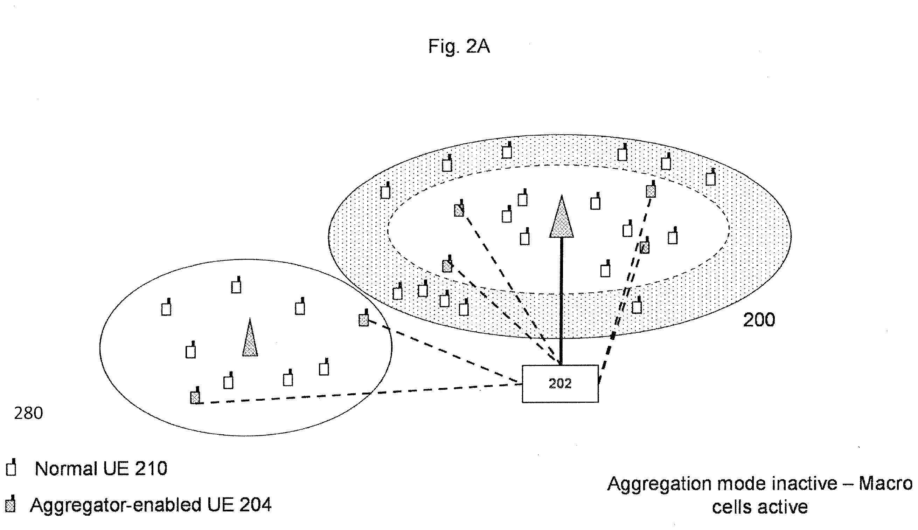

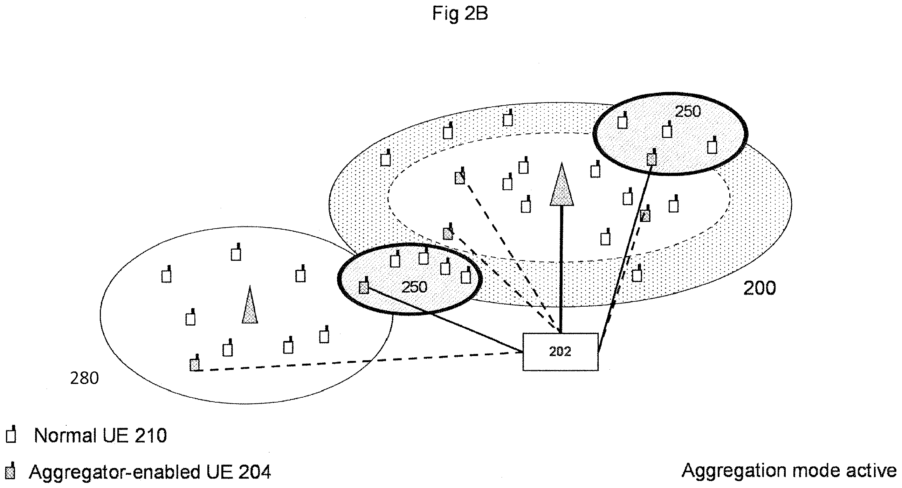

Figures 2A and 2B illustrate a further radio access network where certain communication devices are dynamically assigned as aggregators within a multicell network. This scenario demonstrates that the aggregator is not however merely a "temporary" base transceiver station. As the aggregator is activated and deactivated ad *hoc* (i.e. opportunistically) based on the need of the RAN as a whole, it is contemplated that certain communication devices 204 camped on neighbouring cells 280 could be assigned aggregator status: in Figure 2B, each activated, aggregator-enabled communication device 204 provides a respective aggregator cell 250.

Such aggregators 204 can be arranged to provide more effective base station functionality to communication devices in the cell 200 currently serving a conventional communication device 210. While that aggregator 204 would normally be outside the reach of the serving cell 200, it can nevertheless be activated, via the AC 202.

As the AC 202 need not be associated specifically with a given cell 200, but rather with a network that may include a plurality of cells (200, 280), the AC 202 is adapted to view the network holistically. By activating aggregator facilities 204 that sit outside the (macrolayer) coverage of a cell 200 yet still serving communication devices 210 within that cell 200, the AC 202 may still deliver an overall benefit to the network.

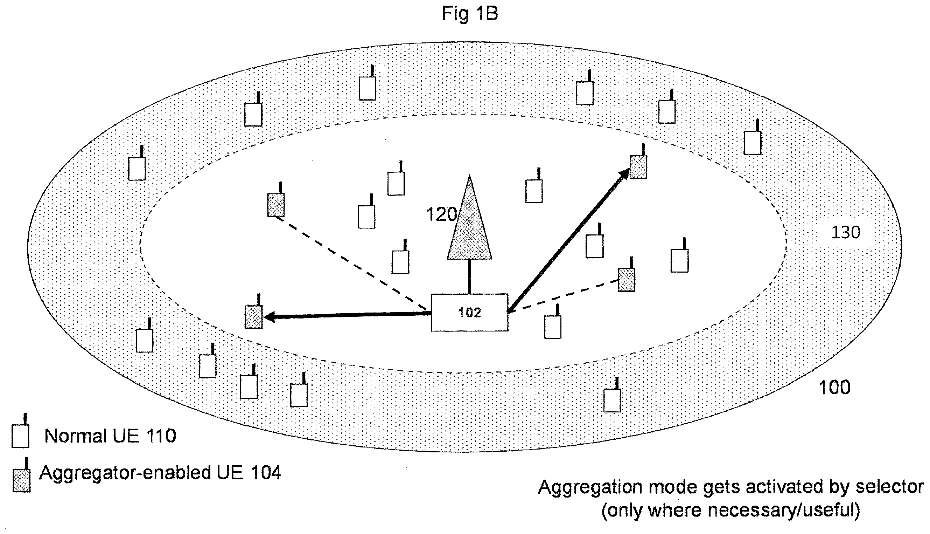

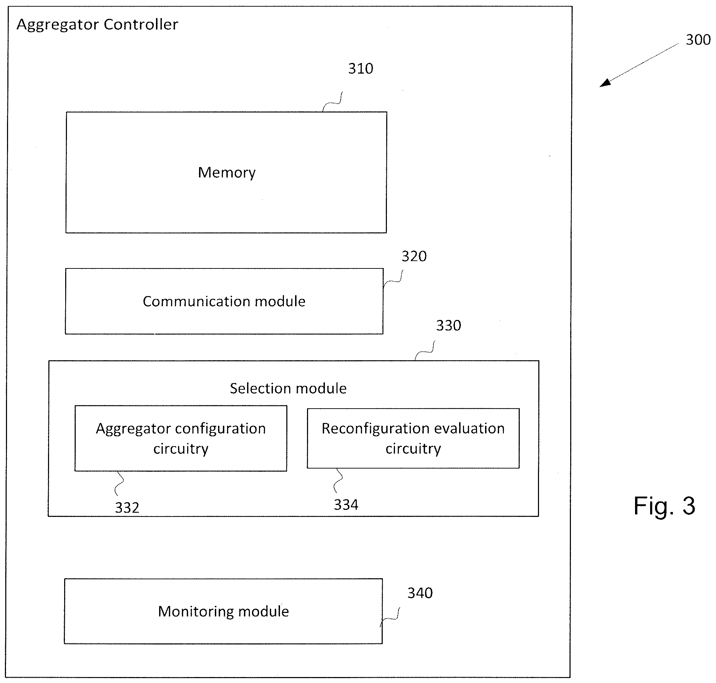

Figure 3 illustrates the functional elements of an aggregator controller 300 suitable for enabling, controlling and disabling an aggregator layer in the network architecture of Figures 1A, 1B, 1C, 2A or 2B. These functional elements may be implemented as software routines and/or as dedicated hardware units, these elements being substantially interchangeable. For example the functionality of the communication module 320, the selection module 330 and the monitoring module 340 can be implemented in one or more hardware processors or other processing logic such as an Application Specific Integrated Circuit (ASIC).

The functional elements include a communication module 320 for obtaining information from potential aggregators by establishing communication via an application layer with these devices. The information obtained contributes to the factors affecting the performance of the network upon which the establishment of a connection between aggregators and nearby communication devices depends and may include: current location (e.g. location information derived from global or regional satellite positioning systems, such as Global Positioning System, GPS, GLONASS, BeiDou/COMPASS, IRNSS or Galileo)); historical information (covering, for example, the last two weeks) of the location of the candidate aggregator; level of physical mobility at present (i.e. whether moving or not); a measure of LTE radio coverage in the macrolayer; an indicator of battery level, current consumption, expected remaining battery etc.; information concerning neighbour cells of the aggregator, in respect of the connection between the aggregator and the macrolayer RAN; and a measure of the improvements (or otherwise) expected, after switching on an aggregator layer in a specific region of the radio network, the improvements being measured in terms of latency (i.e. data waiting time), for example. This information may be made available in the application layer through an aggregator client application executing on the respective aggregator candidate devices.

One reason for obtaining such information relates to the nature of the devices that are candidates. It is likely that many of the candidate aggregators are in fact "nomadic", changing (i.e. commuting) between two or more static locations over a period of hours or days. Thus for many candidate devices the characteristics of the network will change as they move within the network: a communication device that is a suitable candidate aggregator at a given location, X, and a given time, T, may not be suitable elsewhere, X + x, at a later instant, T + t: specifically if the location is close enough to extend an aggregator cell to the (macrolayer) cell edge at T, but out of range of the cell edge at T + t. Thus the controller 300 needs to obtain this information to inform decisions as to whether the communication device is (currently) a candidate aggregator and whether, if a candidate aggregator, it should be activated/deactivated as an aggregator.

Optionally, the communication module 320 may be configured to obtain additional information from communication devices other than aggregators; this additional information being analogous to the information obtained from candidate aggregators and similarly contributing to the factors affecting the performance of the network upon which the establishment of a connection between aggregators and nearby communication devices depends. A specific non-aggregator client application may be installed in some or all of the communication devices within a network to provide this additional information.

The communication module 320 may also be configured to obtain macrolayer information (i.e. data concerning network conditions) from the macrolayer concerning the current level of resource consumption of the schedulers, coverage maps and (if available) real time traffic maps.

The functional elements include a selection module 330 for selecting (and communicating to) the aggregators that have to start the transmission of an aggregator cell and for determining which of the supported technology/frequency bands the selected aggregators is to use in operation.

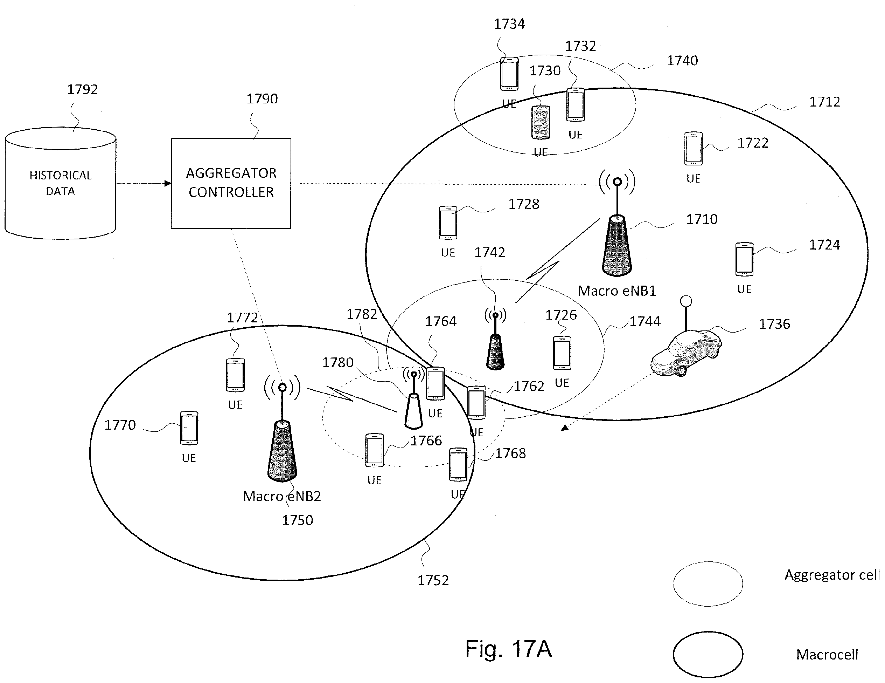

The selection module 330 comprises aggregator configuration circuitry 332 for configuring an aggregator layer of the network such that an initial set of aggregators selected from a full set of candidate aggregators is activated. This initial selection can be performed as described above, taking into account performance with and without certain candidate aggregators being switched on. In alternative embodiments a default initial configuration of aggregators is selected for activation. The selection module 330 further comprises reconfiguration evaluation circuitry 334 for triggering reconfiguration of the aggregator layer depending upon a reconfiguration metric comprising a weighted sum including at least one cost of the reconfiguration and at least one benefit of the reconfiguration such that reconfigurations conferring a net benefit to the system can be selected. The reconfiguration evaluation circuitry 334 can access information from the communication module in relation to properties of and measurement reported by the individual aggregators and of the macrolayer and can also access information from the monitoring module 340 for use in calculation of the reconfiguration metric and when considering whether or not appropriate conditions have been satisfied to trigger a reconfiguration. Details of factors taken into account in the cost and benefit analysis are explained below with reference to Figures 17A to 19.

A monitoring module 340 is also provided to evaluate performance conditions (such as the network conditions and other conditions affecting performance) to determine which of the currently selected aggregators will continue their transmission.

In cases where a change in aggregator is indicated by the monitoring module 340, the selection module 330 may be further configured to select (and communicate to) those aggregators which should stop their transmission (and thereby cease to be in service as an aggregator).

When enabling an aggregator layer in a given sector or cell of a radio network, the aggregator controller first instructs one or more communication devices (preselected to act as aggregators) to start radiating coverage (i.e. to implement an aggregator "cell").

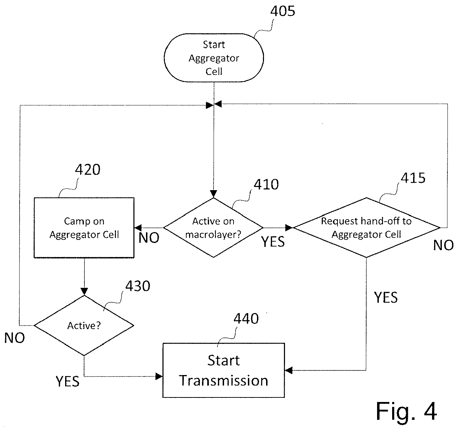

In Figure 4, the activity of communication devices nearby an active aggregator are illustrated. Once a given aggregator starts radiating coverage to its own cell 405, the behaviour of nearby communication devices adapts accordingly.

Nearby communication devices (i.e. terminals, such as UEs) that are in idle mode will automatically camp on the newly established aggregator cell 420 (by virtue of the conventional idle mode reselection of the cell with the strongest signal strength coupled with the prioritization of LTE layers broadcast by the LTE eNodeB). If the nearby idle device thereafter enters an active mode 430, transmission starts (or does not start) over the aggregator cell 440. Where there is an ongoing existing connection through the macrolayer of the RAN (i.e. it is determined that the nearby communication device is active on the macrolayer) 410, the RAN may optionally, upon request from the aggregator controller, move (i.e. hand-off) the ongoing communication of the respective nearby device towards the aggregator cell 415. If such a request is made, transmission starts (or proceeds) over the aggregator cell 440.

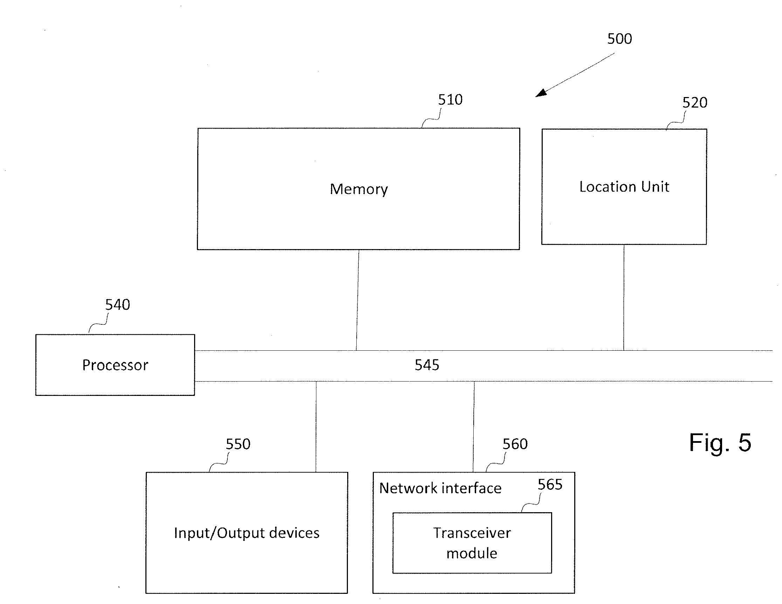

Figure 5 illustrates the functional elements of a communication device 500 suitable for use as an aggregator in the network architecture of Figure 1A, 1B, 1C, 2A or 2B.

The communication device 500 includes a memory 510, location unit 520, a processor 540, input/output devices 550 and a network interface unit 560 having a transceiver module 565. Data is transferred between the various components via a bus 545. To operate as an aggregator, the network interface unit 560, through its transceiver module 565 must be capable of establishing two separate network interfaces: a backhaul interface and a coverage extension interface. In certain implementations, the transceiver module operates in at least two sets of frequency bands: one set of bands that correspond to the RAT of the macrolayer and a further "out-of-band" set of frequencies not used by the RAT. In some cases, communications on the "out-of-band" set of frequencies use a different RAT from the macrolayer.

In certain implementations, the backhaul and the coverage extension interface might use the same working frequency/RAT as a conventional relay node in order to facilitate the deployment of multi-hop scenarios, in which chains of Radio Access Network entities are deployed. For example, a first aggregator may appear to other communication devices as a Donor eNodeB and a second aggregator may appear to the first aggregator as a conventional UE while providing its own cell to nearby communication devices appearing to them as a conventional Relay Node.

Clearly the backhaul connection from the backhaul interface of the communication device 500 need not be a cellular wireless connection and may include non-cellular wireless and/or a fixed line connection using a connection technology such as: optical fibre cable technology; ethernet technologies; a fixed line xDSL technology; microwave backhaul technology; visible light communications, VLC and/or a Wi-Fi technology.

As noted previously, it is anticipated that many of the candidate aggregators move between two or more static locations over a period of hours or days. It is therefore important that the communication device 500 can, using data obtained from the location unit 520, provide adequate reports of changes in location, which may in turn inform the controller's decisions as to whether the communication device is considered a candidate aggregator and whether, if a candidate aggregator, it should be activated/deactivated as an aggregator.

The location unit 520 may include a global navigation satellite system (GNSS) unit, such as a global positioning system (GPS) unit or the like to provide location information for the communication device 500 as well as cell synchronization if other methods are not available. Alternatively or additionally, the location unit 520 may obtain a location "fix" by inference from the RSRP together with knowledge of the location of cell sites in the macrolayer.

By obtaining a plurality of location fixes of the communication device 500 at different (known) times, the communication device 500 can determine its current mobility level. The mobility level may be determined as a binary determination, i.e. the device may be "static" or "non-static": clearly however a non-static mobility level can be more finely distinguished by characterising the degree and nature of the mobility situations, e.g. semi-static/nomadic scenarios, high mobility, static relative to others (yet changing location), etc. Alternatively, the communication device 500 may report each location fix (together with a time stamp) to the controller and the controller may determine for the current mobility level of the communication device 500. In the latter case, the persistent reporting of location fixes may incur a higher cost in terms of battery usage necessary to facilitate the transmission of such reports.

In certain embodiments, the communication device is not considered a candidate aggregator device if the mobility level is not "static". In other cases, there may be non-static mobility states which nevertheless qualify the communication device to be considered a candidate aggregator device (for example, the detected movement may be determined to be at a speed lower than a predetermined threshold speed, or the change in location may be within a limited geographical area). In the latter case, the controller may determine that an alternative pattern of operation (such as the selection of aggregator selection routines that are more suitable for such qualifying non-static situations) may be needed to ensure effective use of communication devices having qualifying mobility statuses.

While not shown, the communication device 500 may be powered from a battery - such as a rechargeable Li-ion battery, conventional in the field of portable cellular communication devices, such as smartphones. The level of that battery may conveniently be monitored. Alternatively or in addition to the mobility criteria discussed above, the communication device may be rejected as a candidate aggregator device if the monitored battery level drops below a battery level threshold.

In the present discussion, it will be readily apparent to the reader that many alternative and complementary factors may be used to determine whether a given communication device may be considered ready to act as aggregator: mobility status as discussed above is one of a number of useful criteria upon which readiness may be determined. Indeed, mobility status as illustrated - where a simple dichotomy is made between "static" and "non-static" status - is clearly a simplification of a more complex determination of a plurality of categories of "mobility status" (which might span multiple degrees and or types of "mobility", for example).

For a device to be determined to be "aggregator-ready" it must fulfil certain physical criteria (e.g. being switched on, capable of receiving and sending signals according to an appropriate protocol, etc.) and fulfils one or more criteria for suitability: for example exhibiting a mobility status that permits effective aggregator operation. Battery life is a significant example of a physical criteria which would also be considered to determine readiness to act as an aggregator.

Even if conditions exist that suggest it would be possible to deploy one or more aggregation layer in a cellular communication network, there must be a good reason to decide to set-up an aggregator layer: in essence there needs to be some tangible expected benefit in doing so rather than persist with the normal macrolayer operation.

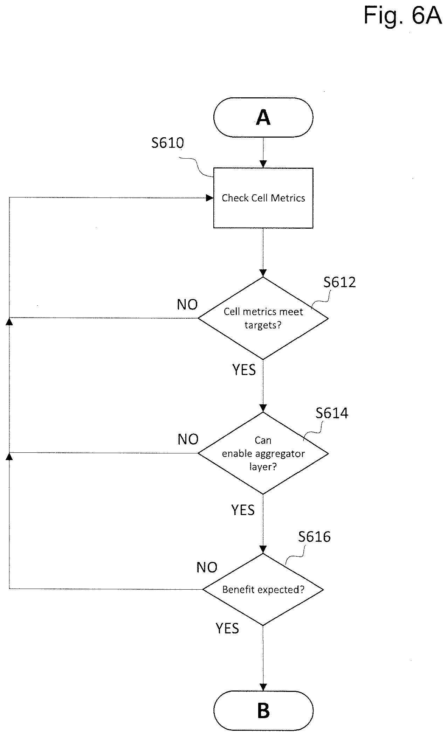

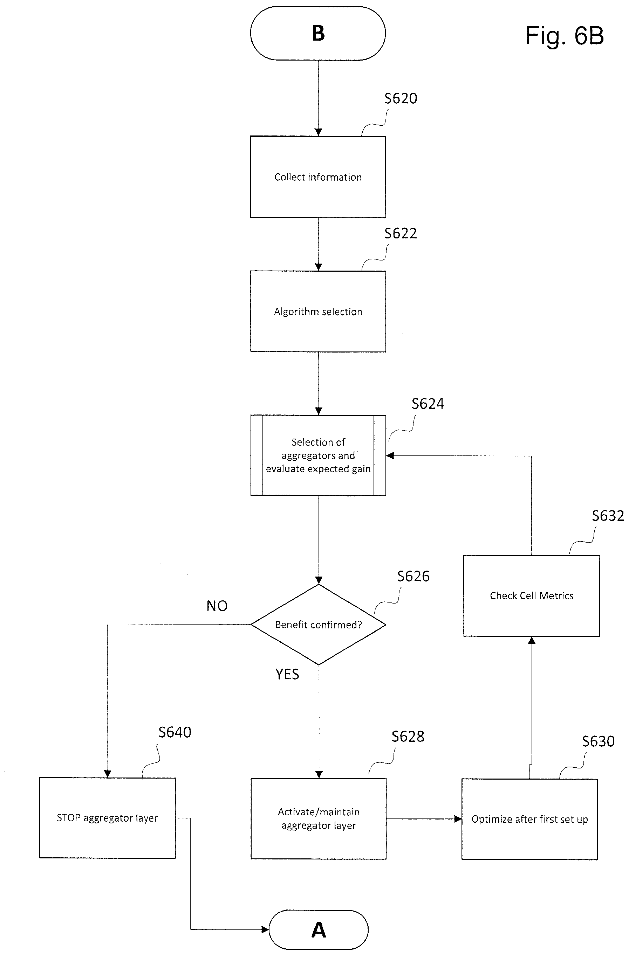

Figures 6A and 6B show a flowchart of certain operations performed by a controller entity in determining whether activation of an aggregator facility is supported.

At operation S610, the controller obtains values for one or more cell or user related metrics, referred to hereafter as "cell metrics", thereby checking the performance of the macrolayer. The cell metrics may include for example, measurements of: cell load (for instance, resource block (RB) usage), cell throughput, number of active communication devices located in predefined portions of the cell coverage area, a "happiness" value for the users (measured latency in data transfer, uplink waiting time, or a value obtained by inference from user feedback in social network services, for example); and/or control resource usage (e.g. PDCCH usage).

The cell metrics provide a measure of performance of the macrolayer that is used in determining whether the conditions in a given area of radio coverage offered by a cellular communication network support the activation of an aggregator facility. Here the given area of radio coverage may be selected from: a macrocell coverage area for at least one macrocell within the cellular telecommunications network; a coverage area for at least one sector within the macrolayer of the cellular telecommunications network; and the coverage area of the entire cellular telecommunications network.

In certain cases, the controller may be configured to define the given area of radio coverage which is to support the activation of an aggregator facility by identifying a subset of available cells for which one or more cell parameter conditions hold, e.g. more than a given number of cells in the subset have a cell metric and/or user metric lower than corresponding threshold value. This might result in the area of radio coverage which is to support the activation of an aggregator facility being a subset of the cells in the cellular network covering an entire city.

In Figure 6A, for example, this determination involves two distinct stages: operation S612, which deals with certain conditions hold that would make activation of an aggregator facility desirable (even necessary), and operation S614, which deals with further conditions which would determine whether such a facility would be feasible. In alternative approaches, the conditions that support activation of an aggregator facility may be performed in other ways, in particular operations S612 and S614 may be performed in parallel with one another or in "reverse" order; furthermore, all conditions may be assessed in a single procedure based on the cell metrics.

At operation S612, the controller determines whether the cell metrics meet target threshold values. This operation may include: determining whether cell load (i.e. RB usage) exceeds a load threshold while throughput lies below a minimum throughput threshold; determining whether the number of users in a region of the cell (such as the cell edge) exceeds a user number threshold while throughput per App falls below a minimum App throughput threshold (an App is a software application executable on a user's communication device: Apps that rely upon network connectivity may be affected if the throughput allocated is below some threshold, for instance, a video streaming App with a throughput lower than 300kbps would provide an inadequate display output); determining whether a happiness metric (whether aggregated for a number of users or a group of users or not) lies below a happiness threshold; and/or determining whether the usage of control resources (such as PDCCH) exceeds a control resource threshold.

If the cell metrics meet the target threshold conditions, the controller concludes that necessary conditions for aggregator layer deployment hold and moves to operation S614.

At operation S614, the controller determines whether certain conditions sufficient for aggregator layer deployment hold. The controller thus determined whether effective aggregator layer deployment will be possible. Operation S614 may include determining:
whether there are aggregator enabled communication devices (i.e. candidate aggregator devices) in the cell and whether these communication devices have certain characteristics in terms of mobility (e.g. they are, have been for an amount of time, and/or are expected to be, "static");
whether there are communication devices (aggregator enabled or not) in one or more macrocells with certain characteristics in terms of mobility (e.g. they are, have been for an amount of time, and/or are expected to be "static");
whether the controller has access to data concerning path loss towards the macrocell and/or amongst communication devices (e.g. UEs/terminals) and/or location information of the aggregators and/or the other communication devices;
whether there are communication devices in coverage of potential aggregators;
whether there is a matching between the capabilities (technology/band supported) between aggregators and nearby communication devices;
whether at least some of the aggregators have sufficient battery life to maintain aggregator functionality for a predetermined period of time;
whether conditions of low interference hold; and/or
whether spectrum and technology resources needed for use in deployment of the aggregator layer are available.

If the controller concludes that sufficient conditions for aggregator layer deployment hold, the controller next performs operation S616. In certain alternative approaches, the controller performs operation S616 before or in parallel with the operations at S612 and/or S614.

In operation S616, the controller makes a preliminary determination of whether a benefit for the network would be expected if the network were to deploy the aggregator layer. This preliminary determination considers a limited number of properties of the cell metrics obtained at operation S610 and thus relies upon a subset of the information necessary for aggregator layer deployment: for instance, a benefit at this stage would be expected because there were several static users at cell edge under the potential coverage of some static aggregators or because there are small cells with unused capacity in an area close to some static users but with aggregators located in their coverage area.

If it is determined that either necessary conditions (at operation S612) or sufficient conditions (at operation S614) are not present, the controller waits a predetermined period of time (by setting a timer for example) and then obtains a further set of cell metrics (at operation S610). Likewise, should it be determined that no benefit is expected from the deployment of the aggregator layer (at operation S616), the controller will again return to operation S610 and obtain a further set of cell metrics.

If however, at operation S616, the controller makes a preliminary determination that there would be an expected benefit, in principle, for the network if the aggregator layer were to be deployed, the controller initiates a more detailed phase of operation (illustrated in Figure 6B) by collecting further performance information, operation S620 (in addition to the cell metrics obtained at operation S610).

During the collection of further performance information, operation S620, the controller obtains a list of aggregator enabled communication devices (i.e. candidate aggregators) currently camped within a given macrocell, using information updates received, at temporally spaced-apart intervals, from the aggregators. In addition to the list of candidate aggregators, the further performance information may include some or all of the following information obtained from the respective aggregators:
- location (of the updating aggregator). This location information may be obtained by the aggregator by inference from the RSRP and/or using a GPS unit.
- pathloss/SINR (measured at the updating aggregator). This may be with respect to the current macrocell or a set of macrocells.
- mobility level (static or not) measured by the aggregator itself
- information on location and/or pathloss of all UEs or other network connected communication devices that are static (optionally, this may be filtered to relate only to UEs that are static and that in addition are expected to remain static by analysing and using geolocalized historical information of the UE) and that are camped/or are/have been connected there

The controller processes some or all of this performance information to evaluate the relative distance and pathloss/SINR (or similar quality) between candidate aggregators and the devices of users in the cell.

In certain embodiments, the controller makes a selection of aggregators from among the aggregator enabled communication devices in accordance with a single aggregator selection algorithm. In other embodiments, there may be a plurality of available aggregator selection routines (i.e. algorithms) and it is first necessary to determine which routine to adopt. When required, the operation of determining which routine to use may be any conventional selection operation.

Figure 6B illustrates one embodiment where a plurality of aggregator selection routines are available. Here, the available respective aggregator selection routines may each be suited to respective, different performance conditions. In operation S622, an algorithm corresponding to one of these routines is determined depending upon the availability of specific further performance information, such as aggregator location information or pathloss measurement data. In cases where only a single aggregator selection algorithm is available, the determination of which algorithm to use is trivial and operation S622 may be omitted.

Once it is determined which routine (i.e. algorithm) is suited to the available further performance information, this algorithm determines which, if any, aggregator enabled devices should be activated for aggregator functionality and defines the sub-processes by which benefit (i.e. achievable gain) from aggregator layer deployment will be calculated. The algorithm thus serves to select aggregators from among the candidate aggregators for deployment of the aggregator layer. The operation of this algorithm is illustrated as operation S624 in Figure 6B.

At operation S624 (whether this is the only available aggregator selection routine or a routine determined to be suited to available further performance information at operation S622), the controller makes a selection from among the aggregator enabled communication devices, this selection being a selection of one or more aggregators based either on individual characteristics of the respective, selected aggregators or collective characteristics when the selected aggregators are considered as a group selected from among the aggregator enabled communication devices.

While the present embodiment contemplates the use of a single aggregator selection routine within a single area, this does not preclude the use of more than one selection routine - for example, the use of a first aggregator selection routine during peak hours of the day or week and a second aggregator selection routine at other times. Furthermore, it is equally contemplated that where two areas of radio coverage are considered separately, each area may adopt a respective, different aggregator selection routine consistent with the information relative to candidate aggregator devices that can be obtained.

It is thus possible that the choice of aggregator selection routine may be fixed based on empirical knowledge (using routines for which sufficient information has been available historically, because the penetration of terminals supporting a network operator client application has become sufficiently high, say) or dynamic (based on how much information is currently available for each routine).

It is further contemplated that the choice of which selection routine to adopt may be governed by a quality metric of the effectiveness of any given routine as a function of the amount of relevant information that can be collected. By obtaining information that might be used by one or more of the possible routine and discarding the routines for which available information is such that that their quality metric is too low, the routine whose quality metric implies it can provide the highest gain for the network would then be chosen.

In certain embodiments, the selection of aggregators includes the selection as a group from some or all possible different groups or subsets of aggregator enabled communication devices, each group being termed an "evaluation group". An expected gain for each evaluation group is then calculated.

In other embodiments, the selection of aggregators is the selection of individual devices (i.e. subsets of aggregator enabled communication devices having a single member each). Here, expected gain is calculated for each individual candidate aggregator.

The expected (achievable) gain results from an evaluation of the expected improvement in a given cell metric: this cell metric may be the, or one of the, cell metrics obtained at operation S610. For example, the expected gain may be the result of a comparison between a) the value of that given cell metric when the or each aggregator is selected and b) the currently experienced (i.e. measured) value of that cell metric.

In certain cases, the expected gain may be expressed as the difference between the value of a given cell metric predicted for a given evaluation group (evaluated before actually activating that group for aggregator functionality) and the current value of the given cell metric. Where no aggregator enabled communication devices are activated, the current value of the cell metric is the measured value of the cell metric for the cellular communication network where no aggregator functionality is activated. Otherwise, the current value of the cell metric is the measured value of the cell metric for the network where a current group of aggregator enabled communication devices are activated for aggregator functionality, said current group need not be the evaluation group. The prediction of the cell metric may be a function of the further performance information collected at operation S620.

Where expected gain is determined for evaluation groups or individual candidate aggregators, the aggregator selection algorithm then assesses the respective expected gains for some or all possible different aggregators or groups of aggregators, the selected aggregator or group of aggregators may be the individual or group providing the greatest expected gain. Alternatively, the selected aggregator or group of aggregators may be selected from a subset of groups having gains that exceed a threshold gain, taking account of other practical constraints such as maintaining aggregators that are already active unless there is a good reason to stop them (e.g. battery level dropping below a level that can support continued operation or detected movement of the active aggregator).

At operation S626, the controller makes a full determination of whether a benefit for the network would be expected if the network were to deploy the aggregator layer by modelling network performance for a network with the selected aggregator or group of aggregators activated and comparing that performance to the currently measured network performance information (as collected at operation S620).

In the case of the aggregator selection using evaluation groups, the full determination of benefit for the network entails comparing the expected gain from the use of the selected evaluation group of aggregators to data representative of the current network performance.

In a specific example where one of the selected subsets of aggregators is not currently active, sufficient benefit from first activation of that selected subset would be confirmed where the measured value of a given cell metric (assuming the given cell metric is the one used in the algorithm at operation S624) is significantly higher than that cell metric measured before the activation.

In another example where the aggregator layer is activated (i.e. at least one subset of aggregator enabled communication devices are activated for aggregator functionality), sufficient benefit is confirmed when the gain is higher than one of a reference average metric (e.g. historical data) or a cell metric measured in the previous last N iterations, where N is an integer greater than 1.

In certain cases, a measured value of a first metric (metric A) is used before activation, whereas after activation, a second, different, metric (metric B) is used instead. Known pre-activation network performance indicators (often referred to as KPIs - or key performance indicators) are used in order to evaluate metric A. Estimated values of metric A are compared to known measured values of metric A, to indicate whether the network needs assistance and to deduce that activation of the aggregator layer will provide that assistance. After activation, metric B may be calculated using both the stored KPIs pre-activation, and the current KPIs measured after activation. If metric B after activation is sufficiently better than metric B before activation, the aggregator layer is maintained active.

If the determination at operation S626 is that a net benefit is indeed provided by deploying the selected device or group of devices (i.e. subset) as the aggregators, the controller activates an aggregator server (operation S628) to support the aggregator layer and instructs each of the selected communication devices to activate (or maintain active) their respective aggregator functionalities (e.g. by executing a routine in an aggregator client application). These aggregator functionalities include functionalities consistent with operation as a MiFi architecture access point (offering WiFi protocol and/or VLC connectivity to nearby communication devices) and/or as a small cell (offering connectivity using a cellular telecommunications standard).

While not illustrated in Figure 6B, the controller may conveniently launch a RAT selection routine to determine which carrier bandwidth/RAT/band will be used by each (selected) aggregator, the carrier bandwidth/RAT/band being chosen from among one or more permutations of available RAT, band, and carrier bandwidth available for the implementation of an aggregator layer in a specific cell. For instance, the RAT selection routine may determine that as LTE FDD2.6 is not used in current and/or neighbour macrocell, it can be used by all selected aggregators within range of those cells.

As discussed in relation to Figure 4, nearby communication devices may transfer some or all of their data traffic to the selected aggregator(s) differently depending upon whether they are in an "idle" or "connected" state.

In the former case, handoff of idle devices may be facilitated by the controller modifying the neighbour cell list (NCL), which is provided to devices in idle modes, with the parameters of the selected active aggregators.

In the latter case, the controller may determine whether to request a handover for a device in connected state when information such as radio measurements from communication devices in the macro cell compare unfavourably with radio measurements from communication devices using the selected aggregators (always providing such information is available at it might be from access to the relevant RRM function of the eNodeB/RNC in the macrocell). Examples of communication devices for which a handover might be requested include those devices: a) that are in the coverage area of a specific aggregator(s) and b) that have channel quality indicator (CQI) and/or RSRP in relation to the macrocell that is worse than the one of the aggregators.

While not illustrated in Figure 4, the aggregator may alternatively (or additionally) offer WiFi protocol and/or VLC connectivity to nearby communication devices (thereby operating as a MiFi architecture access point). In such cases, handoff onto the aggregation functionality may be effected by informing respective nearby communication devices which aggregators offer an access point in the cell and by commanding those communication devices close to the identified access points to enable Wi-Fi transmission.

Optionally, the controller may then seek to optimise the aggregator layer, operation S630.

Optimization by the controller may include at least one of the following procedures:
- checking, once a given nearby communication device is connected to an aggregator, whether that device has a worse CQI/SINR/RSRP with respect to the the macrocell than with respect to the aggregator, and in such a case will be (or can be) handed over to the Macro layer (e.g. by issuing a handover command or releasing the aggregation connection with redirection). Conveniently the selection parameters for this device would be changed for an amount of time to avoid unwanted ping-pong effects (i.e. hysteresis);
- checking the performance in the aggregator layer against the performance that would be expected if a given communication device were to stay in the macrolayer, depending on which information can be made available to the controller and/or to the aggregator. Examples of the performance information that may be checked include measures of user happiness metrics such as: latency (i.e. the round trip time (RTT) for transmitted and received packets or uplink waiting time. Examples of the performance information that may be checked may also include: historical data (such as throughput for specific Apps) obtained in the macrolayer in similar or same location and under the same or similar RSRP/CQI conditions;
- checking the level of interference and/or availability of resources for the spectrum/technology used in the aggregator layer and taking actions to improve these parameters (e.g. create clusters of spectrum/technology utilization, reduce utilization of those resources in the macrolayer); and
- optimizing the selection of aggregators taking account of mobility. The aggregators themselves may be required to take certain actions when aggregated users (i.e. communication devices using the aggregation facility of a selected aggregator) start mobility. Likewise, when aggregators themselves become mobile, the controller may act to alter the performance of the aggregator later, e.g. by instructing the newly mobile aggregator to switch off aggregation functionality.

Checking the performance in the aggregator layer using RTT may involve comparing RTT for the same packet using macrocell and current aggregator layer service respectively. Using uplink waiting time to check performance may involve comparing this time before and after the optimization.

Checking the performance in the aggregator layer using historical data may involve comparing historical data to actual data obtained through the aggregator. It is also possible to run periodical speed tests just to check the current quality.

Whether optimised as described or not, the controller iterates back through operations S622, S624 and S626, selecting one or more aggregators which may be identical to the aggregator(s) selected in previous iterations or may represent a group having a different constitution of aggregator enabled communication devices.

Periodically, cell metrics are checked - operation S632 - and this information is used in further iterations of operations S622, S624 and S626. The cell metrics checked here may be the same as those obtained at operation S610: equally they may be different from those cell metrics.

If the determination at operation S626 is that a net benefit is not in fact provided by deploying the selected devices (or group of devices) as aggregators, the controller halts the use of the aggregator layer operation S640. This may entail instructing all aggregator enabled communication devices in the cell to deactivate their aggregator functionality and to deactivate the aggregator layer server in the controller.

After a second predetermined time (typically longer in duration than the period characteristic of the iteration of operations S622, S624 and S626), the controller restarts first phase of determining the preliminary benefit of aggregator layer deployment at operation S610.

To provide the information needed by the controller to perform the operations described in Figure 6A and 6B, communication devices are arranged to present information upon which the controller can make its respective determinations of suitability of the device as a candidate aggregator and whether a suitable candidate is to be activated (or deactivated).

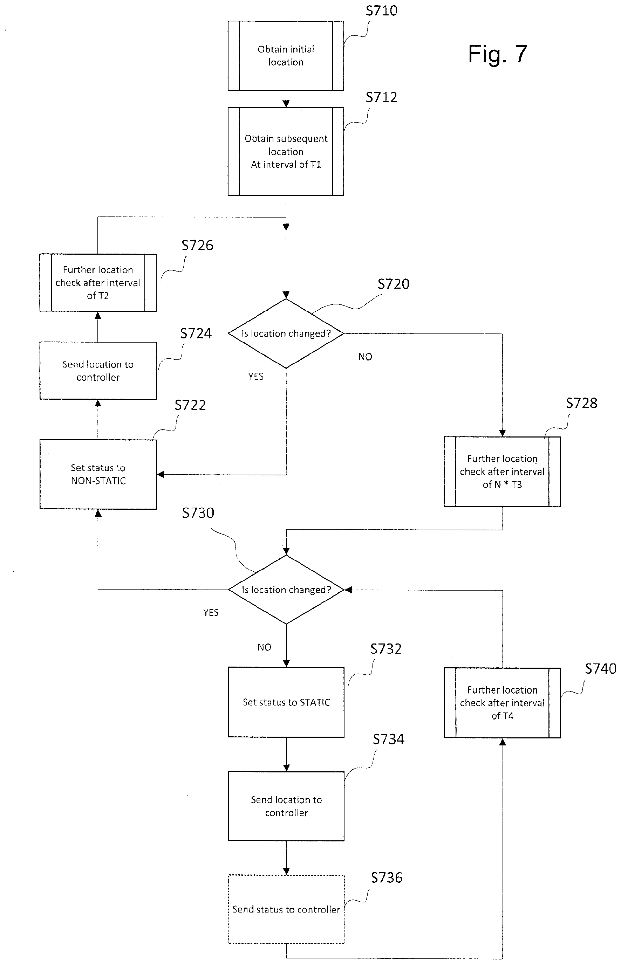

Figure 7 shows an exemplary flowchart showing certain operations of a communication device in accordance with an aspect of the present disclosure.

In Figure 7, the communication device evaluates its current location at temporally spaced-apart intervals (e.g. every T1 seconds). Once there are at least two measures of location (i.e. location fixes) it is possible to determine whether there has been any change in the mobility state of the communication device. Any given location fix is conveniently obtained with a minimum level of accuracy. The time difference between the acquisition of the location fixes is used to determine the degree of mobility (if any) between two fixes. To ensure that fixes are sufficiently far apart in time for a significant movement to be detected each fix is conveniently associated with a corresponding time stamp (which may be acquired from a connected macrocell and/or within the GPS signalling structure). Where more than one communication device is used it is contemplated that they may be operated in a synchronised manner.

An initial location fix is obtained at time T0, operation S710. At a point in time T1 seconds later than T0 a further location fix is obtained, S712.

The location fixes T1 seconds apart are compared to determine whether there has been a change in the detected location, operation S720.

In other embodiments, the algorithm used to determine whether a change in location has occurred may alternatively or additionally use parameters other than reported position and time, for example direction of movement or altitude.

In general terms, a potential aggregator may be considered to have moved (i.e. changed from a "static" state to a "non-static" state) if its position is displaced by a distance of D metres over a time interval Tᵢ-T₍ᵢ₋₁₎, where D and Tᵢ can be determined, calculated, signalled or otherwise obtained dependent on parameters (e.g. current mobility state).

Where the location has changed between the fixes, the mobility state is set to be "non-static", operation S722. For the sake of clarity, the scenario illustrated in Figure 7 shows the determination at operation S720 as binary between "static" and "non-static", on the basis of any detected change in location. The skilled reader will readily appreciate that alternative determinations, having more than two cases or indeed two cases decided upon different criteria, may be substituted for the current operation S720 without requiring any other alteration to the flowchart. For example the change in location between fixes may be registered as indicating a "non-static" state when the location has changed by more than a minimum position change threshold of D1 metres since last location fix.

When in non-static mobility state, new location fixes are sent to the controller, operation S724 and a further location fix is taken after an interval of T2 seconds/minutes, operation S726. Typically the time scale T2 is greater than T1, but could be the same or less than T1: sending updates will use power, computation and signalling resources etc. so this task would be performed less frequently when the latest information is that the device is in mobility (and presumably not currently for consideration as a candidate aggregator). The operation flow then returns to operation S720, where it is again determined whether there has been a change in the detected location. In this way the location is still checked in case the mobility state has changed to "static". If the communication device has become static but the latest report still indicates that its state is "non-static", the use of a T2 greater than T1 will merely result in a slight delay in considering it as a potential candidate for activation.

Where the location has not changed between the fixes, it is determined that the mobility state may be "static" but that further fixes are required to be more certain. In the illustrated case, it is considered that a communication device needs to have been static for a longer period than the interval of T1 between successive fixes in operations S710 and S712 (during initialisation) or the interval of T2 in operation S726 (in subsequent iterations).

To avoid a situation of "false" attribution of "static" status to a device (which may after all be embedded in a vehicle) just because the device has stopped temporarily (e.g., car that has stopped at a light, to re-fuel or in heavy traffic, or a car that has temporarily parked), the communication device obtains a further location fix at time N ^{∗} T3 seconds later, where N and/or T3 could be dependent on the type of communication device (e.g., in a car, residential) or type of scenario of installation (e.g., at a bus terminal, in a scenario that is likely to be static), operation S728. For example, if the scenario is likely to be static, it may be adequate to set N or T3 equal to zero or close to zero as it may be assumed that an earlier indication of "static" status at operation S720 is likely to be correct.

The location fixes N ^{∗} T3 seconds apart are compared to determine whether there has been a change in the detected location, operation S730. If at the end of the period N^{∗}T3 the position is still unchanged, the mobility state is set to "static", operation S732. The current (static) location fix is sent in a reporting message to the controller, operation S734. Optionally, the communication device may also indicate that it is in the "static" state (either in the same reporting message as operation S734 or in a separate status reporting message), operation S736. This option may be considered convenient as it facilitates understanding of why the location fix was reported. Alternatively, the controller may infer that because it has received a reporting message having a location fix from the communication device, it can conclude that the reporting communication device is static.

Where location fixes are derived from GPS-based position signalling, the location fix may be sent as GPS location information (i.e. based upon the WGS84 standard) rather than latitude and longitude alone. Conveniently, the reporting message may include an indication that the location information is in GPS position format. Alternatively or additionally, the reporting message may include an indication that GPS information is available, regardless of the source of the reported location fix.

A reporting message (either the same reporting message as operation S734 or in a separate additional information reporting message) may optionally include additional information, for instance: specifics of the candidate aggregator: e.g. device model, software release information, hardware identifiers, etc; device state, such as battery status; and/or radio information, such as camped Cell Id, Radio coverage quality, CQI of radio channel used to perform such a communication, neighbour cells for the communication device modem, etc.

The flow then iterates, whilst the communication device is in mobility state "static". The communication device obtains a further location fix after an interval of T4 seconds, operation S740. T4 is typically a shorter time period than T2, since it is desirable to avoid a communication device being considered "static" when it is in fact "non-static": any static communication device is a potential candidate aggregator, so any false attribution of "static" status may have a detrimental effect on the delivery of an effective aggregator layer. The operation flow in the "static" mobility state then returns to operation S730, where it is checked once again whether the detected location has changed. Any change in location results in the mobility state being set to non-static and location fixes being taken at intervals of T2 (rather than T4).

In a further arrangement of the present disclosure, more than one aggregation layer is activated within the network. In certain cases, respective aggregation layers are activated and deactivated in corresponding sectors or groups of sectors of the cellular network. In certain cases aggregation layers are established within one sector or cell that extend the coverage of that sector or cell to encompass communication devices served by neighbouring sectors or cells: thus the benefit to the network of the deployment of any given aggregation layer may be calculated for a region of the radio coverage of the cellular network that includes more than one sector and/or cell.

Certain arrangements of the present disclosure relate to the dynamic activation of one or more communication devices to provide an aggregation layer. Each of the one or more communication devices appears, to the macrolayer as a UE; while to other communication devices, they each appear as a class of small cell base transceiver station. The dynamic activation is due in part to determining if a benefit could be expected by such dual UE/small cell activation: that might arise if the macrolayer doesn't provide a prerequisite quality of service to the other communication devices. Dynamic activation also requires a more fine-tuned determination dependent upon selecting a set of devices capable of the dual UE/small cell or UE/MiFi functionality for activation and determining whether the network would benefit from the activation of that particular group. Only where the network is determined to benefit on the basis of this fine-grained determination will the selected communication devices be activated as hybrid UE/small cells (or UE/MiFi devices).

Likewise certain embodiments of the present disclosure relate to the dynamic deactivation of an aggregation layer provided by certain communication devices.

Considering once more the simplified example of a binary determination of whether a communication device is in "static" or "non-static" state, it is clear that once an aggregator device has activated an aggregator mode (and radiates a small cell, VLC or WiFi coverage, for example) it is desirable to monitor the location of the device in case there is a change in that mobility state and method to deal with change of mobility state: "non-static" state being presumed incompatible with effective aggregator functionality.

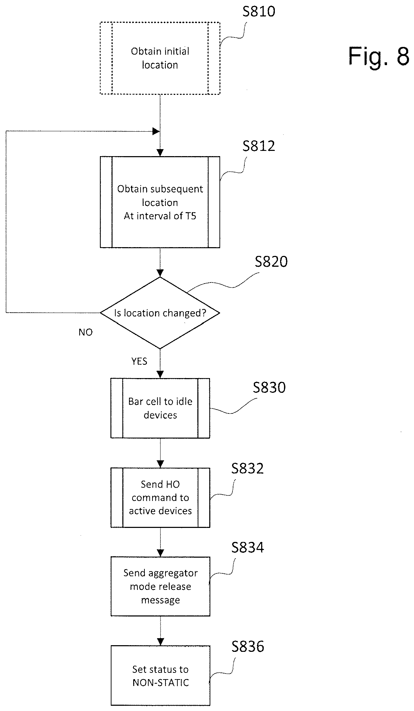

This scenario is illustrated in Figure 8.

Once the communication device has been activated, the communication device monitors its location every T5 seconds (obtaining an initial location fix at operation S810, if necessary and further location fixes at operation S812). T5 needs to be a very short time as it is crucial to determine as soon as possible whether the communication device is still "static" since the performances of the network may be affected. Note that this may be the same iterative monitoring of mobility status as at operation S740 of Figure 7 or a distinct iteration at a different time interval specific to monitoring the operation of active aggregator devices.

The location fixes obtained at operations S810 and S812 are compared, operation S820, and if location changes (to a predetermined degree of accuracy, etc.), the communication device will immediately bar the cell (so that the UEs in idles will not connect), operation S830 and send handover commands to all the communication devices connected to the aggregator cell and to the macrocell. The handover procedure from aggregator cell to macrocell may then be handled according to any conventional standardised handover procedures.

The communication device sends the handover command because it effectively operates as a base station for the aggregator cell when it is activated.

The cell barring is important in order to prevent nearby communication devices in idle mode from attempting to connect to the cell radiated by the communication device, while that cell is still being radiated, to support the handover operation, for instance.

Conveniently the deactivating aggregator device sends the controller a message including an indication that aggregator-state has been released giving the cause as "mobility". Additionally, the deactivating aggregator device may then update its mobility state to "non-static".

The communication device may additionally monitor its battery life every T6 seconds. As noted previously, low battery level may preclude the communication device from being considered a candidate for activation. If expected remaining battery duration is lower than T7 seconds/minutes, the active communication device may conveniently gradually deactivate the aggregator mode by performing operations similar to operations S832 and S834. In this case however, handover commands will be executed, and confirmed completed, one at a time, before sending out further handover commands.

As will be apparent from the preceding discussion, it is assumed that the interactions between controller and communication device are governed by a shared communication protocol.

Using this protocol, the controller can send information requests to one or more communication devices (aggregators), specifying any additional information it wants to receive.

The communication device likewise uses the shared protocol to respond to such information requests, providing the requested information, which may for instance consist of the following:
- Mobility State
- Communication device specifics: e.g. device model, software release, hardware identifiers, etc.
- Device State: battery status
- Radio information: Serving Cell Id, Radio coverage quality (e.g. Serving Cell RSRP, Serving Cell RSRQ, etc.); CQI of radio channel used to perform such a communication, Neighbour cells for the UE modem
- Radio measurements executed on neighbour cells, detected cells on other LTE frequencies that are not part of the neighbour list, Wi-Fi access point identifiers (i.e. SSIDs) and strength detected onto Wi-Fi receiver

Conveniently, the communication device may maintain a protocol connection open by sending dummy bits for the next Z seconds, otherwise it stops sending dummy bits.

Using this protocol, the controller can also send commands instructing the Communication device to enter into aggregator state (i.e. as a either a small cell and/or Wi-Fi Access point). The communication protocol for such a command includes a set-up command (sent to the communication device) providing the following information: LTE carrier to be used for transmission, and main parameters; transmission, TX, power to be used: (default is "MAX TX Power); optionally, a parameter for setting-up a second carrier; optionally, a parameter to set-up a Wi-Fi Access Point; time of the day in which the cell shall start radiating; Parameters needed to manage the status of local algorithms within the Communication device whilst in the aggregator state.

Once the command to enter aggregator mode is received, the communication device uses the shared communication protocol to obtain, from a controller database or a database within the OSS server, the parameters needed to set-up the aggregator cell: for example, IP addresses (if not derived with a fixed rule from current R-UE IP address). Alternatively, the communication device may use the parameters used last time it acted as an aggregator, provided that some criteria are still met: for example that the location is still the same as last time; that, while the location has changed, the RAU is still the same; that, while the location has changed, the R-U camped in the same cell as last time.

Once the communication device has the information needed to set-up the aggregator cell, it prepares its transceiver module (565, Figure 5) to be ready to radiate. The communication device then starts radiating at the requested Time of the Day. The Communication device then confirms to the controller that it is radiating (i.e. that the aggregator mode is active).

Whilst the communication device is in aggregator state, the communication protocol may also be used by the controller to request provision of additional information, such as: Battery status; Number of connected communication devices; Average Resource Blocks occupation; Average CQIs of the connected UEs; and Average CQI of the connected Modem.

In a typical telecommunications network architecture that includes a radio access network (RAN), a core network (CN) and a packet data network (PDN), communication devices, such as mobile terminals, user equipment (UEs) and wireless access stations, establish wireless connections to the network by means of the RAN. In the LTE standards, the core network is referred to as the Evolved Packet Core (EPC) and the data transferred over this wireless connection are carried by a virtual connection between the UE and the PDN, known as an "EPS bearer" (where EPS stands for Evolved Packet System).

Within communication devices that offer aggregator facilities as LTE small cells, the network interface unit 560 sets up a connection to the EPC using an EPS bearer as transport layer. Network interface units 560 of these communication devices thus connect to the macrolayer in a conventional manner, appearing to the macrolayer as if they belong to a conventional UE. For convenience, such LTE small cell are added to the same Routing Area (RA) as the macro cell providing coverage to the small cell.

Optionally, such devices may be assigned a different security profile so that the "conventional" connection to the EPC may be adapted to handle an alternative connectivity to a Security Gateway (SecGW) within the EPC. Small Cell might then be allowed to connect to the EPC without establishing their own IPSec (since Small Cell traffic goes through an LTE modem (i.e. a macrolayer interface of the network interface unit 560) that connects to a macro cell, and since that macro cell is in turn connected to the SecGW).

Conveniently, this "conventional" connection also allows voice and SMS services to be delivered using a legacy circuit-switched network such as GSM. So-called Circuit Switched FallBack (CSFB) within LTE may be necessary to support circuit-switched calls in some networks.

To implement the connection 1) between the communication device in aggregator mode and the EPC and 2) between the aggregator device and nearby communication devices, the network interface unit 560 includes two separate network interfaces: a coverage extension interface arranged to provide the services of a normal Small (or Pico) Cell and a "backhaul" interface, which serves to provide "conventional" connectivity to the EPC. The network interfaces are paired when the communication device is in aggregator mode. In the following discussion the "backhaul" interface is referred to as "R-UE" in recognition of its UE-like appearance to the macrolayer.

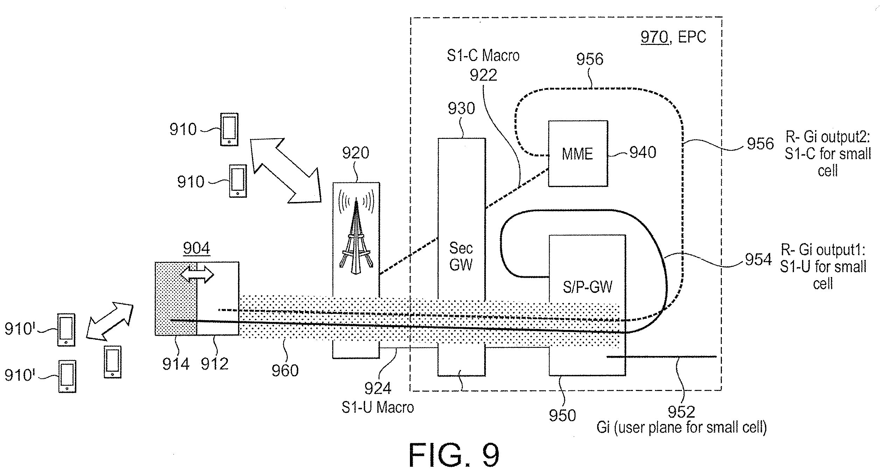

Figure 9 illustrates diagrammatically how an eNodeB in the macrolayer, provides LTE coverage (typically FDD) to a set of UEs 910, amongst them an aggregator device 904 having an interface R-UE 912. Certain UEs 910' are shown camping on the coverage area provided by the aggregator device 904 through its small cell facility 914.

An EPS bearer 960 is established by the R-UE 912 through the macro layer (i.e. eNodeB 920) and into the EPC 970. The EPS bearer 960 transfers data from the aggregator device 904 across a security gateway (SecGW) to a further gateway 950 (which may be a serving gateway S-GW or a PDN gateway P-GW that provides an interface to the PDN). The control node in the EPC is the Mobility Management Entity (MME) 940: this node serves to control the behaviour of the entities in the EPC and terminates certain communications from the small cell after they have been output from the EPS bearer 960.

The "normal" output of the S/P - GW 950 is carried over a Gi interface 952. Where the EPS bearer output (R-Gi) includes S1-U interface data (i.e. user plane data) for the small cell, 954, this is terminated in the S/P - GW 950. Where the EPS bearer output (R-Gi) includes S1-C interface data (i.e. control plane data) for the small cell, 956, this is terminated in the MME 940. In this specification, S1-C is used as a synonymous of what is termed in 3GPP standards as S1-MME. S1-C interface data (i.e. control plane data) for the macro cell, 922, is also terminated in the MME 940; while S1-U interface data (i.e. user plane data) for the macro cell, 924, is also terminated in the S/P - GW 950.

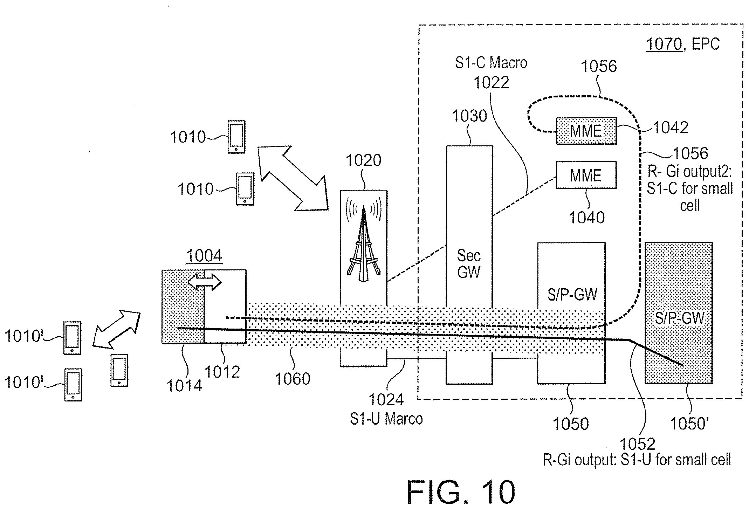

In as variation of the arrangement of Figure 9, the functions for macro and small cell operation are logically split as if they were being handled by different EPCs. Figure 10 illustrates this logical division.

As for Figure 9, Figure 10 illustrates an eNodeB 1020 representing macrolayer LTE coverage provided to a set of UEs 1010, amongst them an aggregator device 1004 having an interface R-UE 1012. Certain UEs 1010' are shown camping on the coverage area provided by the aggregator device 1004 through its small cell facility 1014.

An EPS bearer 1060 is established by the R-UE 1012 through the macro layer (i.e. eNodeB 1020) and into the EPC 1070. The EPS bearer 1060 transfers data from the aggregator device 1004 across a security gateway (SecGW) to a first logical gateway 1050 (which may be a serving gateway S-GW or a PDN gateway P-GW that provides an interface to the PDN). A first logical control node 1040 serves to control the behaviour of the entities in the EPC 1070 and terminates certain communications from the macrolayer. A second logical control node 1042 terminates certain communications from the small cell after they have been output from the EPS bearer 1060.

The "normal" output of the S/P - GW 1050 is carried over a Gi interface to the PDN. Where the EPS bearer output (R-Gi) includes S1-U interface data (i.e. user plane data) for the small cell, 1054, this is terminated in a second logical gateway, S/P - GW 1050'. Where the EPS bearer output (R-Gi) includes S1-C interface data (i.e. control plane data) for the small cell, 1056, this is terminated in the second logical MME 1042. S1-C interface data (i.e. control plane data) for the macro cell, 1022, is terminated in the first logical MME 1040; while S1-U interface data (i.e. user plane data) for the macro cell, 1024, is terminated in the first logical gateway S/P - GW 1050.

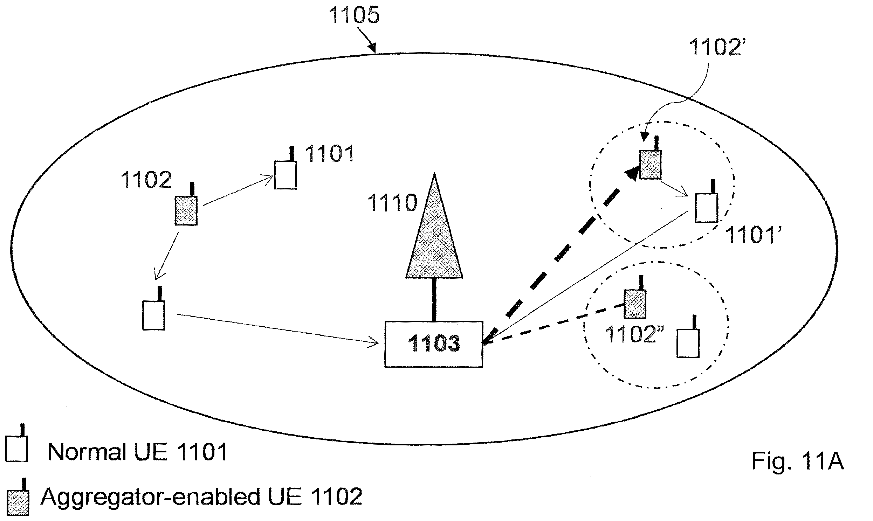

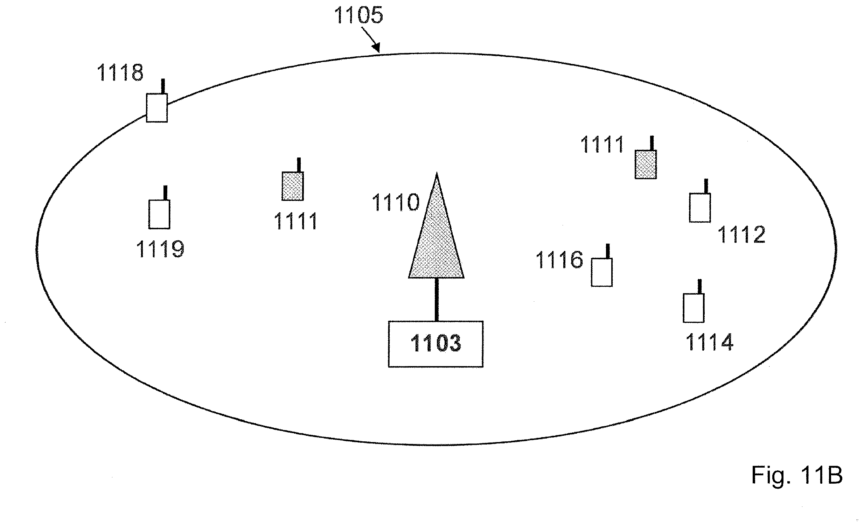

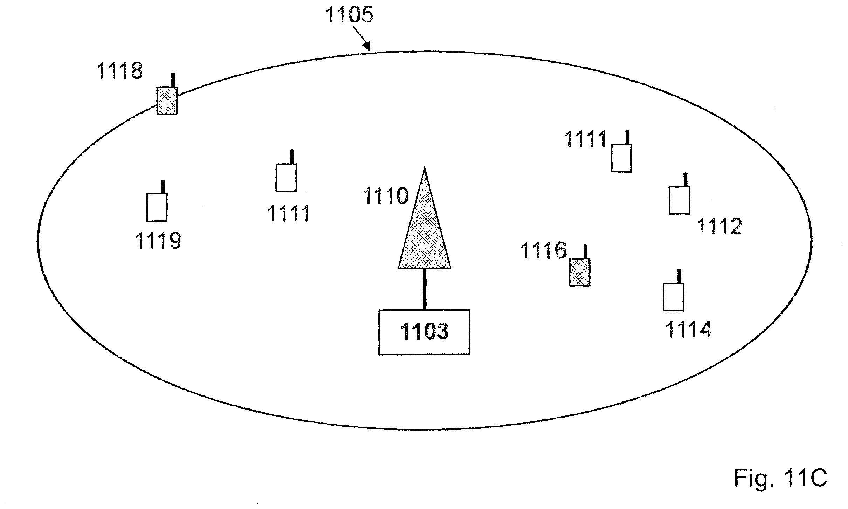

Figures 11A, 11B and 11C illustrate further instances of radio access networks where certain communication devices are controlled to generate a beacon signal for use in obtaining information from other communications devices (e.g., in order then to generate a coverage map as described in the example below), which in turn is used to select which communication devices are to be activated as aggregators.

Figure 11A illustrates a scenario where certain second communication devices 1102 are not currently acting as aggregators. In particular, second communication devices 1102, 1102', 1102" and first communication devices 1101, 1101', 1101" are shown in a telecommunications network comprising a controller entity 1103; in Figure 11A the controller entity 1103 is in communication with an eNodeB 1110 providing a macrolayer cell 1120.

The controller entity 1103 is configured to activate the second communication devices 1102 to broadcast beacon signals 1105. The RF bands upon which the beacon signals are broadcast may be close to, for example, 2.6 GHz either as FDD LTE2600 or TDD LTE2600. The transmission power may be set by the controller entity 1103 or, if not possible, the second communication devices 1102 may communicate, to the controller entity 1103, the transmission power which is being used via Wi-Fi or Bluetooth.

The first communication devices 1101 receive the command to scan and listen to the WiFi or Bluetooth bands, and to report 1106 to the controller entity 1103 the power of the broadcast signal received from any second communication devices 1102 or potential aggregator.

The controller entity 1103 is able to build a comprehensive pathloss map between first communication devices 1101 (active or idle) and the second communication devices 1102 (i.e. potential aggregators), and use this information to select the aggregators to be added according to any suitable method.

In an example, the potential aggregators periodically activate or deactivate an application to broadcast a beacon signal in barred state in the corresponding bands (in TDD or FDD, at 2, 6GHz, say); first communication devices 1101 that are candidates for aggregation are requested, by the telecommunications network, to measure these bands whilst in connected mode and to report the discovered Cells and - if possible - the signal level to the eNodeB 1110.

Knowing the transmitted power as well as the received power level by the communication devices allows to define a pathloss between each potential aggregator 1102 and each first communication device 1101; for example if the received signal is low, it may mean there is too much distance between a specific potential aggregator 1102 and a first communication device 1101, and as a consequence, the pathloss is high.

A small portion of the FDD or TDD spectrum of the networks may be dedicated for the activity of sending the temporary beacon signal 1105. Advantageously this reduces the potential interference towards an aggregator, once in service, due to potential aggregators 1102 during the construction of the pathloss map.

There may be alternatives for the first communication devices 1101 to report 1106 measurements to the controller entity 1103. All the first communication devices 1101 may be instructed to report to the CN and second communication devices 1102 or aggregators 1102',1102" using 3GPP mechanisms to report the observed TDD or FDD cells used by the aggregator layer (i.e. the network of terminals acting as Small Cell/Access Points that are dynamically switched-on depending on availability, battery life, location, expected benefits etc.) and detected carriers in an area, and then sending all this information to the controller entity 1103.

In another alternative, some or all of the communication devices 1101, 1102 may be provided with an application that: either connects with a chipset ordering to report the TDD/FDD cells 1120 used by the aggregator layer, or opens the Wi-Fi receiver; observes the applications detected in area; and reports the measurements to the controller entity 1103.

The communication devices 1101 located around an aggregator 1102 may be the ones instructed to report to the controller entity 1103. In an alternative embodiment only the communication devices 1101 within a specific area may be instructed to report to the controller entity 1103.

The first communication devices 1101 that are candidates for aggregation need to measure the quality of the coverage they might get from an aggregator 1102 before the aggregator has come to service.

The information that is reported 1106 back to the controller entity 1103 may include information concerning received power. The quality of the received signal may also be reported. Besides, this information may be reported using a 3GPP mechanism, for example, the LTE specification inherently supports a self-organizing network (SON) function in which features like Automatic Neighbour Relation (ANR) use the normal measuring report including cells that are not part of a neighbour list.

Alternatively Wi-Fi may be used as a beacon. It may be initiated via a dedicated application for which a design for a reporting method may be implemented, e.g. report periodically in an area in which it is expected to have an aggregator layer.

The map of coverage (i.e. pathloss) may be created in the following manner: the controller entity 1103 may know the transmission TX power of the second communication devices 1102 in the carrier band they use as a beacon; this carrier may be the carrier TDD or FDD used in the aggregator layer, the Wi-Fi carriers used as a beacon or a second carrier used for beacon purpose. The controller entity 1103 then calculates pathloss = TX power - RX power.

In the scenario illustrated in Figure 2B, certain second communication devices 204 are currently acting as aggregators. The controller entity here is an aggregator controller, AC, 202 and the radio access network includes two aggregator layer cells 250. The AC 202 may send an instruction to second communication devices (i.e. the aggregator enabled UEs 204) to broadcast beacon signals at one or more specific radio frequency RF bands, so that first communication devices (i.e. "normal UEs" 210) make measurements in such a way that the current configuration may be changed, due to certain conditions reported to the controller entity 202 from the respective eNodeB (which provides a macrocell 200, 280).

As illustrated in Figure 2B, then, a number of aggregators 204 may be available in association with a specific macrocell 200 to provide a coverage area to offer service to a number of first communication devices 210 currently connecting through the network via the macrocell 200.

Figures 11B and 11C show a telecommunication network, at respective time instants, in which a controller entity 1103 activates certain second communication devices (1111 and 1113, in Figure 11B; 1116 and 1118, in Figure 11C, say) to broadcast beacon signals (1105) at one or more specific radio frequency RF bands, wherein the beacon signals (1105) enable one or more first communication devices (1112, 1113, 1114, 1116; 1118, 1119; say) to make measurements.

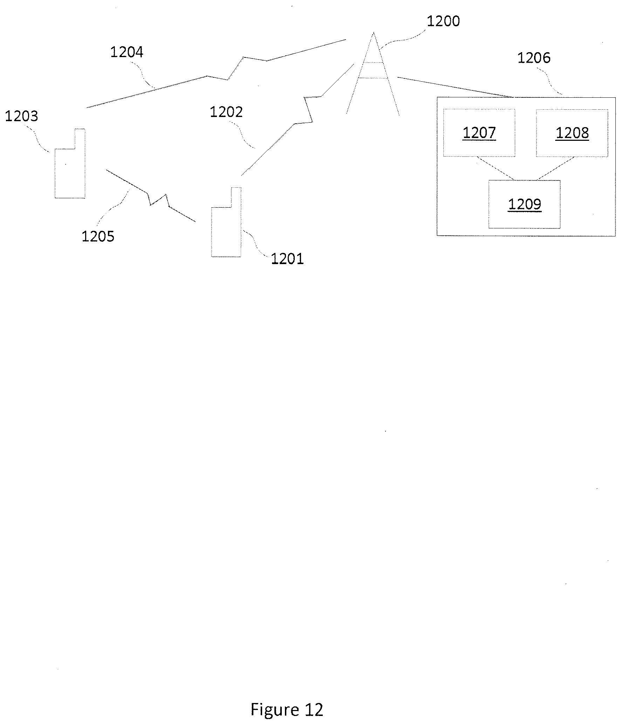

The controller entity 1103 receives measurements from the one or more first communication devices, said measurements based on the beacon signals (1105) received at said one or more first communication devices and, using the measurements, generates a coverage map that is indicative of the coverage that the second communication devices can provide for the first communication devices. Figure 12 shows a selection of features of a cellular network for providing improved location services. Only features relevant to the current disclosure are shown, and numerous other features may be present as is known in conventional systems.

Base station 1200 is a base station of a macro cellular network, for example an eNB of an LTE network. Mobile device 1201 is connected 1202 to base station 1200 and is configured to function as an aggregator to provide connections to other mobile devices, such as mobile device 1203. That is mobile device 1201 can provide aggregator services by providing cellular coverage to which a further mobile device can connect, and utilising connection 1202 as a backhaul connection for the provided cell.

Mobile device 1203 may establish a connection 1204 to the base station 1200 (or any other base station of the cellular network), and/or connection 1205 to the aggregator 1201 (or any other aggregator device). Base station 1200 is connected to core network 1206 in the conventional manner.

Core network comprises an aggregator controller function 1207, as described hereinbefore, for controlling the operation of aggregator 1201 (and other aggregators). Core network 1206 also comprises an Operation Support System (OSS) 1208 which provides operating services for the macro cellular network. A location system 1209 provides location services to the network and has connections to the aggregator controller function 1207 and to the OSS 1208.

As described hereinbefore aggregator controller 1207 has a logical interface to each aggregator 1201 which can be used to issue commands to those devices and receive responses. Typically, a plurality of devices capable of being activated as aggregators 1201 is available within a geographic area and under the control of aggregator controller 1207. When activated as aggregators, signals from those devices may be utilised to help calculate the location of non-aggregator devices receiving the signals.

Since typically not all devices which can serve as aggregators are activated at a given time the assistance given may be limited. In order to provide improved location services aggregator controller 1207 may instruct all devices to activate the transmission of signals at a certain time. The activation of the devices is not necessarily to provide aggregator functionality, but rather to provide signals to act as a beacon for location services. Therefore, the signals may be complete and able to provide cellular coverage, or may be limited, for example to only the broadcast of a subset of channels, for example the pilot channels. The transmitted signals should be sufficient for mobile devices receiving those signals to be able to identify the aggregator making the transmission, for example by a cell ID. This transmission of signals will be described herein as the transmission of a beacon signal. A specific signal may be sent to the mobile devices to indicate the intended purpose, or a standard instruction to activate as an aggregator may be transmitted. The messages may indicate a duration for which the devices should be activated, or a subsequent deactivation command may be sent.

The aggregator controller 1207 may instruct all devices under its control to activate, or only a subset of devices. For example, devices known to be within a certain area may be activated, or all devices with greater than a certain portion of battery power remaining. The command (and any later deactivation command) may be limited to devices which were not already activated and providing aggregation services to ensure pre-existing configurations are not disrupted.

In order to utilise signals from the aggregators to determine the location of a mobile device, the location of the aggregator needs to be known. That location may be calculated in any conventional way, for example using GNSS signal received at the device, or based on analysis of signals from base stations. For example, triangulation or RF pattern matching of signals from base stations with known locations may be utilised. The aggregator may also provide an indication of movement such that the current accuracy of previous location measurements can be estimated. Calculated locations and movement information may be stored at each mobile device 1201, or may be transmitted to, and stored by, aggregator controller 1207 or any suitable system. More details of storing movement information are described hereinbefore.

Location system 1209 is in communication with aggregator controller 1207 and OSS 1208. Location system 1209 can thus receive information from, and issue commands to, aggregator controller 1207. Location system 1209 can also receive information from, and issue commands to, OSS 1208. Location system 1209 can thus receive conventional location information from OSS 1208, as well as information from devices acting as aggregators under control of aggregator controller 1207. Location data may be provided to location system 1209 periodically by aggregator controller 1207 and OSS 1208, or may be requested as required. Location system 1209 may also request and receive information directly from aggregators 1201 via a logical interface between the location system 1209 and the aggregators 1201.

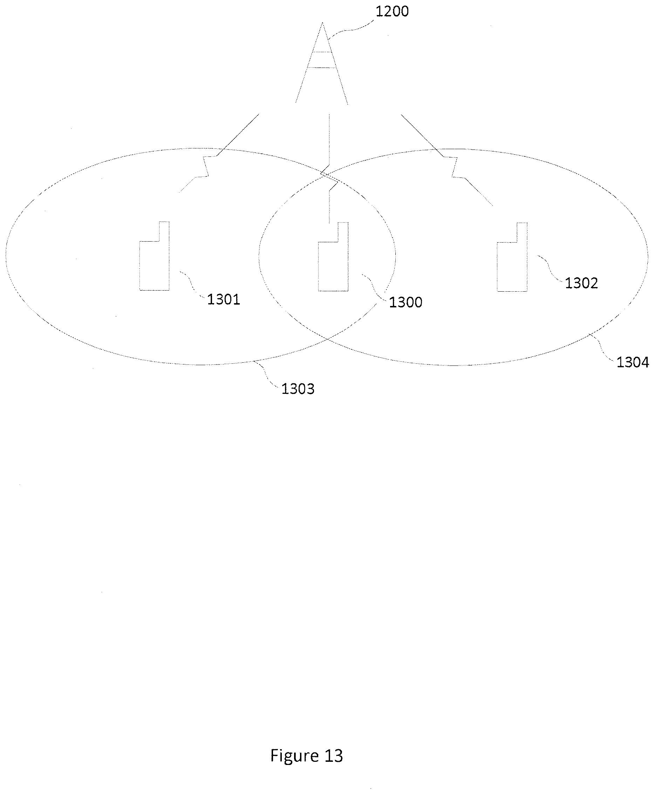

Figure 13 shows a schematic diagram of a mobile device 1300 in a position in which it may be able to receive signals from a base station 1200 (part of the cellular network shown in Figure 12), and also from two aggregators 1301 and 1302. The coverage of aggregators 1301 and 1302 is shown as 1303 and 1304, and may typically be a radius of up to 200 - 300m. Aggregators 1301 and 1302 may be activated and providing aggregator services, or may have been activated to provide a beacon function as noted above.

A range of processes can be utilised to determine the location of mobile device 1300 depending on the set of signals the device can receive.

In a first example, the mobile device 1300 is connected to base station 1200 and receives signals from both aggregators 1301 and 1302. The location of mobile device 1300 can thus be calculated utilising a triangulation technique based on knowledge that the mobile device is within range of the two aggregators 1301 and 1302, and the base station 1200. LTE Timing Advance (TA) information for the connection to the base station 1200 may be utilised to improve the accuracy of the calculation. TA provides an indication of the distance between the base station and mobile device based on the transit times for radio signals. The TA value can provide an accuracy of approximately +/- 39m, and therefore can locate a mobile device within an arc region around a base station with a width of approximately 78m.

The location system 1209 may triangulate the location by receiving an indication from mobile device 1300 that it received signals from the two aggregators 1301 and 1302, and based on information from OSS 1208 of the connection to base station 1200 and TA information. As explained above, location system 1209 calculates the location of aggregators 1301 and 1302 using conventional techniques, and is notified of the base station 1200 location, or has that data stored. The aggregators 1301 and 1302 may have been already active, or may have been activated as beacons.

In a second example, the mobile device 1300 only receives signals from aggregators 1301 and 1302. In this case the location system 1209 receives an indication from the mobile device 1300 of the aggregator signals it receives and the location is calculated as within the overlap of the aggregator coverage areas.

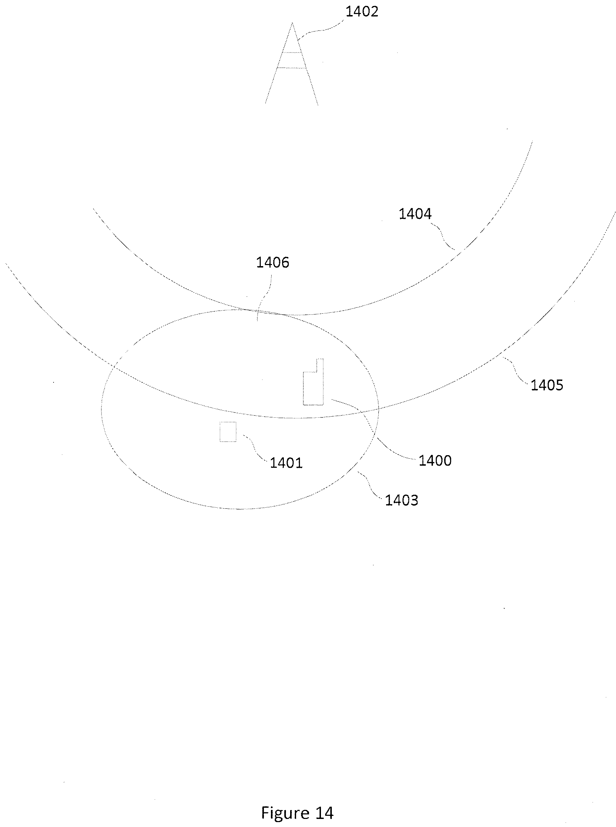

In a third example, shown in Figure 14, a mobile device 1400 is connected to base station 1402 and can receive signals from one aggregator 1401. In this situation TA information from the base station 1402 can be utilised to calculate the mobile station is within the region between arc 1404 and arc 1505 (with a radio of approximately 78m between arc 1404 and arc 1505). This information can be combined with knowledge that the mobile device is within range 1403 of aggregator 1401, to calculate that the mobile device 1400 is within the area 1406.

In summary location system 1209 can receive location information from a variety of sources, including elements of a macro cellular network, aggregator devices, and mobile devices. Dependent on the available sources of information the location system applies an appropriate location calculation algorithm to determine the location of a mobile device. The location system may interact with an aggregator controller to instruct a plurality of aggregators to activate to provide a beacon function to improve the accuracy of the location calculation.

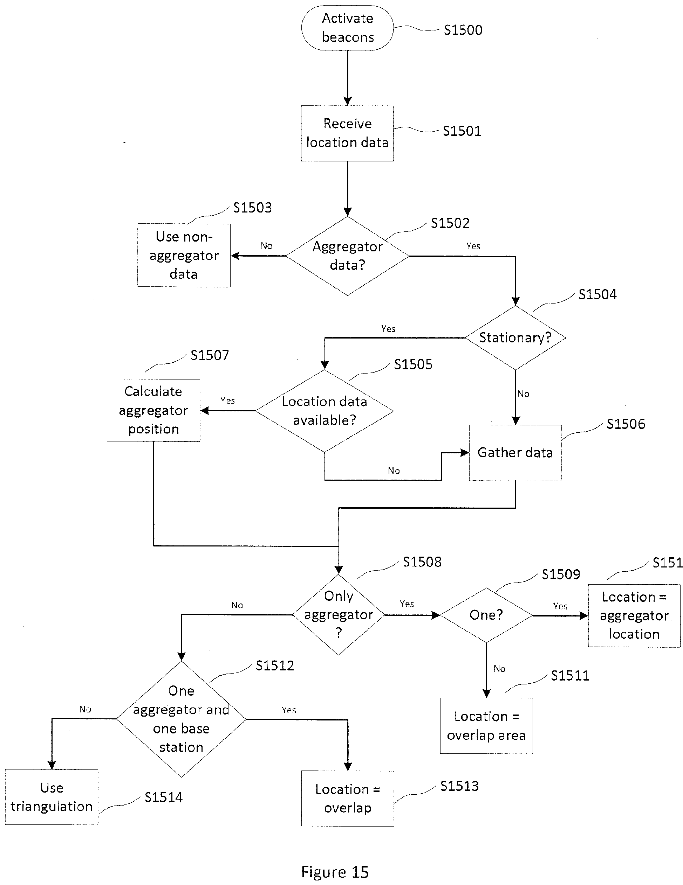

Figure 15 shows a flow chart of a method of determining mobile device location.

At operation S1500 aggregator controller 1207 instructs a set of aggregators to activate to provide a set of beacons. The aggregator controller may instruct all aggregators under its control to activate, or a subset selected, for example, based on location. At operation S1501 location system 1209 receives location data from the macro cellular network 1201, the aggregator controller 1207, and OSS 1208. For example, the location system may receive an indication of the aggregators from which signals were detected by mobile devices and data on connections to a macro network (for example cell site and TA information). The location data may be transmitted to location system 1209 autonomously, for example periodically, or may be requested by that location system 1209. Furthermore the activation of aggregators and gathering of data may be coordinated by aggregator controller 1207 and location system 1209.

After operation S1501 the steps are performed for each mobile device for which a position is desired. The process may be performed in parallel for each device, or sequentially.

Operation S1502 determines if the location system 1209 has received any data indicating the mobile device has received signals from an aggregator. If no such data has been received, at operation S1503 the location system uses conventional location techniques to attempt to locate the mobile device, for example data from base stations of a macro cellular network or GNSS data.

If data relating to signals from aggregators is received, at operation S1504 it is verified whether any indication is received that the aggregators from which signals were received are stationary or mobile. This mobility status may be stored at the aggregator controller 1107, or may be calculated based on previous location data. If the aggregator is indicated as stationary the process moves to operation S1505, and if the aggregator is indicated as mobile (or as recently being mobile) the process moves to operation S1506. The location system may be configured to default to either operation S1505 or S1506 if no indication is available as to whether the aggregator is mobile or not.

As explained above, mobility status may be an indication of "stationary" or "not stationary", or may be more granular.

If data has been received relating to multiple aggregators the result of operation S1504 may be different for different aggregators and accordingly the method may follow a different path for each aggregator, each path of which comes back together at operation S1508.

At operation S1505 it is checked whether stored is available for the location of the aggregator device. For example, as explained above, actual location, cell location, GNSS, or RF pattern matching data may have been stored. Since the aggregator is indicated as stationary that data should still be relevant and accurate and hence can be used in the position calculation system. The existing data is utilised to calculate the position of the aggregators concerned at operation S1507.

If no stored data is available at operation S1505, or it is detected that the aggregator is mobile, the process proceeds to operation S1506. At operation S1506 location data is gathered for the aggregators concerned, for example GNSS, Timing Advance, cell location, or RF pattern matching data may be gathered and utilised to calculate the position of each aggregator.

Operation S1508 checks with only data relating to aggregators has been received. If so, at operation S1509 the number of aggregators providing data is assessed and at operations S1510 and S1511 the mobile device's location is calculated.

If at operation S1509 data relating to only one aggregator has been received then at operation S1510 the mobile device's position is calculated as the location of that aggregator. The margin of error in the location is equal to the radius of the coverage of that aggregator. If data relating to more than one aggregator is received, then at operation S1511 the location is determined as the overlap of the coverage of the aggregators. The accuracy is defined by the size of that overlap, and will decrease as the number of aggregators relating to which data is received increases.

If at operation S1512 data is received from one base station of a macro cellular network to which the mobile device is connected and only one aggregator, operation S1513 calculates the location as the overlap between the range indicated by the Timing Advance information, and the area of coverage of the aggregator.

If at operation S1512 data from multiple base stations and/or aggregators is received, then operation S1514 calculates the position using triangulation techniques based on the available data.

The method of Figure 15 therefore enables the calculation of a mobile device's location using a flexible process which can accommodate different combinations of available data.

The operations of the method of Figure 15 may be performed in different orders, or certain operations omitted, dependent on the system requirements or prior knowledge of the data available. For example, if it is known in a certain system that no data on aggregator mobility is available, the method may proceed directly from operation S1502 to operation S1505.

The steps of the method may be performed in any appropriate computing system. In a particular example, the computer system is positioned in the core network as described in relation to Figure 12. However, that computing system may be positioned elsewhere provided the relevant interfaces are available. The functional elements shown in Figure 12 are defined for convenience of description, and the relevant functions may be grouped differently depending on implementation preferences. For example, the location system 1209 may be combined within OSS 1208 and be provided with an interface to aggregator controller 1207.

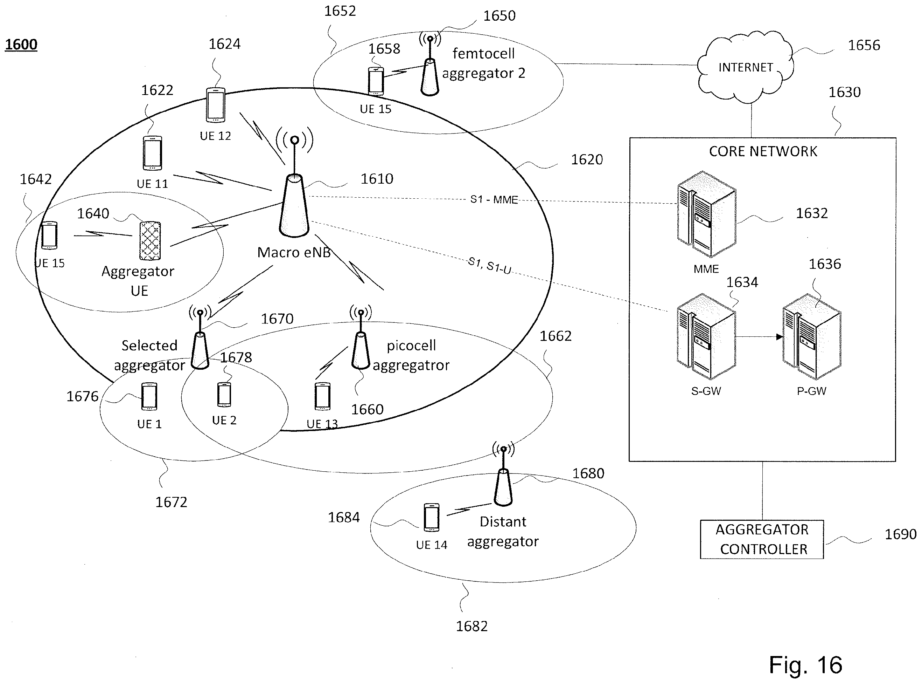

Figure 16 schematically illustrates a radio access network in which a number of different types of communication devices are dynamically assigned as aggregators in a single macrocell. The radio access network system 1600 comprises a macro eNB 1610 having a corresponding macrocell 1620 representing a coverage area within which UEs 1622, 1624 can camp-on to the macro eNB 1610 to perform wireless communication with other UEs via a core network 1630. The macro eNB 1610 provides a backhaul link up to the core network 1630 via an S1-MME interface 1632 for control data and an S1-U interface 1634 for user data. These two interfaces 1632, 1634 are bidirectional, but the backhaul link comprises only the direction from the macro eNB 1610 to the core network 1630. The backhaul link transports signals from the macro eNB 1610 back into a point in the network where intelligence (e.g. quality of service and service provisioning) can be used to process the classes of traffic and the data. In the example of Figure 16, the macro eNB belongs to an LTE radio access technology and the core network 1630 corresponds to the LTE Evolved Packet Core. The core network 1630 comprises an MME 1632 for processing control data and an S-GW 1634 and P-GW 1636 for processing user data.

In the Figure 16 arrangement all of the aggregators 1640, 1660, 1670 and 1680 currently have active connections with corresponding UEs for which they are providing a link to the Macro eNB 1610, which is serving as a donor eNB by providing a backhaul link for traffic in all cells corresponding to the active aggregators 1640, 1660, 1670 and 1680 to the core network 1630. However, not all aggregators in a given geographical area need to be active at the same time. Instead, sets of aggregators can be selectively activated depending upon current radio communication conditions and the number of active UEs currently requiring communication in the coverage area. An initial configuration of active aggregators may be a default active set or alternatively one or more aggregators may be activated by the aggregator controller as an initial configuration depending upon a number of measurements being performed to determine an appropriate initial configuration or based upon stored network data relating to, for example, recent network traffic in or close to the coverage area and/or recent radio environment conditions such as noise and interference levels. The set of active aggregator devices can be reconfigured either periodically or in response to a detected network condition such as movement of a currently active nomadic aggregator away from the coverage area or switching off or power-failure of a currently active aggregator.

An aggregator controller 1690 is provided to control switching on and off of the communications devices capable of being activated as aggregators. The aggregator controller 1690 is coupled to the core network 1630, but is not an integral part of the core network 1630 in this embodiment. The aggregation controller 1690 may control aggregators corresponding to more than one core network. The core network 1630 will typically be controlled exclusively by a given network operator. In alternative embodiments the aggregation controller 1690 may be located in the macrocell 1620, close to a geographical location of the core network 1630 or in a different macrocell (not shown). The architecture of embodiments may implement the aggregator controller in a number of alternative ways and there is no requirement for the aggregator controller 1690 to communicate through the core network.

The radio access network system 1600 comprises a number of network nodes having the capability of being assigned as aggregators subject to prevailing radio conditions as described earlier in this specification. These network nodes include: an aggregator UE 1640 having a corresponding UE small cell 1642; a femtocell aggregator 1650 (HeNB) having a corresponding femtocell 1652; a picocell eNB 1660 having a corresponding picocell 1662; and a selected aggregator 1670 having an associated small cell 1672. The selected aggregator 1670 has been selected as being in a location such that it is suitable for activation based on current radio conditions and network traffic. The selected aggregator 1678is in the process of being configure by the aggregator controller but has not yet been activated to communicate with a pair of UEs 1676, 1678, which are located within range of the selected aggregator 1670 but on the edge of the macrocell 1620 where connectivity with the macro eNB 1610 is poor.

Also illustrated in Figure 16 is a "distant" aggregator eNB 1680 located outside the macrocell 1620 but having a current (variable) location in a neighbouring cell such that it has the potential to interfere with communications of the macro eNB 1610. The aggregator 1680 is denoted "distant" because it is located in a different macrocell from the macro eNB 1610 although it is geographically relatively close to the selected aggregator 1670. The aggregator UE 1640, the picocell aggregator 1660 and the selected aggregator all use the backhaul link of the macro eNB provided via the S1 interfaces 1632, 1634. By way of contrast, the femtocell aggregator 1650 uses an internet 1656 backhaul and has no need to connect to the core network 1630 via the macro eNB 1610 despite being located close to the radio coverage area corresponding to the macrocell 1620.

The picocell aggregator 1660 serves as an eNB to a UE 1664 located on the boundary of the macrocell 1620, but within a good coverage region of the picocell 1662. An uplink communication from the UE 1664 uses a radio access technology of the picocell aggregator 1660 to send information up to it and then the picocell aggregator 1660 relays that information to the core network 1630 via an uplink LTE connection from the picocell aggregator 1660 to the macro eNB 1610 and then using the backhaul link of the macro eNB 1610. The picocell aggregator differs from a known relay in that its functionality as an aggregator is dynamically configured to be on or off by the aggregator controller 1690 and its geographical location need not be fixed, but may change.

The LTE macro eNB 1610 is configured to use LTE-FDD. In particular, Orthogonal Frequency Division Multiple Access (OFDMA) is used on the downlink and Single Carrier Frequency Division Multiple access (SC-FDMA) is used on the uplink. The macro eNB 1610 is configured to use only the LTE-FDD bandwidth and not the LTE-TDD bandwidth. The radio access technologies and bandwidth used for macro layer communication between the macro eNB 1610 and the selected aggregator 1670 may differ from the carrier(s) used to connect the UES 1676, 1678 to the selected aggregator 1670. Thus, for example, the aggregator controller 1690 can configure the selected aggregator 1670 to communicate with the UEs 1676, 1678 via LTE-TDD connections. Any of the active aggregators 1640, 1650, 1660, 1670 and 1680 can communicate with the one or more UEs in their respective coverage areas in a variety of different ways. For example, LTE-FDD can be used possibly but in a different bandwidth relative to the connection between the aggregator and the corresponding macro eNB. Alternatively, a different wireless access technology such as a 2G or 3G wireless access technology or unlicensed spectrum can be used for the connection between the aggregator and the UE. As a further alterative LTE-TDD could be used for the aggregator-UE connection. The appropriateness of the use of any of these alternative wireless access technologies for the connection is subject to checks for potentially interfering signals in the vicinity.

Connections between the UEs (e.g. 1622, 1624) and the core network 1630 can have different qualities of service based upon a user subscription type and can correspond to different connection types such as a voice connection or a data connection. Data connections associated with, for example, Internet browsing, may have different quality-of-service requirements for data types such as video/audio streaming for which continuity of service is important and more perceptible to the user than for webpage download connections for which discontinuities in transmission are likely to have less impact on a user's perception of data throughput. When considering reconfiguration of aggregators currently serving actively connected UEs to be inactive the impact of the reconfiguration upon the user will depend, to some extent upon the connection type and the data type. Thus the likelihood of success of a handover of an actively connected UE to the macro eNB 1610 or to another active aggregator that remains active following the reconfiguration is optionally taken into account as a cost and/or benefit parameter during calculation of the reconfiguration metric.

Figure 17A schematically illustrates a wireless communication network in a multi-cell network having a plurality of candidate aggregator devices and shows a first activated aggregator set corresponding to two adjacent macrocells. The arrangement comprises a first macro eNB 1710 having a corresponding first macrocell coverage area 1712 and a second macro eNB 1750 having a corresponding macrocell coverage area 1752.

At the instant in time represented by the Figure 17A configuration, a total of six different UEs 1722, 1724, 1726, 1728, 1730, 1732 are located within the first macrocell 1712, with a seventh UE 1732 located just outside the first macrocell boundary 1712. The UE 1730 is located close to the cell edge and has been activated as an aggregator UE to provide a backhaul link to both the UE 1732, which is located on the periphery of the first macrocell 1712 and to the UE 1734 that is located just outside the boundary of the first macrocell 1712. The active aggregator UE 1730 has a corresponding aggregator cell 1740 (i.e. coverage area), which allows radio coverage of the first macro eNB 1710 to effectively extend beyond the first macrocell 1712. Note that since the UE 1730 is a mobile device, it is one example of a mobile/nomadic aggregator so its location can change, potentially rapidly, depending upon movement of the user. A different type of non-static aggregator is a nomadic aggregator 1736, also in the coverage area 1712 of the first macrocell. The nomadic aggregator device 1736 currently has a non-zero velocity and has been designated as inactive by the aggregator controller 1790 for this reason. Otherwise, due to the non-zero velocity of the nomadic aggregator candidate 1736, the aggregator layer configuration including it as an activated aggregator would be temporally unstable.

The first macrocell 1712 has a first picocell aggregator device 1742 having a corresponding aggregator cell 1744 whose coverage extends to overlap with the edge of the second macrocell 1752. The first picocell aggregator device 1742 is currently activated by the aggregator controller 1790 and provides a backhaul link for the UE 1726 located in the first macrocell 1712 and also for two further UEs 1762 and 1764 located on a boundary between the first and second macrocells 1712 and 1752. As well as the two static aggregator devices comprising the UE 1730 and the picocell aggregator 1742, the first macrocell 1712 is currently donor to the nomadic candidate aggregator 1736 provided in a moving vehicle.

The second macrocell 1752 currently has a total of five UEs within coverage of the second macro eNB 1750. Three of the five UES 1770, 1772 and 1766 are located in good coverage of the second macrocell 1752 whereas the remaining two UEs 1764 and 1768 are in poor radio coverage because they are located in the boundary region of the second macrocell 1752. However, the UE 1764 is currently camped on to the first picocell aggregator 1742 located in the coverage area 1712 the first macrocell. This leaves only the UE 1768 with poor radio network coverage.

An aggregator controller 1790 monitors radio network conditions and performs selection of candidate aggregators for activation and de-activation. The selection criteria for activation and de-activation of aggregators 1730, 1742, 1780 can draw upon historical data regarding macrocell metrics, interference levels, data throughput etc. accessed via a database of historical data 1792. Thus in the arrangement of Figure 17A, the aggregator controller has currently configured the subset of candidate aggregators comprising the aggregator UE 1730 and the first picocell aggregator 1742 to be active aggregators. The complementary subset of candidate aggregators comprising the nomadic aggregator 1736 and the second picocell aggregator 1780 are currently inactive, but can be activated at any time by the aggregator controller, for example, in response to a sudden change in network conditions such as an influx of UEs moving into the two macrocells 1712, 1752 and requiring active connections or a power failure or predicted imminent power failure of one of the currently active aggregators 1730 1742.

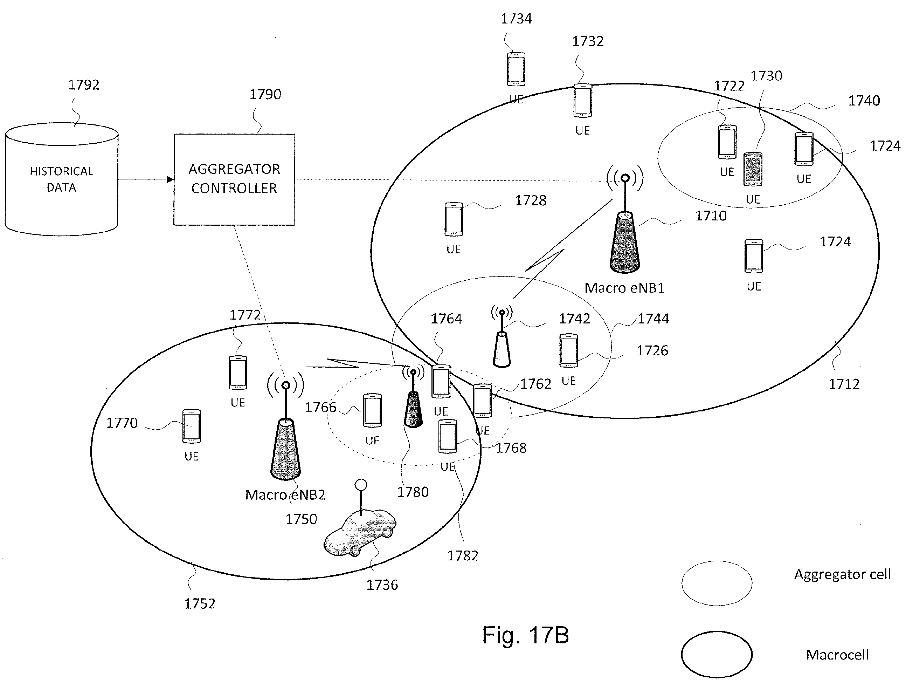

Figure 17B schematically illustrates a second, different, activated aggregator set corresponding to two the adjacent macrocells of Figure 17A but captured at a later instant in time. Due to differences in the radio environment and changes in position of UEs and mobile/nomadic aggregators, the aggregator controller 1790 has reconfigured the full set of candidate aggregator devices comprising the aggregator UE 1730, the first picocell aggregator 1742, the second picocell aggregator 1780 and the nomadic aggregator 1736, such that a different subset of the aggregators is active relative to the Figure 17A configuration. In particular, in the arrangement of Figure 17B, the first picocell aggregator 1742 has changed status from active to inactive and the second picocell aggregator 1780 has changed status from inactive to active. The UE aggregator 1730 remains active, but having changed position within the first macrocell 1712, now serves a different pair of UES 1722, 1724 relative to the two UEs for which it provided a backhaul link in the Figure 17A arrangement. The nomadic aggregator 1736 has moved from the first macrocell 1712 to the second macrocell 1752 and is now in a static position. Due to the static position of the nomadic aggregator 1736, the aggregator controller 1790 is more likely to include it as part of an activated aggregator set because its static position is more likely to result in a stable aggregator configuration. By way of contrast, when the nomadic aggregator 1736 had a non-zero velocity in the arrangement of Figure 17A, if it was activated, it would be unlikely to include the same UEs in its coverage area for a sufficient period of time to result in the benefit of improved coverage provided by the nomadic macrocell outweighing the signalling cost. In particular the signalling would require signalling to hand-over UEs to the activated nomadic aggregator 1736 to improve the radio conditions for those UEs relative to that provided by the first macro eNB 1710 and further signalling to hand them over again when the nomadic aggregator 1736 moved out of range, with each handover incurring the risk of a dropped call.

The changed geographical distribution of the five UEs 1762, 1762, 1766, 1766, 1768 between the Figure 17A arrangement and the Figure 17B arrangement resulted in the aggregator controller 1790 having calculated that it is more efficient to activate the second picocell aggregator 1780 and to deactivate the first picocell aggregator 1742 in the aggregator layer configuration. This is because the UEs 1766, 1768, which were previously on the boundary of the predicted coverage cell 1782 of the second picocell aggregator have moved well within the second picocell aggregator coverage cell 1782.

The aggregator controller 1790 continuously assesses the radio environment conditions and hardware conditions of the two macrocells 1712, 1752 providing the backhaul to the aggregator layer, and when these conditions change in a certain way, the aggregator controller 1790 determines algorithmically whether a change in the currently implemented aggregator configuration is needed to ensure that an optimum configuration or at least a most favourable one of an evaluated number of alternative configurations is selected. The at least one estimated cost of the reconfiguration can comprise network costs, which are all of the costs associated with the process of activation and de-activation of the aggregators. This network cost may include, for example, a cost of radio signalling traffic, a cost of core network re-configuration, a per use software licence costs, etc.) It will be appreciated that, there may be too many possible alternative configurations to realistically evaluate all of the configurations. Accordingly, the aggregator controller 1790 can be configured to search certain "well behaved" solution spaces to find an acceptable configuration rather than exhaustively evaluating every possible alternative configuration. Moreover, the controller will assess whether a configuration change is worth it or not, taking into account a potential cost of the changes needed to reconfigure the aggregators involved in the assessment, and the potential benefits in performance for the customers being served by those aggregator devices.

There can be situations in the network where the reconfiguration is always desirable, such as if suddenly all of the aggregators involved in the assessment by the aggregator controller 1790 experience battery problems, or they change their location(s) dramatically, changing drastically the hardware conditions and having consequential effects upon the radio environment due to noise/interference and so on.

Therefore when a number of triggering conditions for the assessment of a potential aggregator layer reconfiguration are met, the aggregator controller 1790 evaluates the options by implementing a cost-benefit approach in which at least one estimated cost of changing from a current activated aggregator set to a different activated aggregator set is offset against at least one benefit of implementing the change. The costs are offset against the benefits via a weighted sum and a change in configuration is triggered if the net benefit exceeds a threshold value. The costs and benefits can be assessed at the level of a single aggregator or macrocell or across a more extensive coverage area as required.

Non-limiting examples of aspects that can be taken into account in terms of cost of reconfiguration to the different set of activated aggregators from the current set of aggregators are as follows:
i. The number of aggregators to be reconfigured to effect the change from the current aggregator set to the most beneficial different aggregator set. The sending of commands by the aggregator controller 1790 to the aggregators to implement certain actions such as deactivating a currently active aggregator or activating a currently inactive aggregator will have impact on the amount of signalling needed in the backhaul and the costs associated with the increased signalling should be offset against the potential benefits of the reconfiguration.
ii. The number of UEs in an idle state in the coverage area mediated by the aggregator controller 1790 that will be forced to reselect an eNB or different active aggregator to camp onto and a number of UEs in a connected state that will be forced to do handover upon triggering of the reconfiguration when, for example, the active aggregator via which their backhaul link with the LTE macrolayer is provided is suddenly deactivated. This assessment will be tricky, as on the one hand the number of UEs in an idle state camped-on in the aggregator coverage cell is not known by either the aggregator or the aggregator controller 1790. This is because while idle, no dedicated channels are assigned to the UEs so it is not known how many UEs in idle mode are camped on in a given cell. On the other hand, UE behaviour in terms of connected/idle state is continuously changing so accounting for the current number of connected UEs is not an accurate way to assess this cost. Therefore one approach could be to try to estimate the number of UEs camped on the aggregator by counting the number of different users that have been connected during a period of time signalled to the aggregator by the aggregator controller. This kind of measurement gives the aggregator controller 1790 an estimation of both the number of idle and connected users under the influence of the aggregators 1730, 1736, 1742, 1780 that the aggregator controller 1790 is deciding to reconfigure or not.
iii. The number of UEs in a connected state that will be likely to be dropped because of a fail during handover and will be forced to reconnect. The aggregator controller 1790 has historical information on the number or proportion of UEs that may fail when forced to handover to another aggregator due to a reconfiguration (failure rate known based on experience), so this fail coefficient can be factored in when taking the decision. Handovers of active UEs from a currently active aggregator as a result of deactivation of the serving aggregator in some embodiments will be a handover to a macro eNB. In other embodiments handover from one aggregator (being deactivated) to another aggregator without an eNB serving as an intermediary for the handover can be performed.
iv. The type of service being used by the UEs connected to the currently active (pre-reconfiguration) aggregators. A potential reconfiguration while a UE is using data services will not imply the same risk as if the UE is using voice services, where a potential fail will cause a dropped call, heavily affecting the customer experience. Account can also be taken of the connection type such as 2G/3G/unlicensed or particular LTE bandwidth allocated.
v. The impact on the donor eNodeB that provides the backhaul link of an activated aggregator when changing conditions on the backhaul(s) they are providing, in terms of throughput requirements for the backhaul link, because the number of UEs being served by the aggregators in the scenario may change as a result of a selected reconfiguration, therefore affecting the usage of those aggregators.
vi. Potential interference to other aggregators or to the macro layer serving their backhaul links as a result of activating an aggregator as a part of a reconfiguration. The aggregator controller 1790 will have information on the coverage in the area (both by the aggregators and the macro network) so changes in the interference conditions can be assessed.
vii. Stability of the aggregators (e.g. temporal stability of aggregator properties such as power supply and location). The stability assessment can include static as well as nomadic/mobile aggregators. The aggregator controller 1790 has information on several aspects of the aggregators involved in the decision, such as the battery level or the profile in terms of fixed location / nomadic profile (in-car use case). Therefore the aggregator controller 1790 can assess if the aggregator is likely to go below the battery threshold to be a candidate to be used in the short term (so it knows this will trigger another reconfiguration action too soon). Or it can know in advance about potential changes in location in the short term (based on historical data) that will make the current reconfiguration not worth it, as another one will be needed shortly. The temporal stability of a given reconfiguration is not limited to battery level, power profile and location but can take into account different factors instead of or as well as those mentioned above. Data from the database of historical data 1792 can be used to provide an estimate of the stability of a given reconfiguration or a part of that reconfiguration predicting how long it is likely to be before the aggregator controller 1790 needs to change the configuration again.
viii. The potential impact of the reconfiguration on the aggregator itself i.e. a nomadic aggregator such as aggregator 1736 would prefer that it is not being used unless absolutely necessary due to power consumption. So in this case it is about the cost the reconfiguration may have in terms of the resources in the aggregator layer (the battery in the nomadic aggregator 1736 is likely to be considered to be an especially valuable resource).

A number of example factors that can be taken into account in terms of benefits of a reconfiguration from the current active aggregator set to a different active aggregator set include, but are not limited to, the following:
a) Potential reduction in noise / interference levels (both affecting the UEs and the macro layer), improving the quality levels of the backhaul and the UE radio environment.
b) Potential improvement in backhaul capacity, perhaps freeing some radio resources in certain donor eNBs that may be struggling at some point to serve their current UE load including UEs camped on to any aggregators they are serving. A given eNB may be handling too many users (UEs) and the reconfiguration can have the benefit of distributing those users among other aggregators being served by different donor eNodeBs, therefore reducing the backhaul throughput requirements of the struggling eNB. This can be viewed as load balancing of the backhaul link requirements.
c) Potential throughput levels improvements on the customer side as a result of reconfiguring to a more beneficial set of active aggregators suitable for the current conditions can improve the overall data experience of users of UEs in the coverage area of the aggregator controller 1790. Furthermore, an increase in throughput levels is likely to result in an increase of the amount of data being exchanged as users of the UEs notice a better network performance situation and take advantage of that, responding with an increased uptake of network services.
d) Potential coverage increase. When reconfiguring the aggregators as required by triggering a transition from the current active aggregator configuration to the most beneficial of the evaluated different active aggregator configurations, the coverage level can be increased, reaching areas that were not covered before. This increases the opportunity of serving more users, both increasing the customer/traffic numbers (maybe in these new areas there were customers that were not able to connect to the network before) and the perception of the service itself, perhaps improving the operator/brand public image.

It will be appreciated that of the example costs and benefits listed above, depending upon the particular choice of reconfiguration selection algorithm, different cost factors and different benefit factors can be included in a definition of the reconfiguration metric. The relative importance of individual costs and benefits can be reflected by the magnitudes of the weights applied to those terms in the weighted sum. Although in some embodiments the weights could provide an equal magnitude weighting of cost terms and benefit terms in the sum, with costs having an opposite sign to benefits.

With regard to assigning weights in the weighted sum of the reconfiguration metric a number of alternative approaches can be adopted in different embodiments. As one example, a monetary approach could be taken, assigning to each factor a cost or value/benefit (negative cost), for example, in Euros or cents. For example, an extra megabyte (MB) of data carried by a given network may have a value of 0.01 cents whereas a single dropped handover may cost 0.10 cents when using voice or 0.05 cents when using data. As another example, providing new coverage to an area may mean 0.15 cents of benefit per square metre.

The aggregator controller 1790 is arranged to quantify and combine these items (and any other meaningful ones) and their weights to produce an estimate in the form of a "reconfiguration metric" of the trade-off between benefit in terms of performance metric increase, and cost in terms of required changes to the existing configuration. If the evaluation of a given reconfiguration results in the weighted sum to be negative overall, indicating that the cost is bigger than the benefit, then the reconfiguration is unfavourable and thus not triggered. Conversely, if the potential benefit is bigger than the cost that it implies, then the aggregator controller 1790 will take the necessary actions to instruct the aggregators to make the changes required to set up the new currently most favourable (or "optimal") identified configuration of the configurations evaluated by the algorithm. The reconfiguration may be triggered depending upon the net benefit being higher than a predetermined threshold value.

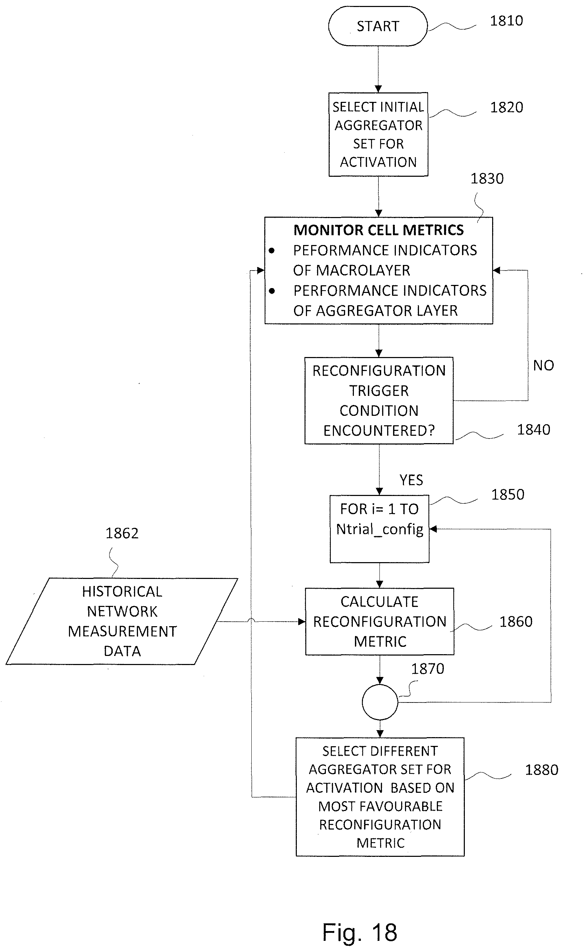

Figure 18 is a flowchart that schematically illustrates a method of reconfiguration of a currently active aggregator set depending upon a reconfiguration metric taking account of net benefit associated with any changes in the configuration.

The process begins at the start process element 1810 and proceeds to selection of an initial aggregator set for activation at process element 1820. In some embodiments, although a number of candidate aggregator devices are available, none are activated at the initial at the initial stage. In other embodiments and initial aggregator set for activation is selected in accordance with the process of Figures 6A and 6B. For example, one or more cell metrics are evaluated for UE's in terms of the radio performance of UEs when connected to the macro eNB relative to when they are connected to an activated aggregator device. Furthermore, aggregators could be activated in the initial configuration depending upon location of several static users at a cell edge under the potential coverage of one or more static aggregators or when there are small cells with unused capacity in an area close to some static users having aggregators located in the coverage area. The initial aggregator set for activation at process element 1820 is assumed in this example to be one of the favourably ranked "evaluation groups" as described above with reference Figure 6B.

At process element 1830 the initial aggregator set has already been activated and the aggregation layer is performing alongside the macrolayer of the wireless radio communication network. However, it will be appreciated that radio network conditions such as the positions of UE's, the traffic density, the backhaul usage, the interference and noise conditions and the power levels of the aggregators are dynamic rather than static so that the aggregator evaluation group selected for initial activation process element 1820 may become inappropriate in terms of efficiency and performance in view of the dynamically changing network conditions. Accordingly, at process element 183, the aggregator controller performs monitoring of cell metrics of both the macrocell and the aggregator layer to evaluate at least one cost and at least one benefit associated with a reconfiguration metric that is used to determine whether or not to change from the current activated aggregator set to a different, more-favourable (or even optimum) active aggregator set. Examples of cost parameters and benefit parameters used in computation of the reconfiguration metric is described above with reference to Figure 17B. The performance indicators of the macrolayer monitored at process element 1830 of Figure 18 can include cell coverage areas of macrocell eNBs, backhaul throughputs of eNBs and noise/interference levels in the macrocell's. The macrolayer performance indicators can also include a real-time traffic map and details on resource consumption of the schedulers in terms of allocated physical resource blocks.

Performance indicators of the aggregator layer monitored at process element 1830 include a mobility status of the aggregators such as if UEs corresponding to aggregator candidates currently have non-zero velocity and whether nomadic aggregators are currently in motion. The status of the power supply of aggregators including a battery level for the nomadic aggregators, an indication of aggregator type with some types of aggregator being more favourable for deployment than others can also be taken into account in assessing the options for reconfiguration of the aggregators. Other examples of aggregator performance indicators include historical call drop rates associated with deactivation of aggregators and the consequential handover of active calls, stored aggregator cell coverage regions and interference conditions and the temporal stability of individual aggregators including, for example mobility status and available power resources. The performance indicators of both the macrolayer and the aggregator layer are likely to include indications of numbers of UE's currently located at or close to the respective cell boundaries and signal quality measurements indicating the quality of service that UEs served by corresponding aggregators or corresponding eNB's are currently experiencing and/or have recently experienced.

Next, at process element 1840, a decision is made with regard to if any reconfiguration trigger condition has been encountered in the wireless communication network. The reconfiguration trigger condition could be as simple as a periodic reconfiguration trigger condition (i.e. a fixed time having elapsed since a previous configuration) or could be dependent upon results of monitoring the cell metrics such as a detection at process element 1830 that current power levels of one or more currently active aggregators are rapidly diminishing or that the stability of one or more aggregators is such that reconfiguration would be advantageous. Another reconfiguration trigger would be sudden changes in location of one or more active aggregators.

If it is decided at process element 1840 that no reconfiguration should be triggered then the process returns to process element 1830 where the monitoring of the macrolayer and aggregator layer cell metrics is performed on an ongoing basis.

If, on the other hand, at process element 1840, a reconfiguration trigger condition is in fact encountered, then the process proceeds to process element 1850 where a loop is performed over a number of trial configurations in which different groups of active aggregator devices are tested to assess if a net performance benefit is to be gained by adopting the trial configurations as the new active aggregator set. This is equivalent in principle to assessing the performance of an evaluation group of aggregators as described above in reference to Figure 6B, but in this embodiment the net benefit in performances is not assessed relative to having the aggregator switched off, but instead the relative merits of the current active aggregator configuration are assessed against one or more proposed different active aggregator configurations. It will be appreciated that the algorithm could perform an exhaustive search over all possible different active aggregator configurations, Ntotal, but this is likely to be time-consuming in view of the number of permutations available.

Accordingly, in some embodiments a search is performed over "well-behaved" solution spaces that give a good solution for a more beneficial an active aggregator configuration without searching the whole solution space. Thus, as shown in process element 1850, the loop over the number of trial evaluation aggregator configurations is a loop from 1 to "Ntrial_config" configurations, where Ntrial_config < Ntotal. The loop ends at process element 1870 and within the loop at process element 1860 a processor in the aggregator controller calculates the reconfiguration metric using at least one cost parameter and at least one benefit parameter corresponding to the particular active aggregator set of the plurality of trial configurations being evaluated.

For at least some cost parameters and benefit parameters, a set of historical network measurement data 1862 available to the aggregator controller is be fed into the calculation. The reconfiguration metric is calculated using a weighted sum comprising one or more of the various cost parameters and one or more of the various benefit parameters as described above. For consistency the same formula can be used for all of the Ntrial_config configurations to enable selection of the trial configuration having the greatest calculated net benefit. Embodiments are not limited to using a single equation for the reconfiguration metric, but instead can take into account two or more differently composed reconfiguration metrics to arrive at a calculated decision for a most favourable aggregator configuration.

At process element 1880, assuming that at least one of the trial aggregator configurations has proved to be more beneficial than the current configuration then the corresponding aggregator set is selected for activation and reconfiguration is triggered. However, it should be noted that thereafter the process returns to process element 1830 whereupon cell metrics of the macrolayer and aggregator layer are monitored pending a subsequent reconfiguration trigger condition being encountered.

It will be appreciated that the net cost benefit analysis for calculating the reconfiguration metric of Figure 18 could be performed for activation or deactivation of a single aggregator and is not limited to switching between a current set comprising a plurality of aggregators and a different set comprising a different plurality of aggregators. For example, the calculation of the reconfiguration metric could be triggered by the imminent power failure of a single currently active aggregator device in order to establish the most favourable neighbour aggregator device(s) or eNB(s) appropriate for load balancing in view of decommissioning of that currently active but imminently inactive aggregator.

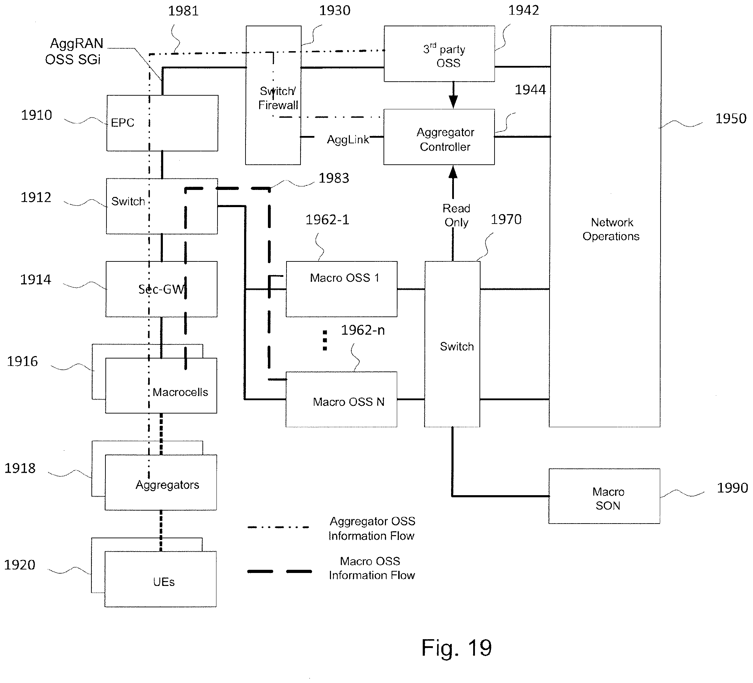

Figure 19 schematically illustrates a physical architecture for a wireless communication network according to the present technique comprising both an aggregator layer and a macrocell layer. The architecture comprises: an evolved packet core (EPC) 1910; a switch 1912; and a secure gateway 1914; which are all network nodes. The system further comprises components of the radio access network comprising: a set of macro cells 1916; a set of aggregators 1918; and a set of UE's 1920. A switch/firewall 1930 connects the EPC 1910 to each of: (i) a generic third-party operations subsystem (OSS) 1942 which provides a link to a network operations module 1950; and (ii) a dedicated aggregator controller 1944. The third party OSS 1942 is a generic operations subsystem that can be adapted to provide the specific functionality required to control the aggregators according to the present technique whereas the aggregator controller 1944 is an alternative way of controlling the aggregators in a more dedicated hardware/software functionality.

A series of macrocell operations subsystems (OSS) is 1962-1 to 1962-n is provided and macro OSS information flow passes between the macro cells 1916, the secure gateway 1914, the switch 1912 and the plurality of macro OSSs, 1962-1 to 1962-n. At the network operations level, a macrocell self-organising network (SON) 1990 controls operations of the macro OSSs via a switch 1970, which also provides the aggregator controller 1944 with read-only access to the macrocell OSS. Thus, for example, the aggregator controller 1944 can obtain macro OSS data in order to perform the cost-benefit analysis to calculate the reconfiguration metric comprising the weighted sum of costs and benefits according to the present technique.

In the arrangement of Figure 19, the aggregator OSS information flow passes in a channel 1981 as shown which connects the aggregators 1918, the macro cells 1916, the secure gateway 1914, the switch 1912, the evolved packet core 1910, the switch/firewall 1930, the third-party OSS 1942 and the aggregator controller 1944. The aggregator OSS information flow does not extend to the set of UE's 1920. The macro OSS information flow is shown in a connection 1983 that connects the macrocells 1916, the secure gateway 1914, the switch 1912 and the set of macro OSSs 1962-1 to 1962-n. Note that in this example physical architecture, there is no interface between the aggregator controller 1944 and the existing Macro SON 1990 and the 3^{rd} party aggregator OSS 1942 appears on a dedicated EPC 1910 "SGi" interface. An SGi interface is used in LTE to connect a packet data network gateway (P-GW) of the EPC with an outside world of servers and PDNs. The LTE P-GW performs UE IP address allocation and packet filtering.

It will be appreciated that whilst various aspects and embodiments of the present invention have heretofore been described, the scope of the present invention is not limited to the particular arrangements set out herein and instead extends to encompass all arrangements, and modifications and alterations thereto, which fall within the scope of the appended claims.

For example, whilst embodiments described in the foregoing description refer to LTE, it should be noted that the aggregator architecture described may equally be deployed in telecommunications networks based on other cellular telecommunication architectures, for example 2G, 3G, LTE-Advanced (3GPP Release 10 onwards), future architectures (e.g., 5G), as well as WD-CDMA and WiMAX. The aggregator architecture is agnostic to the specific type of RAN used. In other words, the aggregator controller/controller entity is adapted to work with any RAN and/or combinations of RANs. This is, for example, one of the reasons why in certain embodiments the aggregator controller/controller entity is independent of the RAN. Similar observations apply for the communication device for providing an aggregator facility.

In addition, it will be apparent to the reader that the term radio access technology (RAT) may extend to include related technologies such as conventional WiFi technologies (i.e. compliant with the IEEE 802.11 family of standards) and/or VLC technologies, where the context requires or allows this.

Furthermore, while the above description describes the aggregation layer as providing a bridge to the cellular network for communication devices that are at the edges of cells, the skilled reader will appreciate that dynamic coverage "blackspots" may arise elsewhere within radio coverage regions (for example, due to equipment malfunction, unusual usage patterns, and/or features of the natural or built environment).

The reader will furthermore appreciate that aspects of the foregoing disclosure apply equally and without loss of generality to aggregators (and candidate aggregators) that are fixed in a single location as to aggregators (and candidate aggregators) that are in an alternative mobility state: such as nomadic or mobile.

It will also be well understood by persons of ordinary skill in the art that whilst the described embodiments implement certain functionality by means of software, that functionality could equally be implemented solely in hardware (for example by means of one or more ASICs (application specific integrated circuit)) or indeed by a mix of hardware and software. As such, the scope of the present invention should not be interpreted as being limited only to being implemented in software. The computer program may be provided on a transitory or non-transitory medium such as a transmission medium or a storage medium.

Where functional units have been described as circuitry or modules, the circuitry/module may be general purpose processor circuitry configured by program code to perform specified processing functions. The circuitry may also be configured by modification to the processing hardware. Configuration of the circuitry to perform a specified function may be entirely in hardware, entirely in software or using a combination of hardware modification and software execution. Program instructions may be used to configure logic gates of general purpose or special-purpose processor circuitry to perform a processing function.

## Claims

1. An aggregator controller apparatus (102, 202, 300, 1103, 1207, 1690, 1790, 1944) for controlling aggregator devices (104, 204, 904, 1004, 1102, 1201, 1301, 1302, 1401, 1640, 1660, 1670, 1680, 1730, 1736, 1742, 1780, 1918) in a wireless communication network comprising a core network (1206, 1630) and a radio access cellular network, an aggregator device (104, 204, 904, 1004, 1102, 1201, 1301, 1302, 1401, 1640, 1730, 1736, 1918) corresponding to a communication device of the radio access cellular network arranged to provide, upon activation by the aggregator controller, at least one other communication device (910', 1010' 1101, 1203, 1732, 1734, 1920) with a backhaul link (1202) to the core network, the aggregator controller apparatus comprising:
a hardware processor having:
aggregator configuration circuitry (332) arranged to select from a plurality of candidate aggregator devices, a current aggregator set comprising at least one aggregator device and configuring the at least one aggregator device for activation based upon radio communication conditions; and **characterized by** the aggregator controller apparatus further comprising:
reconfiguration evaluation circuitry (334) arranged to trigger reconfiguration of the current aggregator set to select a different aggregator set for activation depending upon a reconfiguration metric comprising a weighted sum in which at least one estimated cost of reconfiguration from the current aggregator set to the different aggregator set is balanced against at least one estimated benefit of the reconfiguration,
wherein the controller is arranged to determine the at least one estimated benefit by modelling network performance for a network with the different aggregator set activated and comparing that performance to a current measured network performance information.

2. An aggregation controller apparatus according to claim 1, wherein the at least one estimated cost and/or the at least one estimated benefit comprise at least one of macrolayer performance indicators and aggregator layer performance indicators.

3. An aggregation controller apparatus according to any one of the preceding claims, wherein the reconfiguration metric is calculated using stored historical data of the wireless communication network.

4. An aggregation controller apparatus according to any one of the preceding claims, wherein the reconfiguration metric comprises an estimate of a change to a geographical coverage area of the radio access cellular network as a result of a change from the current aggregator set to the different aggregator set wherein increased coverage represents an estimated benefit parameter.

5. An aggregation controller apparatus according to any one of the preceding claims, wherein the reconfiguration metric comprises a prediction of the likelihood of dropped calls as the at least one estimated cost parameter as a result of reconfiguring from the current aggregator set to the different aggregator set.

6. An aggregation controller apparatus according to any one of the preceding claims, wherein the at least one estimated cost comprises an estimated number of idle UEs camped on to a given aggregator device of the current aggregator set that would have to reselect a different aggregator device or base station upon reconfiguration or an estimated number of active UEs connected to a given aggregator device of the current aggregator set for which handover to a base station or different aggregator from the different aggregator set would be required as a result of the reconfiguration.

7. An aggregation controller apparatus according to any one of the preceding claims, wherein the at least one estimated cost comprises an estimate of a number of active UEs currently connected to an aggregator of the current aggregator set and likely to drop a respective active connection as a result of a reconfiguration to the different aggregator set.

8. An aggregator controller apparatus according to any one of the preceding claims, wherein the at least one estimated cost comprises a network cost of activating an aggregator of the different aggregator set which is not a member of the current aggregator set, or de-activating an aggregator in the current aggregator set which is not a member of the different aggregator set.

9. An aggregator controller apparatus according to any one of the preceding claims, wherein the reconfiguration metric comprises an estimate of a change in data throughput per unit time of an activated one of the plurality of candidate aggregator devices or a change in the overall data throughput in a given coverage area as a consequence of changing from the current aggregator set to the different aggregator set.

10. An aggregator controller apparatus according to any one of the preceding claims, wherein one of the plurality of candidate aggregator devices comprises a nomadic or mobile aggregator device (1730, 1736) and wherein the reconfiguration metric comprises an indication of a predicted temporal stability of the reconfiguration to the different aggregator set.

11. An aggregator controller apparatus according to claim 10, wherein the predicted temporal stability takes account of at least one of a battery level of the nomadic aggregator and a mobility status of the nomadic aggregator.

12. An aggregator controller apparatus according to any one of the preceding claims wherein evaluation of the reconfiguration metric comprises an estimate of a change of backhaul link throughput or backhaul link load level in the different aggregator set relative to the current aggregator set.

13. An aggregator controller apparatus according to any one of the preceding claims, wherein the reconfiguration metric ranks the plurality of candidate aggregator devices into two or more aggregator types having different weightings representing different priorities for utilisation as activated aggregator devices in the reconfiguration.

14. A computer readable medium comprising instructions comprising:
code for selecting from a plurality of candidate aggregator devices (104, 204, 904, 1004, 1102, 1201, 1301, 1302, 1401, 1640, 1660, 1670, 1680, 1730, 1736, 1742, 1780, 1918), a current aggregator set comprising at least one aggregator device and configuring the at least one aggregator device for activation based upon radio communication conditions; **characterized by** comprising code for triggering reconfiguration of the current aggregator set to select a different aggregator set for activation depending upon a reconfiguration metric comprising a weighted sum in which at least one estimated cost of reconfiguration from the current aggregator set to the different aggregator set is balanced against at least one estimated benefit of the reconfiguration, wherein the at least one estimated benefit is determined by modelling network performance for a network with the different aggregator set activated and comparing that performance to a current measured network performance information.

15. A method for controlling aggregator devices (104, 204, 904, 1004, 1102, 1201, 1301, 1302, 1401, 1640, 1660, 1670, 1680, 1730, 1736, 1742, 1780, 1918) in a wireless communication network comprising a core network (1206, 1630) and a radio access cellular network, an aggregator device (104, 204, 904, 1004, 1102, 1201, 1301, 1302, 1401, 1640, 1730, 1736, 1918) corresponding to a communication device of the radio access cellular network arranged to provide, upon activation by an aggregator controller (102, 202, 300, 1103, 1207, 1690, 1790, 1944), at least one other communication device (910', 1010' 1101, 1203, 1732, 1734, 1920) with a backhaul link (1202) to the core network, the method comprising: selecting (1820) from a plurality of candidate aggregator devices, a current aggregator set comprising at least one aggregator device and configuring the at least one aggregator device for activation based upon radio communication conditions; and **characterized by** the method triggering reconfiguration (1880) of the current aggregator set to select a different aggregator set for activation depending upon a reconfiguration metric comprising a weighted sum in which at least one estimated cost of reconfiguration from the current aggregator set to the different aggregator set is balanced against at least one estimated benefit of the reconfiguration, wherein the at least one estimated benefit is determined by modelling network performance for a network with the different aggregator set activated and comparing that performance to a current measured network performance information.

## Patentansprüche

1. Eine Aggregatorsteuervorrichtung (102, 202, 300, 1103, 1207, 1690, 1790, 1944) zur Steuerung von Aggregatorvorrichtungen (104, 204, 904, 1004, 1102, 1201, 1301, 1302, 1401, 1640, 1660, 1670, 1680, 1730, 1736, 1742, 1780, 1918) in einem Drahtloskommunikationsnetz umfassend ein Kernnetz (1206, 1630) und ein Funkzugangsnetz, wobei eine einer Kommunikationsvorrichtung des Funkzugangsnetzes entsprechende Aggregatorvorrichtung (104, 204, 904, 1004, 1102, 1201, 1301, 1302, 1401, 1640, 1730, 1736, 1918), so ausgelegt ist, dass sie infolge der Aktivierung durch die Aggregatorsteuervorrichtung zumindest einer anderen Kommunikationsvorrichtung (910', 1010' 1101, 1203, 1732, 1734, 1920) eine Rückstreckenverbindung (1202) zu dem Kernnetz bereitstellt, wobei die Aggregatorsteuervorrichtung Folgendes umfasst:
eine Hardwareverarbeitungseinheit mit:
einer Aggregatorkonfigurationsschaltung (332), so ausgelegt, dass sie einen aktuellen Aggregatorsatz umfassend zumindest eine Aggregatorvorrichtung aus einer Vielzahl von möglichen Aggregatorvorrichtungen auswählt und die zumindest eine Aggregatorvorrichtung zur Aktivierung basierend auf Funkkommunikationsbedingungen konfiguriert; und **dadurch gekennzeichnet, dass** die Aggregatorsteuervorrichtung weiter Folgendes umfasst:
eine Neukonfigurationsauswertungsschaltung (334), so ausgelegt, dass sie die Neukonfiguration des aktuellen Aggregatorsatzes auslöst, damit ein anderer Aggregatorsatz zur Aktivierung ausgewählt wird, abhängig von einer Metrik umfassend eine gewichtete Summe, in der zumindest ein geschätzter Aufwand für die Neukonfiguration von dem aktuellen Aggregatorsatz zu dem anderen Aggregatorsatz zumindest einem geschätzten Nutzen der Neukonfiguration gegenübergestellt wird,
wobei die Steuervorrichtung so ausgelegt ist, dass sie den zumindest einen geschätzten Nutzen bestimmt, indem sie die Netzleistung eines Netzes mit dem aktivierten anderen Aggregatorsatz modelliert und diese Leistung mit aktuellen gemessenen Netzleistungsinformationen vergleicht.

2. Eine Aggregatorsteuervorrichtung nach Anspruch 1, wobei der zumindest eine geschätzte Aufwand und/oder der zumindest eine geschätzte Nutzen zumindest Makroschichtleistungsindikatoren und/oder Aggregatorschichtleistungsindikatoren umfasst.

3. Eine Aggregatorsteuervorrichtung nach einem der vorhergehenden Ansprüche, wobei die Neukonfigurationsmetrik anhand gespeicherter historischer Daten des Drahtloskommunikationsnetzes berechnet wird.

4. Eine Aggregatorsteuervorrichtung nach einem der vorhergehenden Ansprüche, wobei die Neukonfigurationsmetrik eine Schätzung einer Änderung eines geografischen Versorgungsgebietes des zellularen Funkzugangsnetzes infolge einer Änderung von dem aktuellen Aggregatorsatz in den anderen Aggregatorsatz umfasst, wobei eine größere Abdeckung einen Parameter für den geschätzten Nutzen darstellt.

5. Eine Aggregatorsteuervorrichtung nach einem der vorhergehenden Ansprüche, wobei die Neukonfigurationsmetrik eine Vorhersage der Wahrscheinlichkeit abgebrochener Anrufe als Parameter für den zumindest einen geschätzten Aufwand infolge der Neukonfiguration von dem aktuellen Aggregatorsatz zu dem anderen Aggregatorsatz umfasst.

6. Eine Aggregatorsteuervorrichtung nach einem der vorhergehenden Ansprüche, wobei der zumindest eine geschätzte Aufwand eine geschätzte Anzahl von auf einer bestimmten Aggregatorvorrichtung des aktuellen Aggregatorsatzes kampierenden inaktiven Benutzergeräten umfasst, die infolge der Neukonfiguration eine andere Aggregatorvorrichtung oder Basisstation auswählen müssten, oder eine geschätzte Anzahl von mit einer bestimmten Aggregatorvorrichtung des aktuellen Aggregatorsatzes verbundenen aktiven Benutzergeräten, für die infolge der Neukonfiguration ein Handover zu einer Basisstation oder einem anderen Aggregator aus dem anderen Aggregatorsatz erforderlich wäre.

7. Eine Aggregatorsteuervorrichtung nach einem der vorhergehenden Ansprüche, wobei der zumindest eine geschätzte Aufwand eine Schätzung einer Anzahl aktiver Benutzergeräte umfasst, die aktuell mit einem Aggregator des aktuellen Aggregatorsatzes verbunden sind und die infolge einer Neukonfiguration zu dem anderen Aggregatorsatz voraussichtlich eine jeweilige aktive Verbindung abbrechen.

8. Eine Aggregatorsteuervorrichtung nach einem der vorhergehenden Ansprüche, wobei der zumindest eine geschätzte Aufwand einen Netzaufwand für die Aktivierung eines Aggregators des anderen Aggregatorsatzes umfasst, der nicht Teil des aktuellen Aggregatorsatzes ist, oder die Deaktivierung eines Aggregators in dem aktuellen Aggregatorsatz, der nicht Teil des anderen Aggregatorsatzes ist.

9. Eine Aggregatorsteuervorrichtung nach einem der vorhergehenden Ansprüche, wobei die Neukonfigurationsmetrik eine Schätzung einer Änderung des Datendurchsatzes pro Zeiteinheit eines aktivierten einen der Vielzahl möglicher Aggregatorvorrichtungen oder einer Änderung des Datengesamtdurchsatzes in einem bestimmten Versorgungsgebiet infolge der Änderung von dem aktuellen Aggregatorsatz in den anderen Aggregatorsatz umfasst.

10. Eine Aggregatorsteuervorrichtung nach einem der vorhergehenden Ansprüche, wobei eine der Vielzahl möglicher Aggregatorvorrichtungen eine nomadische oder mobile Aggregatorvorrichtung (1730, 1736) umfasst und wobei die Neukonfigurationsmetrik eine Angabe einer vorhergesagten zeitlichen Stabilität der Neukonfiguration zu dem anderen Aggregatorsatz umfasst.

11. Eine Aggregatorsteuervorrichtung nach Anspruch 10, wobei die vorhergesagte zeitliche Stabilität zumindest den Akkustand des nomadischen Aggregators und/oder einen Mobilitätsstatus des nomadischen Aggregators berücksichtigt.

12. Eine Aggregatorsteuervorrichtung nach einem der vorhergehenden Ansprüche, wobei die Auswertung der Neukonfigurationsmetrik eine Schätzung einer Änderung des Rückstreckenverbindungsdurchsatzes oder des Rückstreckenverbindungslastpegels in dem anderen Aggregatorsatz im Vergleich zu dem aktuellen Aggregatorsatz umfasst.

13. Eine Aggregatorsteuervorrichtung nach einem der vorhergehenden Ansprüche, wobei die Neukonfigurationsmetrik die Vielzahl möglicher Aggregatorvorrichtungen in zwei oder mehrere Aggregatortypen mit unterschiedlichen Gewichtungen einstuft, die unterschiedliche Prioritäten für die Nutzung als aktivierte Aggregatorvorrichtungen in der Neukonfiguration darstellen.

14. Ein computerlesbares Medium umfassend Anweisungen umfassend:
Code zum Auswählen, aus einer Vielzahl von möglichen Aggregatorvorrichtungen (104, 204, 904, 1004, 1102, 1201, 1301, 1302, 1401, 1640, 1660, 1670, 1680, 1730, 1736, 1742, 1780, 1918), eines aktuellen Aggregatorsatzes umfassend zumindest eine Aggregatorvorrichtung und zum Konfigurieren der zumindest einen Aggregatorvorrichtung zur Aktivierung basierend auf Funkkommunikationsbedingungen; **dadurch gekennzeichnet, dass** es Code zum Auslösen der Neukonfiguration des aktuellen Aggregatorsatzes umfasst, damit ein anderer Aggregatorsatz zur Aktivierung ausgewählt wird, abhängig von einer Neukonfigurationsmetrik umfassend eine gewichtete Summe, in der zumindest ein geschätzter Aufwand für die Neukonfiguration von dem aktuellen Aggregatorsatz zu dem anderen Aggregatorsatz zumindest einem geschätzten Nutzen der Neukonfiguration gegenübergestellt wird, wobei der zumindest eine geschätzte Nutzen bestimmt wird, indem die Netzleistung eines Netzes mit dem aktivierten anderen Aggregatorsatz modelliert und diese Leistung mit einer aktuellen gemessenen Netzleistungsinformation verglichen wird.

15. Ein Verfahren zur Steuerung von Aggregatorvorrichtungen (104, 204, 904, 1004, 1102, 1201, 1301, 1302, 1401, 1640, 1660, 1670, 1680, 1730, 1736, 1742, 1780, 1918) in einem Drahtloskommunikationsnetz umfassend ein Kernnetz (1206, 1630) und ein zellulares Funkzugangsnetz, wobei eine einer Kommunikationsvorrichtung des zellularen Funkzugangsnetzes entsprechende Aggregatorvorrichtung (104, 204, 904, 1004, 1102, 1201, 1301, 1302, 1401, 1640, 1730, 1736, 1918) so ausgelegt ist, dass sie infolge der Aktivierung durch eine Aggregatorsteuervorrichtung (102, 202, 300, 1103, 1207, 1690, 1790, 1944) zumindest einer anderen Kommunikationsvorrichtung (910', 1010' 1101, 1203, 1732, 1734, 1920) eine Rückstreckenverbindung (1202) mit dem Kernnetz bereitstellt, wobei das Verfahren Folgendes umfasst: Auswählen (1820), aus einer Vielzahl von möglichen Aggregatorvorrichtungen, eines aktuellen Aggregatorsatzes umfassend zumindest eine Aggregatorvorrichtung und Konfigurieren der zumindest einen Aggregatorvorrichtung zur Aktivierung basierend auf Funkkommunikationsbedingungen; und **dadurch gekennzeichnet, dass** das Verfahren eine Neukonfiguration (1880) des aktuellen Aggregatorsatzes auslöst, damit ein anderer Aggregatorsatz zur Aktivierung ausgewählt wird, abhängig von einer Neukonfigurationsmetrik umfassend eine gewichtete Summe, in der zumindest ein geschätzter Aufwand für die Neukonfiguration von dem aktuellen Aggregatorsatz zu dem anderen Aggregatorsatz zumindest einem geschätzten Nutzen der Neukonfiguration gegenübergestellt wird, wobei der zumindest eine geschätzte Nutzen bestimmt wird, indem die Netzleistung eines Netzes mit dem aktivierten anderen Aggregatorsatz modelliert und diese Leistung mit einer aktuellen gemessenen Netzleistungsinformation verglichen wird.

## Revendications

1. Un appareil de commande d'agrégateur (102, 202, 300, 1103, 1207, 1690, 1790, 1944) destiné à la commande de dispositifs agrégateurs (104, 204, 904, 1004, 1102, 1201, 1301, 1302, 1401, 1640, 1660, 1670, 1680, 1730, 1736, 1742, 1780, 1918) dans un réseau de communication sans fil comprenant un réseau central (1206, 1630) et un réseau cellulaire d'accès radio, un dispositif agrégateur (104, 204, 904, 1004, 1102, 1201, 1301, 1302, 1401, 1640, 1730, 1736, 1918) correspondant à un dispositif de communication du réseau cellulaire d'accès radio agencé de façon à fournir, après activation par le dispositif de commande d'agrégateur, à au moins un autre dispositif de communication (910', 1010' 1101, 1203, 1732, 1734, 1920) une liaison terrestre (1202) vers le réseau central, l'appareil de commande d'agrégateur comprenant :
un processeur matériel possédant :
un ensemble de circuits de configuration d'agrégateur (332) agencé de façon à sélectionner, à partir d'une pluralité de dispositifs agrégateurs candidats, un ensemble d'agrégateurs actuel comprenant au moins un dispositif agrégateur, et la configuration du au moins un dispositif agrégateur à des fins d'activation en fonction de conditions de communication radio, et **caractérisé en ce que** l'appareil de commande d'agrégateur comprend en outre :
un ensemble de circuits d'évaluation de reconfiguration (334) agencé de façon à déclencher une reconfiguration de l'ensemble d'agrégateurs actuel de façon à sélectionner un ensemble d'agrégateurs différent à des fins d'activation en fonction d'une mesure de reconfiguration comprenant une somme pondérée dans laquelle au moins un coût de reconfiguration estimé de l'ensemble d'agrégateurs actuel vers l'ensemble d'agrégateurs différent est contrebalancé vis-à-vis d'au moins un bénéfice estimé de la reconfiguration,
où le dispositif de commande est agencé de façon à déterminer le au moins un bénéfice estimé par la modélisation d'une performance de réseau pour un réseau avec l'ensemble d'agrégateurs différent activé, et la comparaison de cette performance à des informations de performance de réseau mesurée actuelles.

2. Un appareil de commande d'agrégation selon la Revendication 1, où le au moins un coût estimé et/ou le au moins un bénéfice estimé comprennent au moins des indicateurs parmi des indicateurs de performance de macrocouche et des indicateurs de performance de couche d'agrégateur.

3. Un appareil de commande d'agrégation selon l'une quelconque des Revendications précédentes, où la mesure de reconfiguration est calculée au moyen de données d'historique conservées en mémoire du réseau de communication sans fil.

4. Un appareil de commande d'agrégation selon l'une quelconque des Revendications précédentes, où la mesure de reconfiguration comprend une estimation d'une modification à une zone de couverture géographique du réseau cellulaire d'accès radio en conséquence d'une modification de l'ensemble d'agrégateurs actuel vers l'ensemble d'agrégateurs différent où une couverture accrue représente un paramètre de bénéfice estimé.

5. Un appareil de commande d'agrégation selon l'une quelconque des Revendications précédentes, où la mesure de reconfiguration comprend une prédiction de la probabilité d'appels abandonnés sous la forme du au moins un paramètre de coût estimé en conséquence de la reconfiguration de l'ensemble d'agrégateurs actuel vers l'ensemble d'agrégateurs différent.

6. Un appareil de commande d'agrégation selon l'une quelconque des Revendications précédentes, où le au moins un coût estimé comprend un nombre estimé d'UE en veille occupant un dispositif agrégateur donné de l'ensemble d'agrégateurs actuel qui devrait resélectionner un dispositif agrégateur différent ou une station de base après reconfiguration ou un nombre estimé d'UE actifs raccordés à un dispositif agrégateur donné de l'ensemble d'agrégateurs actuel pour lesquels un transfert vers une station de base ou un agrégateur différent de l'ensemble d'agrégateurs différent serait requis en conséquence de la reconfiguration.

7. Un appareil de commande d'agrégation selon l'une quelconque des Revendications précédentes, où le au moins un coût estimé comprend une estimation d'un nombre d'UE actifs actuellement raccordés à un agrégateur de l'ensemble d'agrégateurs actuel et susceptibles d'abandonner une connexion active respective en conséquence d'une reconfiguration vers l'ensemble d'agrégateurs différent.

8. Un appareil de commande d'agrégateur selon l'une quelconque des Revendications précédentes, où le au moins un coût estimé comprend un coût de réseau d'activation d'un agrégateur de l'ensemble d'agrégateurs différent qui n'est pas un membre de l'ensemble d'agrégateurs actuel, ou la désactivation d'un agrégateur dans l'ensemble d'agrégateurs actuel qui n'est pas un membre de l'ensemble d'agrégateurs différent.

9. Un appareil de commande d'agrégateur selon l'une quelconque des Revendications précédentes, où la mesure de reconfiguration comprend une estimation d'une modification dans un débit de données par unité de temps d'un dispositif activé de la pluralité de dispositifs agrégateurs candidats ou une modification dans le débit de données global dans une zone de couverture donnée en conséquence d'une modification de l'ensemble d'agrégateurs actuel vers l'ensemble d'agrégateurs différent.

10. Un appareil de commande d'agrégateur selon l'une quelconque des Revendications précédentes, où un dispositif de la pluralité de dispositifs agrégateurs candidats comprend un dispositif agrégateur mobile ou nomade (1730, 1736) et où la mesure de reconfiguration comprend une indication d'une stabilité temporelle prédite de la reconfiguration vers l'ensemble d'agrégateurs différent.

11. Un appareil de commande d'agrégateur selon la Revendication 10, où la stabilité temporelle prédite prend en compte au moins un élément parmi un niveau de batterie de l'agrégateur nomade et un état de mobilité de l'agrégateur nomade.

12. Un appareil de commande d'agrégateur selon l'une quelconque des Revendications précédentes où l'évaluation de la mesure de reconfiguration comprend une estimation d'une modification d'un débit de liaison terrestre ou d'un niveau de charge de liaison terrestre dans l'ensemble d'agrégateurs différent par rapport à l'ensemble d'agrégateurs actuel.

13. Un appareil de commande d'agrégateur selon l'une quelconque des Revendications précédentes, où la mesure de reconfiguration classe la pluralité de dispositifs agrégateurs candidats en deux ou plus types d'agrégateurs possédant des poids différents représentant des priorités différentes pour une utilisation en tant que dispositifs agrégateurs activés dans la reconfiguration.

14. Un support lisible par ordinateur contenant des instructions comprenant :
du code destiné à la sélection, à partir d'une pluralité de dispositifs agrégateurs candidats (104, 204, 904, 1004, 1102, 1201, 1301, 1302, 1401, 1640, 1660, 1670, 1680, 1730, 1736, 1742, 1780, 1918), d'un ensemble d'agrégateurs actuel comprenant au moins un dispositif agrégateur, et la configuration du au moins un dispositif agrégateur à des fins d'activation en fonction de conditions de communication radio, **caractérisé en ce qu'**il comprend du code destiné au déclenchement d'une reconfiguration de l'ensemble d'agrégateurs actuel de façon à sélectionner un ensemble d'agrégateurs différent à des fins d'activation en fonction d'une mesure de reconfiguration comprenant une somme pondérée dans laquelle au moins un coût de reconfiguration estimé de l'ensemble d'agrégateurs actuel vers l'ensemble d'agrégateurs différent est contrebalancé vis-à-vis d'au moins un bénéfice estimé de la reconfiguration, où le au moins un bénéfice estimé est déterminé par la modélisation d'une performance de réseau pour un réseau avec l'ensemble d'agrégateurs différent activé, et la comparaison de cette performance à des informations de performance de réseau mesurée actuelles.

15. Un procédé de commande de dispositifs agrégateurs (104, 204, 904, 1004, 1102, 1201, 1301, 1302, 1401, 1640, 1660, 1670, 1680, 1730, 1736, 1742, 1780, 1918) dans un réseau de communication sans fil comprenant un réseau central (1206, 1630) et un réseau cellulaire d'accès radio, un dispositif agrégateur (104, 204, 904, 1004, 1102, 1201, 1301, 1302, 1401, 1640, 1730, 1736, 1918) correspondant à un dispositif de communication du réseau cellulaire d'accès radio agencé de façon à fournir, après activation par un dispositif de commande d'agrégateur (102, 202, 300, 1103, 1207, 1690, 1790, 1944), à au moins un autre dispositif de communication (910', 1010' 1101, 1203, 1732, 1734, 1920) une liaison terrestre (1202) vers le réseau central, le procédé comprenant : la sélection (1820), à partir d'une pluralité de dispositifs agrégateurs candidats, d'un ensemble d'agrégateurs actuel comprenant au moins un dispositif agrégateur et la configuration du au moins un dispositif agrégateur à des fins d'activation en fonction de conditions de communication radio, et **caractérisé par** le procédé suivant : le déclenchement d'une reconfiguration (1880) de l'ensemble d'agrégateurs actuel de façon à sélectionner un ensemble d'agrégateurs différent à des fins d'activation en fonction d'une mesure de reconfiguration comprenant une somme pondérée dans laquelle au moins un coût de reconfiguration estimé de l'ensemble d'agrégateurs actuel vers l'ensemble d'agrégateurs différent est contrebalancé vis-à-vis d'au moins un bénéfice estimé de la reconfiguration, où le au moins un bénéfice estimé est déterminé par la modélisation d'une performance de réseau pour un réseau avec l'ensemble d'agrégateurs différent activé, et la comparaison de cette performance à des informations de performance de réseau mesurée actuelles.
